# EUROPEAN PATENT APPLICATION

(11) **EP 4 582 254 A1**
(43) Date of publication of application: **09.07.2025**
(21) Application number: 23860219.7
(22) Date of filing: 25.08.2023
(51) Int. Cl.: B32B 27/32, B32B 7/022, B32B 7/06, B65D 33/00, B65D 65/40

(54) **MULTILAYER BODY, PACKAGING BAG AND METHOD FOR PRODUCING PACKAGING BAG**

(30) Priority: 29.08.2022 JP 2022136260; 29.08.2022 JP 2022136263; 07.10.2022 JP 2022162455; 30.03.2023 JP 2023056360; 09.08.2023 JP 2023129895; 09.08.2023 JP 2023129913; 09.08.2023 JP 2023129821
(71) Applicant: Dai Nippon Printing Co., Ltd., Tokyo 162-8001 (JP)
(72) Inventor: TAKASUGI, Yuya, Tokyo 162-8001 (JP); KASHIHARA, Tomomi, Tokyo 162-8001 (JP); TANAKA, Yuya, Tokyo 162-8001 (JP); OTSUKA, Koji, Tokyo 162-8001 (JP); MURAYAMA, Tatsuhiko, Tokyo 162-8001 (JP); HIGASHINO, Misato, Tokyo 162-8001 (JP)
(74) Representative: Müller-Boré & Partner Patentanwälte PartG mbB
(86) International application number: PCT/JP2023/030748
(87) International publication number: WO 2024/048457

(57) **Abstract**

A laminate including at least a first resin layer and a second resin layer, wherein the first resin layer is provided so as to be separable from the second resin layer, and the separation strength between the first resin layer and the second resin layer is 1.0 N/15 mm width or less and satisfies the following requirements (1) and/or (2):
(1) the second resin layer is a sealant layer including at least a polyethylene layer with a density of 0.909 g/cm³ or less, and the polyethylene layer in the second resin layer is in contact with the first resin layer, and/or
(2) the second resin layer is a sealant layer containing a polyolefin as a main component and has a polyolefin content of 82% by mass or more based on a mass of the second resin layer.

## Description

### Cross-Reference to Related Applications

This application claims the benefit of priority from Japanese Patent Application Nos. 2022-136260 and 2022-136263, filed on Aug. 29, 2022, Japanese Patent Application No. 2022-162455, filed on Oct. 7, 2022, Japanese Patent Application No. 2023-056360, filed on Mar. 30, 2023, and Japanese Patent Application Nos. 2023-129895, 2023-129913, and 2023-129821, filed on Aug. 9, 2023, the entire disclosures of which are incorporated herein by reference.

### Technical Field

The present disclosure relates to a laminate, a packaging bag, and a method for producing a packaging bag.

### Background Art

A semiconductor product is produced or used in a clean environment, such as a clean room with a high degree of cleanliness, because the quality of the product may be deteriorated when a foreign material, such as dust or dirt, adheres to the product. When an article is brought into such an environment, a package in which the article is stored in a bag made of a plastic film is often brought into a clean environment. Thus, high cleanliness is also required for a packaging bag for storing an article requiring a high degree of cleanliness, such as a semiconductor product.

A package has been produced as described below by using a double bag including at least an inner bag and an outer bag (for example, see Patent Literature 1). First, an article is placed inside the inner bag, and, after vacuum degassing, the opening of the inner bag is sealed. The inner bag is then placed inside the outer bag, and, after vacuum degassing, the opening of the outer bag is sealed. The article is packaged by such double packaging or, if necessary, triple packaging. When the article is used, the outer bag is opened in an anteroom of a clean room, and the clean inner bag is opened in the clean room to take out the article.

### Citation List

### Patent Literature

PTL 1: Japanese Unexamined Patent Application Publication No. 2012-126437

### Summary of Invention

### Technical Problem

When an article is packaged by double deaeration and packaging or triple deaeration and packaging, deaeration and packaging is performed multiple times. Thus, such article packaging sometimes does not have high work efficiency. Furthermore, to open the packaging bag, it may be troublesome to open the bag multiple times.

Thus, the present inventors have studied the production of a packaging bag using a laminate including a separable surface film. Separating a surface film from a packaging bag in an anteroom of a clean room enables a clean packaging bag to be brought into the clean room. However, the present inventors have found a new problem that interlayer lifting occurs in such a laminate and impairs the appearance.

Furthermore, in recent years, an approach to environmental issues, such as plastic marine pollution and global warming, has been emphasized. Thus, packaging materials and the like are required to have high recyclability. Furthermore, from the perspective of addressing environmental issues, a packaging bag with a low environmental load is desired.

An object of one aspect of the present disclosure is to provide a laminate suitable as a packaging material that can enclose an article to be used in a clean environment and is less likely to have interlayer lifting.

An object of one aspect of the present disclosure is to provide a laminate with high recyclability suitable as a packaging material that can enclose an article to be used in a clean environment.

An object of one aspect of the present disclosure is to provide a laminate with a low environmental load suitable as a packaging material that can enclose an article to be used in a clean environment.

### Solution to Problem

A laminate according to one aspect of the present disclosure includes at least a first resin layer and a second resin layer, wherein the first resin layer is provided so as to be separable from the second resin layer, the separation strength between the first resin layer and the second resin layer is 1.0 N/15 mm width or less as measured at a separation angle of 180 degrees and a test speed of 50 mm/min, and the laminate satisfies the following requirements (1) and/or (2):
(1) the second resin layer is a sealant layer including at least a polyethylene layer with a density of 0.909 g/cm³ or less, and the polyethylene layer in the second resin layer is in contact with the first resin layer, and/or
(2) the second resin layer is a sealant layer containing a polyolefin as a main component and has a polyolefin content of 82% by mass or more based on a mass of the second resin layer.

A laminate according to one aspect of the present disclosure includes at least a first resin layer and a second resin layer, wherein the first resin layer is provided so as to be separable from the second resin layer, the second resin layer is a sealant layer containing a polyolefin as a main component, and at least one resin layer selected from the first resin layer and the second resin layer contains at least a biomass-derived resin material.

### Advantageous Effects of Invention

One aspect of the present disclosure can provide a laminate suitable as a packaging material that can enclose an article to be used in a clean environment and is less likely to have interlayer lifting.

One aspect of the present disclosure can provide a laminate with high recyclability suitable as a packaging material that can enclose an article to be used in a clean environment.

One aspect of the present disclosure can provide a laminate with a low environmental load suitable as a packaging material that can enclose an article to be used in a clean environment.

### Brief Description of Drawings

[Fig. 1] Fig. 1 is a schematic cross-sectional view of a laminate according to an embodiment.
[Fig. 2] Fig. 2 is a schematic cross-sectional view of a laminate according to an embodiment.
[Fig. 3] Fig. 3 is a schematic cross-sectional view of a laminate according to an embodiment.
[Fig. 4] Fig. 4 is a schematic cross-sectional view of a laminate according to an embodiment.
[Fig. 5] Fig. 5 is a schematic cross-sectional view of a laminate according to an embodiment.
[Fig. 6] Fig. 6 is a schematic cross-sectional view of a packaging bag according to an embodiment and a related view thereof.
[Fig. 7] Fig. 7 is a front view of a packaging bag according to an embodiment.
[Fig. 8] Fig. 8 is a schematic view illustrating a half-cut line.
[Fig. 9] Fig. 9 is a front view illustrating the production of a packaging bag.
[Fig. 10] Fig. 10 is a schematic cross-sectional view of a laminate according to an embodiment.
[Fig. 11] Fig. 11 is a schematic cross-sectional view of a packaging bag according to an embodiment and a related view thereof.
[Fig. 12] Fig. 12 is a front view illustrating the production of a packaging bag.
[Fig. 13] Fig. 13 is an enlarged view of the vicinity of a corner portion in a front view of a packaging bag according to an embodiment.
[Fig. 14] Fig. 14 is an enlarged view of the vicinity of a corner portion in a front view of a packaging bag according to an embodiment.
[Fig. 15] Fig. 15 is a front view of a packaging bag according to an embodiment.
[Fig. 16] Fig. 16 is a front view of a packaging bag according to an embodiment.
[Fig. 17] Fig. 17 is a schematic cross-sectional view of a packaging bag according to an embodiment and a related view thereof.
[Fig. 18] Fig. 18 is a front view of a packaging bag according to an embodiment.

### Description of Embodiments

Embodiments of the present disclosure are described in detail below. The present disclosure can be implemented in many different forms and is not to be construed as limited to the description of the following embodiments. In the drawings, for the sake of clarity, the width, thickness, shape, and the like of each layer may be more schematic than those in the embodiments, and the drawings are only examples and do not limit the interpretation of the present disclosure. In the present description and drawings, the same reference numerals are given to the same elements as those already described with reference to the previous drawings, and detailed description thereof may be appropriately omitted.

In the present disclosure, when a plurality of upper limit candidates and a plurality of lower limit candidates are described for a certain parameter, the numerical range of the parameter may be configured by combining any one of the upper limit candidates and any one of the lower limit candidates. The parameter is, for example, a physical property, a component content, or a thickness of a layer. For example, an explanation is given to the phrase "The parameter B is preferably A1 or more, more preferably A2 or more, still more preferably A3 or more. The parameter B is preferably A4 or less, more preferably A5 or less, still more preferably A6 or less." In this example, the numerical range of the parameter B may be A1 or more and A4 or less, A1 or more and A5 or less, A1 or more and A6 or less, A2 or more and A4 or less, A2 or more and A5 or less, A2 or more and A6 or less, A3 or more and A4 or less, A3 or more and A5 or less, or A3 or more and A6 or less.

In the present description, components (for example, a polyolefin, such as polyethylene or polypropylene, an α-olefin, a resin material, such as a heteroatom-containing resin, and an additive agent) may be used alone or in combination.

The term "polyethylene", as used herein, refers to a polymer with an ethylene-derived constitutional unit content of more than 50% by mole among all the constitutional repeating units. The polymer preferably has an ethylene-derived constitutional unit content of 70% by mole or more, more preferably 80% by mole or more, still more preferably 90% by mole or more, particularly preferably 95% by mole or more. The content is measured by an NMR method.

In the present description, the polyethylene may be an ethylene homopolymer or a copolymer of ethylene and an ethylenically unsaturated monomer other than ethylene. The ethylenically unsaturated monomer other than ethylene is, for example, an α-olefin with 3 or more and 20 or less carbon atoms, such as propylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, or 6-methyl-1-heptene, a vinyl monomer, such as vinyl acetate or vinyl propionate, or a (meth)acrylate, such as methyl (meth)acrylate or ethyl (meth)acrylate.

In the present description, the polyethylene is, for example, a high-density polyethylene, a medium-density polyethylene, a low-density polyethylene, a linear low-density polyethylene, an ethylene-vinyl acetate copolymer, or an ethylene-(meth)acrylate copolymer.

In the present description, the polyethylene has the following density.

The high-density polyethylene preferably has a density of more than 0.945 g/cm³, preferably 0.965 g/cm³ or less, for example, more than 0.945 g/cm³ and 0.965 g/cm³ or less. The medium-density polyethylene preferably has a density of more than 0.932 g/cm³ and 0.945 g/cm³ or less. The low-density polyethylene preferably has a density of 0.860 g/cm³ or more and 0.932 g/cm³ or less, more preferably 0.900 g/cm³ or more and 0.932 g/cm³ or less. The linear low-density polyethylene preferably has a density of 0.860 g/cm³ or more and 0.932 g/cm³ or less, more preferably 0.900 g/cm³ or more and 0.932 g/cm³ or less. The density of polyethylene is measured in accordance with JIS K 7112: 1999 Method D (density-gradient tube method, 23°C).

The low-density polyethylene is, for example, a polyethylene produced by polymerizing ethylene by a high-pressure polymerization method (a high-pressure low-density polyethylene). The linear low-density polyethylene is, for example, a polyethylene produced by polymerizing ethylene and a small amount of α-olefin by a polymerization method using a multisite catalyst, such as a Ziegler-Natta catalyst, or a single-site catalyst, such as a metallocene catalyst.

A polyethylene with a different density or a different branch can be produced by an appropriately selected polymerization method. For example, it is preferable to perform any one of gasphase polymerization, slurry polymerization, solution polymerization, and high-pressure ionic polymerization in one or two or more stages using a multisite catalyst, such as a Ziegler-Natta catalyst, or a single-site catalyst, such as a metallocene catalyst, as a polymerization catalyst.

In the present description, the polyethylene may be a biomass-derived polyethylene (hereinafter also referred to as a "biomass polyethylene"). Thus, instead of ethylene or the like derived from fossil fuels, a biomass-derived ethylene may be used as a raw material for producing polyethylene. The biomass polyethylene is a carbon-neutral material and can reduce the environmental load due to laminates or packaging bags. The biomass polyethylene can be produced, for example, by a method described in Japanese Unexamined Patent Application Publication No. 2013-177531. A commercially available biomass polyethylene may be used.

The polyethylene may be a mechanically recycled or chemically recycled polyethylene. This can reduce the environmental load due to laminates or packaging bags. In general, mechanical recycling is a method of pulverizing collected polyethylene films and the like, washing the polyethylene films with an alkaline to remove dirt and foreign materials from the surface of the films, drying the films at a high temperature under reduced pressure for a certain period to diffuse contaminants remaining in the films for decontamination, removing dirt from the films, and returning the films to polyethylene. In general, chemical recycling is a method of decomposing collected polyethylene films and the like to monomers and polymerizing the monomers again to produce polyethylene.

In the present description, a "main component" in a certain layer refers to a component with a content of more than 50% by mass, preferably 60% by mass or more, more preferably 70% by mass or more, still more preferably 80% by mass or more, in the layer.

In the present description, the terms "film", "sheet", and the like are not distinguished from one another based solely on differences in nomenclature.

### [Laminate]

A laminate according to the present disclosure includes at least a first resin layer and a second resin layer. The first resin layer is a separable portion, and the second resin layer is a main body portion. Thus, the laminate includes at least the separable portion and the main body portion.

The second resin layer has a first surface and a second surface facing the first surface. The first resin layer is provided on the first surface of the second resin layer. The first resin layer is in contact with the second resin layer, more specifically, in contact with the first surface of the second resin layer. Thus, the first surface of the second resin layer is typically a separation surface from which the first resin layer is separated.

A laminate according to the present disclosure is, for example, a laminate according to the following first to third aspects. However, a laminate according to the present disclosure is not limited to the first to third laminates.

The laminate according to the first aspect is characterized in that the separation strength between the first resin layer and the second resin layer is 1.0 N/15 mm width or less as measured at a separation angle of 180 degrees and a test speed of 50 mm/min, the second resin layer is a sealant layer including at least a polyethylene layer with a density of 0.909 g/cm³ or less, and the polyethylene layer in the second resin layer is in contact with the first resin layer. The first aspect can provide a laminate suitable as a packaging material that can enclose an article to be used in a clean environment and is less likely to have interlayer lifting.

The laminate according to the second aspect is characterized in that the separation strength between the first resin layer and the second resin layer is 1.0 N/15 mm width or less as measured at a separation angle of 180 degrees and a test speed of 50 mm/min, the second resin layer is a sealant layer containing a polyolefin as a main component, and the polyolefin content of the second resin layer is 82% by mass or more based on the mass of the second resin layer. The second aspect can provide a laminate with high recyclability suitable as a packaging material that can enclose an article to be used in a clean environment.

The laminate according to the third aspect is characterized in that the second resin layer is a sealant layer containing a polyolefin as a main component, and at least one resin layer selected from the first resin layer and the second resin layer contains at least a biomass-derived resin material. The third aspect can provide a laminate with a low environmental load suitable as a packaging material that can enclose an article to be used in a clean environment.

In the following description, when matters common to the laminates according to the first to third aspects are described, or when the laminates according to the first to third aspects are not particularly distinguished, the laminates are also referred to simply as "laminates".

In one embodiment, at least one resin layer selected from the first resin layer and the second resin layer contains a biomass-derived resin material (hereinafter also referred to as a "biomass material"). The biomass material is, for example, a resin material produced by using a biomass-derived raw material (more specifically, a plant-derived raw material) as at least part of raw materials. The biomass material is a carbon-neutral material and can reduce the environmental load due to laminates or packaging bags.

The biomass material is, for example, a polyolefin, such as a polyethylene synthesized using ethylene produced from biomass-derived ethanol (fermentation ethanol) produced from a plant raw material as at least part of raw material monomers or a polypropylene synthesized using propylene produced from waste edible oil or the like as at least part of raw material monomers, a polyester synthesized using a biomass-derived diol component and/or a biomass-derived dicarboxylic acid component as at least part of raw material monomers, or a polyamide synthesized using a biomass-derived dicarboxylic acid and/or a biomass-derived diamine as at least part of raw material monomers. These biomass materials are also referred to as a biomass polyolefin, such as biomass polyethylene or biomass polypropylene, a biomass polyester, and a biomass polyamide. The plant raw material is, for example, maize, sugarcane, beet, or manioc. The plant raw material may also be a plant-derived oil, such as soybean oil, linseed oil, tung oil, coconut oil, palm oil, or castor oil, or a recovered oil produced by recycling a waste edible oil or the like composed mainly of the plant-derived oil.

The biomass material may be a resin material composed of 100% by mass of a biomass-derived raw material monomer or may be a resin material composed of a biomass-derived raw material monomer and a fossil-fuel-derived raw material monomer as long as at least part of raw material monomers is derived from biomass. Thus, the biomass content of the biomass material described below may not be 100%.

In the present description, the "biomass content" (also referred to as "biobased carbon content") is obtained by correcting pMC (percent Modern Carbon) measured in accordance with ASTM D6866-22 Method B with δ¹³C. More specifically, a sample is combusted to generate carbon dioxide (CO₂), and the carbon dioxide is purified in a vacuum line. The purified carbon dioxide is reduced with hydrogen using iron as a catalyst to produce graphite. The ¹⁴C count and the carbon isotope ratio (¹⁴C/¹²C, ¹³C/¹²C) of the graphite are then measured by accelerator mass spectrometry (AMS method). A ¹⁴C-AMS dedicated device (manufactured by NEC Corporation) can be used as a measuring device. Oxalic acid (HOxll) provided by the National Institute of Standards and Technology (NIST) is used as a standard sample. The standard sample and a background sample are measured at the same time. The relative ¹⁴C/¹²C ratio (pMC) of the sample to the standard sample is calculated from the carbon isotope ratio. The δ¹³C is determined by measuring the ¹³C/¹²C of a sample carbon and expressing the deviation from a reference sample in terms of parts per thousand deviation.

The biobased carbon content is pMC multiplied by a correction factor due to the excess of ¹⁴C in the atmosphere resulting from nuclear tests. Since the excess ¹⁴C in the atmosphere is continually decreasing, the correction factor should conform to ASTM D6866-22.

Fossil-fuel-derived materials do not contain radiocarbon (¹⁴C) with a mass number of 14, whereas plant-derived materials contain ¹⁴C, and these materials can therefore be distinguished from each other by the biomass content based on the ¹⁴C content. It is known that fossil-fuel-derived materials have a biomass content of approximately 0%. The biomass content is an indicator representing a mixing ratio of a fossil-fuel-derived material and a plant-derived material.

To measure the biomass content of the entire laminate, a sample may be prepared from the laminate. To measure the biomass content of each layer in the laminate, a sample may be prepared by separating a target layer from the laminate.

The biomass polyethylene is, for example, a biomass high-density polyethylene, a biomass medium-density polyethylene, a biomass low-density polyethylene, or a biomass linear low-density polyethylene. The biomass polyester is, for example, a biomass poly(ethylene terephthalate).

The biomass polyamide is, for example, polyamide 56 (PA56), polyamide 410 (PA410), polyamide 510 (PA510), polyamide 610 (PA610), polyamide 810 (PA810), polyamide 910 (PA910), polyamide 1010 (PA1010), polyamide 1012 (PA1012), polyamide 11 (PA11), or polyamide 12 (PA12). Polyamide 410 is produced, for example, from tetramethylenediamine and sebacic acid. Polyamide 610 is produced, for example, from hexamethylenediamine and sebacic acid. Polyamide 11 is produced, for example, by polycondensation of 11-aminoundecanoic acid. Polyamide 1010 is produced, for example, from sebacic acid and 1,10-decanediamine, which is produced by amination of sebacic acid. Sebacic acid can be produced from castor oil. 11-aminoundecanoic acid can be produced from castor oil. Polyamide 11 and polyamide 1010 are preferred because of their high biomass contents.

The biomass material preferably has a biomass content of 50% or more, more preferably 60% or more, still more preferably 70% or more, still more preferably 80% or more, particularly preferably 85% or more, 90% or more, or 95% or more.

In one embodiment, a laminate according to the present disclosure preferably has a biomass content of 1% or more, more preferably 3% or more, still more preferably 5% or more, still more preferably 10% or more, particularly preferably 15% or more, and may have a biomass content of 60% or less, 50% or less, 40% or less, 35% or less, or 30% or less, for example, 1% or more and 60% or less. Such a laminate or a packaging bag including the laminate can reduce the environmental load.

### <First Resin Layer or Separable Portion>

The first resin layer is provided so as to be separable from the second resin layer.

The separable portion is provided so as to be separable from the main body portion.

In the present description, a film formed of the first resin layer, which is obtained by separating the first resin layer from the second resin layer of a laminate or a packaging bag according to the present disclosure, is also referred to as a "separable film". A film formed of the second resin layer after the separation is also referred to as a "sealant film" or a "packaging film".

The separation strength between the first resin layer and the second resin layer is preferably 1.0 N/15 mm width or less, more preferably 0.9 N/15 mm width or less, still more preferably 0.8 N/15 mm width or less, still more preferably 0.7 N/15 mm width or less, particularly preferably 0.6 N/15 mm width or less. In a laminate or a packaging bag with such a separation strength, the first resin layer can be easily separated from the second resin layer with an appropriate force without damaging the second resin layer. The separation strength is, for example, 0.01 N/15 mm width or more, 0.05 N/15 mm width or more, or 0.1 N/15 mm width or more, preferably 0.15 N/15 mm width or more, more preferably 0.2 N/15 mm width or more. A laminate or a packaging bag with such a separation strength is less likely to have lifting of the first resin layer from the second resin layer, has a good appearance, and is less likely to have separation of the first resin layer from the second resin layer at an unintended time. The separation strength is, for example, 0.01 N/15 mm width or more and 1.0 N/15 mm width or less.

The separation strength is measured at a separation angle of 180 degrees and a test speed of 50 mm/min. More specifically, a laminate or a packaging bag is cut to prepare a test specimen with a width of 15 mm and a length of 100 mm. The first resin layer of the test specimen is separated and folded back at one end portion in the length direction, the end portion of the partially separated first resin layer (separable film) is attached to one grip of a tensile tester, and an end portion of the second resin layer (sealant film, packaging film) after the partial separation is attached to the other grip of the tensile tester. The initial grip distance is 100 mm. The grip to which the end portion of the first resin layer is attached is then pulled at a speed of 50 mm/min in a direction of 180 degrees with respect to the surface of the test specimen while holding the orientation of the test specimen so as to maintain the angle to measure the maximum strength (N). The maximum strength (N) measured for the test specimen with a width of 15 mm is taken as the separation strength (N/15 mm width).

From the perspective of separability, strength, and heat resistance, the first resin layer preferably has a thickness of 3 µm or more, more preferably 5 µm or more, still more preferably 10 µm or more, particularly preferably 15 µm or more. From the perspective of processability, the first resin layer preferably has a thickness of 150 µm or less, more preferably 130 µm or less, still more preferably 100 µm or less, still more preferably 80 µm or less, particularly preferably 60 µm or less, 50 µm or less, 40 µm or less, or 20 µm or less. The first resin layer has a thickness of, for example, 3 µm or more and 150 µm or less.

In a packaging bag according to a second aspect described later, a separable portion as the first resin layer preferably has a thickness of 10 µm or more, more preferably 12 µm or more, still more preferably 14 µm or more, from the perspective of separability, strength, and heat resistance. The separable portion (separable film) with a thickness greater than or equal to the lower limit is less likely to be cut during separation.

The proportion of the same type of resin materials with the highest content in the first resin layer is preferably 70% by mass or more, more preferably 75% by mass or more, still more preferably 80% by mass or more, still more preferably 85% by mass or more, particularly preferably 90% by mass or more, based on the mass of the first resin layer. A laminate including such a first resin layer has high recyclability. More specifically, the separable film obtained by separating the first resin layer from the laminate has high recyclability.

The phrase "the same type of resin materials", as used herein, refers to, for example, polymers classified as polyolefin resins, polymers classified as polyamides, polymers classified as ethylene-vinyl alcohol copolymers, or polymers classified as polyesters. For example, a polyolefin resin and a polyester are not classified as the same type of resin materials.

In one embodiment, "the proportion of the same type of resin materials with the highest content in the first resin layer" can be read as "the polyamide content of the first resin layer", "the ethylene-vinyl alcohol copolymer content of the first resin layer", "the polyester content of the first resin layer", "the polyethylene resin content of the first resin layer", or "the polymethylpentene content of the first resin layer".

In the present description, the polyolefin resin is a concept including not only polyolefin but also modified polyolefin, such as acid-modified polyolefin. In the present description, the polyethylene resin is a concept including not only polyethylene but also modified polyethylene, such as acid-modified polyethylene.

In one embodiment, the first resin layer may include a heteroatom-containing resin layer containing a heteroatom-containing resin as a main component. The first resin layer may be a heteroatom-containing resin layer or may include a heteroatom-containing resin layer and a polyolefin layer containing a polyolefin as a main component. In one embodiment, the heteroatom-containing resin layer may be in contact with the second resin layer. A laminate according to such an aspect has high separability of the first resin layer from the second resin layer.

In one embodiment, the heteroatom-containing resin layer in the first resin layer is in contact with a polyethylene layer with a density of 0.909 g/cm³ or less in the second resin layer. A laminate according to such an aspect has a good balance between the separability of the first resin layer from the second resin layer and the adhesiveness between the first resin layer and the second resin layer.

A laminate according to the present disclosure may include a heteroatom-containing resin layer between the polyolefin layer in the first resin layer and the polyethylene layer with a density of 0.909 g/cm³ or less in the second resin layer. A laminate according to the present disclosure may include a polyolefin layer as a surface layer. Such a laminate has a good appearance, can have a thin heteroatom-containing resin layer, and can be produced at a lower cost.

In one embodiment, the first resin layer may include a heteroatom-containing resin layer, an adhesive layer, and a heteroatom-containing resin layer in this order in the thickness direction.

In one embodiment, the first resin layer may be a polymethylpentene layer containing polymethylpentene as a main component. The polymethylpentene layer has high releasability and is therefore preferred as the first resin layer functioning as a separable film. The polymethylpentene layer also has high heat resistance.

In one embodiment, the first resin layer preferably has a biomass content of 10% or more, more preferably 20% or more, still more preferably 30% or more, still more preferably 40% or more, particularly preferably 50% or more, and may have a biomass content of 99% or less, 90% or less, 80% or less, or 70% or less, for example, 10% or more and 99% or less. Such a laminate or a packaging bag including the laminate can reduce the environmental load.

Layers that can be included in the first resin layer are described below.

### (Heteroatom-Containing Resin Layer)

The heteroatom-containing resin layer contains a heteroatom-containing resin as a main component.

The first resin layer including the heteroatom-containing resin layer has a high Young's modulus and high separability from the second resin layer. Furthermore, a laminate including the heteroatom-containing resin layer has high puncture resistance. Thus, a packaging bag including such a laminate has good packaging properties for a hard article. A laminate including the heteroatom-containing resin layer has good gas barrier properties, such as oxygen barrier properties and water vapor barrier properties, heat resistance, and rigidity. The heteroatom-containing resin may be a biomass material from the perspective of environmental load reduction.

The heteroatom in the heteroatom-containing resin is, for example, an oxygen atom, a sulfur atom, a nitrogen atom, or a chlorine atom. The heteroatom-containing resin has, for example, a heteroatom-containing group, such as a hydroxy group, an amide bond, an ester bond, or an ether bond. The heteroatom-containing resin is, for example, a polyamide, an ethylene-vinyl alcohol copolymer, poly(vinyl alcohol), poly(vinylidene chloride), a polyester, a polyether polyol, or a polyester polyol. Among these, from the perspective of heat resistance, rigidity, and puncture resistance, a polyamide, an ethylene-vinyl alcohol copolymer, a polyester, and poly(vinyl alcohol) are preferred, and a polyamide and an ethylene-vinyl alcohol copolymer are more preferred. These resin materials may be biomass materials from the perspective of environmental load reduction.

The polyamide is, for example, an aliphatic polyamide or a semiaromatic polyamide. The polyamide is preferably an aliphatic polyamide, more preferably a crystalline aliphatic polyamide.

The aliphatic polyamide is, for example, an aliphatic homopolyamide or an aliphatic copolyamide. In the following examples, polyamide is also referred to as "PA".

More specifically, the aliphatic homopolyamide may be polycaprolactam or poly(6-aminocaproic acid) (PA6), polyenantholactam or poly(7-aminoenanthic acid) (PA7), polyundecanelactam or poly(11-aminoundecanoic acid) (PA11), polylauryllactam or poly(12-aminolauric acid) (PA12), poly(pentamethylene adipamide) (PA56), poly(hexamethylene adipamide) (PA66), poly(tetramethylene sebacamide) (PA410), poly(tetramethylene dodecamide) (PA412), poly(pentamethylene azelamide) (PA59), poly(pentamethylene sebacamide) (PA510), poly(pentamethylene dodecamide) (PA512), poly(hexamethylene azelamide) (PA69), poly(hexamethylene sebacamide) (PA610), poly(octamethylene sebacamide) (PA810), poly(hexamethylene dodecamide) (PA612), poly(nonamethylene adipamide) (PA96), poly(nonamethylene azelamide) (PA99), poly(nonamethylene sebacamide) (PA910), poly(nonamethylene dodecamide) (PA912), poly(decamethylene adipamide) (PA106), poly(decamethylene azelamide) (PA109), poly(decamethylene decamide) (PA1010), poly(decamethylene dodecamide) (PA1012), poly(dodecamethylene adipamide) (PA126), poly(dodecamethylene azelamide) (PA129), poly(dodecamethylene sebacamide) (PA1210), or poly(dodecamethylene dodecamide) (PA1212).

More specifically, the aliphatic copolyamide may be a caprolactam/hexamethylene diaminoadipic acid copolymer (PA6/66), a caprolactam/hexamethylene diaminoazelaic acid copolymer (PA6/69), a caprolactam/hexamethylene diaminosebacic acid copolymer (PA6/610), a caprolactam/hexamethylene diaminoundecanoic acid copolymer (PA6/611), a caprolactam/hexamethylene diaminododecanoic acid copolymer (PA6/612), a caprolactam/aminoundecanoic acid copolymer (PA6/11), a caprolactam/lauryl lactam copolymer (PA6/12), a caprolactam/hexamethylene diaminoadipic acid/lauryl lactam copolymer (PA6/66/12), a caprolactam/hexamethylene diaminoadipic acid/hexamethylene diaminosebacic acid copolymer (PA6/66/610), or a caprolactam/hexamethylene diaminoadipic acid/hexamethylene diaminododecane dicarboxylic acid copolymer (PA6/66/612).

The aliphatic polyamide preferably has a relative viscosity of 1.5 or more, more preferably 2.0 or more, still more preferably 2.5 or more, and preferably 5.0 or less, more preferably 4.5 or less, for example, 1.5 or more and 5.0 or less. The relative viscosity of the aliphatic polyamide is measured at 25°C by dissolving 1 g of the polyamide in 100 mL of 96% concentrated sulfuric acid in accordance with JIS K 6920-2: 2009.

The semiaromatic polyamide is a polyamide with a constitutional unit derived from an aromatic diamine and a constitutional unit derived from an aliphatic dicarboxylic acid, or a polyamide with a constitutional unit derived from an aliphatic diamine and a constitutional unit derived from an aromatic dicarboxylic acid. Examples thereof include a polyamide composed of an aromatic diamine and an aliphatic dicarboxylic acid, and a polyamide composed of an aliphatic diamine and an aromatic dicarboxylic acid.

The semiaromatic polyamide is, for example, poly(hexamethylene terephthalamide) (PA6T), poly(hexamethylene isophthalamide) (PA6I), poly(nonamethylene terephthalamide) (PA9T), a poly(hexamethylene adipamide)/poly(hexamethylene terephthalamide) copolymer (PA66/6T), a poly(hexamethylene adipamide)/poly(hexamethylene isophthalamide) copolymer (PA66/6I), a poly(hexamethylene terephthalamide)/polycaproamide copolymer (PA6T/6), a poly(hexamethylene isophthalamide)/polycaproamide copolymer (PA6I/6), a poly(hexamethylene terephthalamide)/polydodecamide copolymer (PA6T/12), a poly(hexamethylene isophthalamide)/poly(hexamethylene terephthalamide) copolymer (PA6I/6T), a poly(hexamethylene terephthalamide)/poly(2-methylpentamethylene terephthalamide) copolymer (PA6T/M5T), a poly(hexamethylene adipamide)/poly(hexamethylene terephthalamide)/poly(hexamethylene isophthalamide) copolymer (PA66/6T/6I), a poly(hexamethylene adipamide)/polycaproamide/poly(hexamethylene isophthalamide) copolymer (PA66/6/6I), or poly(m-xylylene adipamide) (PAMXD6).

The semiaromatic polyamide preferably has a melt volume rate (MVR) of 5 cm³/10 min or more, more preferably 10 cm³/10 min or more, and preferably 200 cm³/10 min or less, more preferably 100 cm³/10 min or less, for example, 5 cm³/10 min or more and 200 cm³/10 min or less. MVR is measured at a temperature of 275°C and a load of 5.00 kg in accordance with JIS K 7210-1: 2014.

The polyamide is preferably a crystalline aliphatic polyamide. The crystalline aliphatic polyamide is, for example, PA6, PA11, PA12, PA66, PA610, PA612, PA1010, PA6/66, or PA6/66/12.

The crystalline aliphatic polyamide preferably has a melting point (Tm) of 170°C or more, more preferably 180°C or more, preferably 300°C or less, more preferably 250°C or less, still more preferably 230°C or less, for example, 170°C or more and 300°C or less. The Tm of the crystalline aliphatic polyamide is a melting peak temperature determined by differential scanning calorimetry (DSC) in accordance with JIS K 7121: 2012.

From the perspective of film formability and processability, the polyamide preferably has a melt flow rate (MFR) of 0.1 g/10 min or more, more preferably 0.3 g/10 min or more, still more preferably 0.5 g/10 min or more, and preferably 30 g/10 min or less, more preferably 20 g/10 min or less, still more preferably 10 g/10 min or less, particularly preferably 5 g/10 min or less, for example, 0.1 g/10 min or more and 30 g/10 min or less. The MFR of the polyamide is measured at a temperature of 235°C and a load of 2.16 kg in accordance with JIS K 7210-1: 2014 Method A. The measurement temperature can be changed with the melting point of the polyamide.

From the perspective of environmental load reduction, the polyamide may be a biomass polyamide. The biomass polyamide is, for example, PA56, PA410, PA510, PA610, PA810, PA910, PA1010, PA1012, PA11, or PA12.

The ethylene-vinyl alcohol copolymer (EVOH) is produced, for example, by copolymerizing ethylene and a vinyl ester monomer, followed by saponification. The copolymerization of ethylene and a vinyl ester monomer can be performed by any known polymerization method, for example, solution polymerization, suspension polymerization, emulsion polymerization, or the like.

The vinyl ester monomer is typically vinyl acetate but may be another vinyl ester monomer. The other vinyl ester monomer is, for example, an aliphatic vinyl ester, such as vinyl formate, vinyl propionate, vinyl valerate, vinyl butyrate, vinyl isobutyrate, vinyl pivalate, vinyl caprate, vinyl laurate, vinyl stearate, or vinyl versatate, or an aromatic vinyl ester, such as vinyl benzoate.

The amount of constitutional unit derived from ethylene (ethylene content) in EVOH is preferably 20% by mole or more, more preferably 25% by mole or more, from the perspective of the processability of the laminate. The ethylene content of EVOH is preferably 60% by mole or less, more preferably 50% by mole or less, from the perspective of the heat resistance, oxygen barrier properties, and water vapor barrier properties of the laminate. The ethylene content is, for example, 20% by mole or more and 60% by mole or less. The ethylene content is measured by an NMR method.

The average degree of saponification of EVOH is preferably 90% by mole or more, more preferably 95% by mole or more, still more preferably 99% by mole or more. The average degree of saponification is measured in accordance with JIS K 6726: 1994 (using a solution of EVOH homogeneously dissolved in a water/methanol solvent).

From the perspective of heat resistance, EVOH preferably has a melting point (Tm) of 140°C or more, more preferably 145°C or more, still more preferably 150°C or more, and preferably 200°C or less, more preferably 195°C or less, still more preferably 190°C or less, for example, 140°C or more and 200°C or less. The Tm of EVOH is a melting peak temperature determined by DSC in accordance with JIS K 7121: 2012.

From the perspective of film formability and processability, EVOH preferably has a melt flow rate (MFR) of 0.1 g/10 min or more, more preferably 0.3 g/10 min or more, still more preferably 0.5 g/10 min or more, and preferably 30 g/10 min or less, more preferably 20 g/10 min or less, still more preferably 10 g/10 min or less, particularly preferably 5 g/10 min or less, for example, 0.1 g/10 min or more and 30 g/10 min or less. The MFR of EVOH is measured at a temperature of 190°C and a load of 2.16 kg in accordance with JIS K 7210-1: 2014 Method A. The measurement temperature may be 210°C depending on the melting point of EVOH.

EVOH may be modified by a known method, such as urethanization, acetalization, cyanoethylation, or oxyalkylenation.

Poly(vinyl alcohol) (PVA) preferably has an average degree of saponification of 70% by mole or more, more preferably 75% by mole or more, still more preferably 80% by mole or more, particularly preferably 85% by mole or more. The average degree of saponification is measured in accordance with JIS K 6726: 1994.

The polyester is, for example, poly(ethylene terephthalate) (PET), poly(butylene terephthalate) (PBT), poly(ethylene naphthalate) (PEN), 1,4-poly(cyclohexylenedimethylene terephthalate), or a terephthalic acid-cyclohexanedimethanol-ethylene glycol copolymer. Among these, PET is preferred.

The heteroatom-containing resin content of the heteroatom-containing resin layer is preferably more than 50% by mass, more preferably 60% by mass or more, still more preferably 70% by mass or more, still more preferably 80% by mass or more, particularly preferably 90% by mass or more. This can improve, for example, the physical properties, such as heat resistance, of a packaging bag.

The heteroatom-containing resin layer may contain an additive agent. The additive agent is, for example, an anti-blocking agent, a slip agent, an ultraviolet absorber, an antioxidant, a light stabilizer, a filler, a reinforcing agent, an antistatic agent, a compatibilizer, a cross-linker, a pigment, or a dye.

From the perspective of the heat resistance of the laminate, the heteroatom-containing resin layer preferably has a thickness of 0.5 µm or more, more preferably 1 µm or more, still more preferably 3 µm or more, particularly preferably 5 µm or more. From the perspective of the recyclability of the laminate, the heteroatom-containing resin layer preferably has a thickness of 50 µm or less, more preferably 40 µm or less, still more preferably 30 µm or less, particularly preferably 20 µm or less. The heteroatom-containing resin layer has a thickness of, for example, 0.5 µm or more and 50 µm or less.

### (Polyolefin Layer)

The polyolefin layer in the first resin layer contains a polyolefin as a main component. The polyolefin is, for example, polyethylene, polypropylene, or polymethylpentene. The polyolefin layer is preferably a polyethylene layer or a polypropylene layer, more preferably a polyethylene layer. The polyolefin may be a biomass polyolefin from the perspective of environmental load reduction.

From the perspective of film formability and processability, the polyolefin preferably has a MFR of 0.1 g/10 min or more, more preferably 0.3 g/10 min or more, still more preferably 0.5 g/10 min or more, and preferably 30 g/10 min or less, more preferably 20 g/10 min or less, still more preferably 10 g/10 min or less, particularly preferably 5 g/10 min or less, for example, 0.1 g/10 min or more and 30 g/10 min or less. The MFR of the polyolefin is measured at a load of 2.16 kg in accordance with JIS K 7210-1: 2014 Method A. The MFR measurement temperature depends on the melting point and the like of the polyolefin and is 190°C for polyethylene and 230°C for polypropylene.

The polyolefin content of the polyolefin layer is preferably more than 50% by mass, more preferably 60% by mass or more, still more preferably 70% by mass or more, particularly preferably 80% by mass or more.

The polyolefin layer in the first resin layer may further contain a modified polyolefin from the perspective of adhesiveness to the heteroatom-containing resin layer. The modified polyolefin is, for example, a modified product of a polyolefin, particularly a graft-modified product of a polyolefin, with an unsaturated carboxylic acid, such as maleic acid or fumaric acid, or an acid anhydride, ester, or metal salt thereof. The modified polyolefin may be a biomass material from the perspective of environmental load reduction.

From the perspective of film formability and processability, the modified polyolefin preferably has a MFR of 0.1 g/10 min or more, more preferably 0.3 g/10 min or more, still more preferably 0.5 g/10 min or more, and preferably 30 g/10 min or less, more preferably 20 g/10 min or less, still more preferably 10 g/10 min or less, particularly preferably 5 g/10 min or less, for example, 0.1 g/10 min or more and 30 g/10 min or less. The MFR of the modified polyolefin is measured at a load of 2.16 kg in accordance with JIS K 7210-1: 2014 Method A. The MFR measurement temperature depends on the melting point and the like of the modified polyolefin and is 190°C for modified polyethylene and 230°C for modified polypropylene.

The modified polyolefin content of the polyolefin layer is preferably less than 50% by mass, more preferably 40% by mass or less, still more preferably 30% by mass or less, particularly preferably 20% by mass or less, and preferably 1% by mass or more, more preferably 3% by mass or more, still more preferably 5% by mass or more, for example, 1% by mass or more and less than 50% by mass.

The polyolefin layer may contain a resin material other than polyolefin and modified polyolefin. The resin material is, for example, a (meth)acrylic resin, a vinyl resin, a cellulose resin, a polyamide, a polyester, or an ionomer resin.

The polyolefin layer may contain the additive agent described above.

In one embodiment, the polyolefin layer is a polyolefin film layer containing a polyolefin as a main component.

From the perspective of the strength, heat resistance, and recyclability of the laminate, the polyolefin layer preferably has a thickness of 1 µm or more, more preferably 5 µm or more, still more preferably 10 µm or more. From the perspective of the processability of the laminate, the polyolefin layer preferably has a thickness of 100 µm or less, more preferably 80 µm or less, still more preferably 70 µm or less, still more preferably 60 µm or less, particularly preferably 50 µm or less, 40 µm or less, 30 µm or less, or 20 µm or less. The polyolefin layer has a thickness of, for example, 1 µm or more and 100 µm or less.

### ((Polyethylene Layer))

The polyethylene layer in the first resin layer contains a polyethylene as a main component. The polyethylene is, for example, a high-density polyethylene, a medium-density polyethylene, a low-density polyethylene, or a linear low-density polyethylene. From the perspective of the appearance and puncture resistance of the laminate, a polyethylene layer containing a linear low-density polyethylene as a main component is preferred. From the perspective of the heat resistance of the laminate and the tubular film during heat sealing, a polyethylene layer containing a high-density polyethylene as a main component is preferred.

In the present description, the linear low-density polyethylene is, for example, an ethylene-1-butene copolymer (C4-LLDPE) in which the comonomer is at least 1-butene, an ethylene-1-hexene copolymer (C6-LLDPE) in which the comonomer is at least 1-hexene, or an ethylene-1-octene copolymer (C8-LLDPE) in which the comonomer is at least 1-octene. In these copolymers, not only these comonomers but also another comonomer may be used.

The polyethylene layer in the first resin layer may contain a biomass polyethylene as the polyethylene from the perspective of environmental load reduction. The biomass polyethylene is, for example, a biomass high-density polyethylene, a biomass medium-density polyethylene, a biomass low-density polyethylene, or a biomass linear low-density polyethylene, preferably a biomass high-density polyethylene.

From the perspective of the appearance and puncture resistance of the laminate, the polyethylene in the first resin layer preferably has a density of 0.925 g/cm³ or more, more preferably 0.928 g/cm³ or more, still more preferably 0.930 g/cm³ or more. The polyethylene preferably has a density of 0.932 g/cm³ or less. The polyethylene has a density of, for example, 0.925 g/cm³ or more and 0.932 g/cm³ or less. From the perspective of the heat resistance of the laminate, the polyethylene in the first resin layer preferably has a density of more than 0.945 g/cm³ and preferably 0.965 g/cm³ or less.

From the perspective of film formability and processability, the polyethylene in the first resin layer preferably has a MFR of 0.1 g/10 min or more, more preferably 0.3 g/10 min or more, still more preferably 0.5 g/10 min or more, and preferably 30 g/10 min or less, more preferably 20 g/10 min or less, still more preferably 10 g/10 min or less, particularly preferably 5 g/10 min or less, for example, 0.1 g/10 min or more and 30 g/10 min or less. The MFR of the polyethylene is measured at a temperature of 190°C and a load of 2.16 kg in accordance with JIS K 7210-1: 2014 Method A.

From the perspective of heat resistance, the polyethylene in the first resin layer preferably has a melting point (Tm) of 100°C or more, more preferably 105°C or more, still more preferably 110°C or more, particularly preferably 120°C or more, and preferably 140°C or less, for example, 100°C or more and 140°C or less. Tm is the melting peak temperature measured by DSC in accordance with JIS K 7121: 2012.

The polyethylene content of the polyethylene layer is preferably more than 50% by mass, more preferably 60% by mass or more, still more preferably 70% by mass or more, particularly preferably 80% by mass or more.

The polyethylene layer in the first resin layer may further contain a modified polyethylene from the perspective of adhesiveness to the heteroatom-containing resin layer. The modified polyethylene is, for example, a modified product of a polyethylene, particularly a graft-modified product of a polyethylene, with an unsaturated carboxylic acid, such as maleic acid or fumaric acid, or an acid anhydride, ester, or metal salt thereof. The modified polyethylene may be a modified high-density polyethylene or a maleic-anhydride-graft-modified high-density polyethylene. The modified polyethylene may be a biomass material from the perspective of environmental load reduction.

From the perspective of film formability and processability, the modified polyethylene preferably has a MFR of 0.1 g/10 min or more, more preferably 0.3 g/10 min or more, still more preferably 0.5 g/10 min or more, and preferably 30 g/10 min or less, more preferably 20 g/10 min or less, still more preferably 10 g/10 min or less, particularly preferably 5 g/10 min or less, for example, 0.1 g/10 min or more and 30 g/10 min or less. The MFR of the modified polyethylene is measured at a temperature of 190°C and a load of 2.16 kg in accordance with JIS K 7210-1: 2014 Method A.

The modified polyethylene content of the polyethylene layer is preferably less than 50% by mass, more preferably 40% by mass or less, still more preferably 30% by mass or less, particularly preferably 20% by mass or less, and preferably 1% by mass or more, more preferably 3% by mass or more, still more preferably 5% by mass or more, for example, 1% by mass or more and less than 50% by mass.

### ((Polypropylene Layer))

The polypropylene layer in the first resin layer contains polypropylene as a main component. A laminate including the polypropylene layer has high oil resistance.

The polypropylene may be any of a propylene homopolymer (homopolypropylene), a propylene random copolymer (random polypropylene), and a propylene block copolymer (block polypropylene), or may be a mixture of two or more selected from these. From the perspective of environmental load reduction, the polypropylene may be a biomass polypropylene or a mechanically recycled or chemically recycled polypropylene.

The propylene homopolymer is a polymer of propylene alone. The propylene random copolymer is a random copolymer of propylene and an α-olefin or the like other than propylene. The propylene block copolymer is a copolymer with a polymer block composed of at least propylene and a polymer block composed of at least an α-olefin other than propylene or the like.

The α-olefin other than propylene is, for example, an α-olefin with 2 or more and 20 or less carbon atoms, more specifically, ethylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, or 6-methyl-1-heptene.

Among polypropylenes, a propylene random copolymer is preferred from the perspective of transparency. When the rigidity and heat resistance of a packaging bag are regarded as important, a propylene homopolymer is preferred. When the impact resistance of a packaging bag is regarded as important, a propylene block copolymer is preferred.

The polypropylene has a density of, for example, 0.88 g/cm³ or more and 0.92 g/cm³ or less. The density of polypropylene is measured in accordance with JIS K 7112: 1999 method D (density-gradient tube method, 23°C).

From the perspective of heat resistance, the polypropylene preferably has a melting point (Tm) of 120°C or more, more preferably 130°C or more, still more preferably 150°C or more. The polypropylene preferably has a Tm of 170°C or less, for example, 120°C or more and 170°C or less. Tm is the melting peak temperature measured by DSC in accordance with JIS K 7121: 2012.

The polypropylene content of the polypropylene layer is preferably more than 50% by mass, more preferably 60% by mass or more, still more preferably 70% by mass or more, still more preferably 80% by mass or more, particularly preferably 90% by mass or more.

### (Adhesive Layer)

In one embodiment, the adhesive layer in the first resin layer is an adhesive layer composed of an adhesive agent. The adhesive agent may be any of a one-component curing adhesive agent, a twocomponent curing adhesive agent, or a non-curable adhesive agent. The adhesive agent may be a solvent-free adhesive agent or a solvent-based adhesive agent.

The solvent-free adhesive agent, that is, a non-solvent lamination adhesive agent is, for example, a polyether adhesive agent, a polyester adhesive agent, a silicone adhesive agent, an epoxy adhesive agent, or a urethane adhesive agent. Among these, a urethane adhesive agent is preferred, and a twocomponent curing urethane adhesive agent is more preferred. The solvent-based adhesive agent is, for example, a rubber adhesive agent, a vinyl adhesive agent, an olefin adhesive agent, a silicone adhesive agent, an epoxy adhesive agent, a phenolic adhesive agent, or a urethane adhesive agent.

The adhesive layer preferably has a thickness of 0.1 µm or more, more preferably 0.2 µm or more, still more preferably 0.5 µm or more, and preferably 10 µm or less, more preferably 8 µm or less, still more preferably 6 µm or less, for example, 0.1 µm or more and 10 µm or less.

In one embodiment, the first resin layer may be a laminated film including a heteroatom-containing resin layer, an adhesive layer, and a heteroatom-containing resin layer in this order in the thickness direction. In one embodiment, a laminated film may be produced by bonding two or more films corresponding to the heteroatom-containing resin layer (for example, heteroatom-containing resin films, such as PET films) by a non-solvent lamination method using a solvent-free adhesive agent or a dry lamination method using a solvent-based adhesive agent.

### (Polymethylpentene Layer)

In one embodiment, the first resin layer is a polymethylpentene layer. The polymethylpentene layer contains polymethylpentene as a main component. The polymethylpentene layer has high releasability and is therefore preferred as the first resin layer functioning as a separable film. The polymethylpentene layer also has high heat resistance.

The term "polymethylpentene", as used herein, refers to a polymer with a polymethylpentenederived constitutional unit content of more than 50% by mole of all the constitutional repeating units. The polymer preferably has a methylpentene-derived constitutional unit content of 70% by mole or more, more preferably 80% by mole or more, still more preferably 90% by mole or more, particularly preferably 95% by mole or more. The content is measured by an NMR method.

The polymethylpentene may be a methylpentene homopolymer, a random copolymer of methylpentene and an α-olefin other than methylpentene or the like, a block copolymer of methylpentene and an α-olefin other than methylpentene or the like, or a mixture of two or more selected from these. From the perspective of environmental load reduction, the polymethylpentene may be a biomass polymethylpentene or a mechanically recycled or chemically recycled polymethylpentene.

The methylpentene is, for example, 4-methyl-1-pentene, 3-methyl-1-pentene, or 4,4-dimethyl-1-pentene, preferably 4-methyl-1-pentene.

The α-olefin other than methylpentene is, for example, an α-olefins with 2 or more and 20 or less carbon atoms, more specifically, ethylene, propylene, 1-butene, 1-pentene, 1-hexene, 1-octene, 1-decene, 1-dodecene, 1-tetradecene, 1-hexadecene, 1-octadecene, 1-eicosene, 3-methyl-1-butene, or 6-methyl-1-heptene.

The polymethylpentene is, for example, poly(4-methyl-1-pentene), poly(3-methyl-1-pentene), or poly(4,4-dimethyl-1-pentene), preferably poly(4-methyl-1-pentene). The poly(4-methyl-1-pentene) may be a 4-methyl-1-pentene homopolymer or a copolymer of 4-methyl-1-pentene and an α-olefin other than 4-methyl-1-pentene or the like.

The polymethylpentene has a density of, for example, 0.800 g/cm³ or more and 0.860 g/cm³ or less. The density of polymethylpentene is measured in accordance with JIS K 7112: 1999 method D (density-gradient tube method, 23°C).

From the perspective of heat resistance, the polymethylpentene preferably has a melting point (Tm) of 200°C or more, more preferably 210°C or more, still more preferably 220°C or more. The polymethylpentene preferably has a Tm of 300°C or less, more preferably 250°C or less. The polymethylpentene has a Tm of, for example, 200°C or more and 300°C or less. Tm is the melting peak temperature measured by DSC in accordance with JIS K 7121: 2012.

From the perspective of film formability and processability, the polymethylpentene preferably has a MFR of 0.1 g/10 min or more, more preferably 1 g/10 min or more, still more preferably 5 g/10 min or more, particularly preferably 15 g/10 min or more, and preferably 100 g/10 min or less, more preferably 50 g/10 min or less, still more preferably 30 g/10 min or less, for example, 0.1 g/10 min or more and 100 g/10 min or less. The MFR of the polymethylpentene is measured at a temperature of 260°C and a load of 5 kg in accordance with JIS K 7210-1: 2014 Method A.

The polymethylpentene content of the polymethylpentene layer is preferably more than 50% by mass, more preferably 60% by mass or more, still more preferably 70% by mass or more, still more preferably 80% by mass or more, particularly preferably 90% by mass or more.

The polymethylpentene layer may contain a resin material other than polymethylpentene. Such a resin material is, for example, a polyolefin other than polymethylpentene, a (meth)acrylic resin, a vinyl resin, a cellulose resin, a polyamide, a polyester, or an ionomer resin.

The polymethylpentene layer may contain the additive agent described above.

### (Extruded Resin Layer)

An extruded resin layer in the first resin layer contains a polyolefin as a main component. The polyolefin is, for example, polyethylene, polypropylene, or polymethylpentene, preferably polyethylene. From the perspective of adhesiveness, the polyethylene constituting the extruded resin layer is preferably at least one selected from a low-density polyethylene and a linear low-density polyethylene, more preferably a low-density polyethylene. The polyolefin may be a biomass polyolefin from the perspective of environmental load reduction.

From the perspective of film formability and processability, the polyethylene in the extruded resin layer preferably has a MFR of 0.1 g/10 min or more, more preferably 1 g/10 min or more, still more preferably 3 g/10 min or more, and preferably 30 g/10 min or less, more preferably 25 g/10 min or less, still more preferably 20 g/10 min or less, for example, 0.1 g/10 min or more and 30 g/10 min or less. The MFR of the polyethylene is measured at a temperature of 190°C and a load of 2.16 kg in accordance with JIS K 7210-1: 2014 Method A.

From the perspective of the balance between heat resistance and adhesiveness, the polyethylene in the extruded resin layer preferably has a melting point (Tm) of 100°C or more, and preferably 140°C or less, more preferably 130°C or less, still more preferably 120°C or less, for example, 100°C or more and 140°C or less. Tm is the melting peak temperature measured by DSC in accordance with JIS K 7121: 2012.

The polyolefin content, such as the polyethylene content, of the extruded resin layer is preferably 80% by mass or more, more preferably 85% by mass or more, still more preferably 90% by mass or more, particularly preferably 95% by mass. A laminate including such an extruded resin layer has high recyclability.

The extruded resin layer in the first resin layer preferably has a thickness of 5 µm or more, more preferably 10 µm or more, and preferably 40 µm or less, more preferably 30 µm or less, for example, 5 µm or more and 40 µm or less. A laminate including such an extruded resin layer has high interlayer adhesiveness and recyclability.

The extruded resin layer can be formed, for example, by melting a polyolefin or a polyolefin resin composition and extruding it onto a film. The melting temperature at this time is preferably 280°C or more, more preferably 290°C or more, and preferably 340°C or less, more preferably 335°C or less, for example, 280°C or more and 340°C or less.

### <Second Resin Layer or Main Body Portion>

The second resin layer is a sealant layer.

In one embodiment, the second resin layer includes at least a polyethylene layer, preferably at least a polyethylene layer with a density of 0.909 g/cm³ or less. The polyethylene layer with a density of 0.909 g/cm³ or less in the second resin layer is preferably in contact with the first resin layer.

In one embodiment, the second resin layer is a sealant layer containing a polyolefin as a main component. This allows a packaging bag produced by separating and removing the first resin layer from the laminate to be made of a monomaterial.

In a packaging bag produced from a laminate according to the present disclosure, the second resin layer is a layer facing the storage space of the packaging bag.

The polyolefin is, for example, polyethylene, polypropylene, or polymethylpentene. Among these, polyethylene and polypropylene are preferred, and polyethylene is more preferred. The polyolefin may be a biomass polyolefin from the perspective of environmental load reduction.

From the perspective of film formability and processability, the polyolefin in the second resin layer has a MFR of 0.1 g/10 min or more, more preferably 0.3 g/10 min or more, still more preferably 0.5 g/10 min or more, and preferably 30 g/10 min or less, more preferably 20 g/10 min or less, still more preferably 10 g/10 min or less, particularly preferably 5 g/10 min or less, for example, 0.1 g/10 min or more and 30 g/10 min or less. The MFR of the polyolefin is measured at a load of 2.16 kg in accordance with JIS K 7210-1: 2014 Method A. The MFR measurement temperature depends on the melting point and the like of the polyolefin and is 190°C for polyethylene and 230°C for polypropylene.

The polyolefin content of the second resin layer is preferably 80% by mass or more, more preferably 82% by mass or more, still more preferably 85% by mass or more, still more preferably 90% by mass or more, particularly preferably 95% by mass or more, based on the mass of the second resin layer. A laminate including such a second resin layer has high recyclability. More specifically, a sealant film or a packaging film corresponding to the second resin layer after the first resin layer is separated and removed from the laminate has high recyclability.

In one embodiment, "the polyolefin content of the second resin layer" can be read as "the polyethylene content of the second resin layer" or "the polypropylene content of the second resin layer".

In one embodiment, the second resin layer contains polyethylene as a main component. The polyethylene is, for example, a high-density polyethylene, a medium-density polyethylene, a low-density polyethylene, or a linear low-density polyethylene, preferably a low-density polyethylene or a linear low-density polyethylene from the perspective of heat sealability. The polyethylene may be a biomass polyethylene from the perspective of environmental load reduction.

From the perspective of the balance between heat resistance and heat sealability, the polyethylene in the second resin layer preferably has a melting point (Tm) of 80°C or more, more preferably 85°C or more, and preferably 140°C or less, more preferably 130°C or less, for example, 80°C or more and 140°C or less. Tm is the melting peak temperature measured by DSC in accordance with JIS K 7121: 2012.

In one embodiment, the second resin layer contains polypropylene as a main component. A laminate including such a second resin layer has high oil resistance.

The polypropylene is, for example, a propylene homopolymer, a propylene random copolymer, such as a propylene-α-olefin random copolymer, or a propylene block copolymer, such as a propylene-α-olefin block copolymer. The α-olefin is described in detail above. From the perspective of environmental load reduction, the polypropylene may be a biomass polypropylene or a mechanically recycled or chemically recycled polypropylene.

From the perspective of heat sealability, the polypropylene in the second resin layer has a density of, for example, 0.88 g/cm³ or more and 0.92 g/cm³ or less. The density of polypropylene is measured in accordance with JIS K 7112: 1999 method D (density-gradient tube method, 23°C).

From the perspective of the balance between heat resistance and heat sealability, the polypropylene in the second resin layer preferably has a melting point (Tm) of 120°C or more, more preferably 125°C or more, still more preferably 130°C or more, and preferably 160°C or less, more preferably 155°C or less, still more preferably 150°C or less, for example, 120°C or more and 160°C or less. Tm is the melting peak temperature measured by DSC in accordance with JIS K 7121: 2012.

The second resin layer may contain the additive agent described above.

In one embodiment, the second resin layer preferably has a biomass content of 10% or more, more preferably 20% or more, still more preferably 30% or more, still more preferably 40% or more, particularly preferably 50% or more, and may have a biomass content of 99% or less, 90% or less, 80% or less, or 70% or less, for example, 10% or more and 99% or less. Such a laminate or a packaging bag including the laminate can reduce the environmental load. However, biomass materials may have a wider molecular weight distribution and contain a larger amount of low-molecular-weight components than known fossil-fuel-derived resin materials. Since the second resin layer may come into contact with an article stored in a packaging bag, the second resin layer may not contain a biomass material depending on the type of the article (for example, a semiconductor product or its related part). In such a case, in one embodiment, the second resin layer may have a biomass content of less than 10%, 5% or less, 3% or less, or 1% or less.

From the perspective of strength and heat sealability, the second resin layer preferably has a thickness of 10 µm or more, more preferably 15 µm or more, still more preferably 20 µm or more, particularly preferably 30 µm or more. From the perspective of processability, the second resin layer preferably has a thickness of 250 µm or less, more preferably 200 µm or less, still more preferably 150 µm or less, particularly preferably 100 µm or less. The second resin layer has a thickness of, for example, 10 µm or more and 250 µm or less.

In one embodiment, the second resin layer includes at least a heat-fusible resin layer. In one embodiment, the second resin layer includes at least a heat-fusible resin layer as a surface layer of the laminate. In one embodiment, the second resin layer includes, as a surface layer of the laminate, at least a heat-fusible resin layer containing a polyolefin, such as polyethylene or polypropylene, as a main component. In one embodiment, the heat-fusible resin layer in the second resin layer is in contact with the first resin layer.

In one embodiment, the second resin layer includes at least a polyethylene layer with a density of 0.909 g/cm³ or less. In one embodiment, the polyethylene layer in the second resin layer is in contact with the first resin layer.

In one embodiment, the second resin layer includes a polyethylene layer with a density of 0.909 g/cm³ or less and, as a surface layer of the laminate, a heat-fusible resin layer containing a polyolefin, such as polyethylene, as a main component. In one embodiment, the polyethylene layer in the second resin layer is in contact with the first resin layer.

In one embodiment, the second resin layer further includes an intermediate layer, preferably an intermediate layer containing a polyolefin, such as polyethylene, as a main component, between a polyethylene layer with a density of 0.909 g/cm³ or less and a heat-fusible resin layer containing a polyolefin, such as polyethylene, as a main component.

In one embodiment, the second resin layer includes an extruded resin layer containing a polyolefin, such as polyethylene, as a main component and a heat-fusible resin layer containing a polyolefin, such as polyethylene, as a main component. In this embodiment, a film corresponding to the first resin layer and a heat-fusible film corresponding to the heat-fusible resin layer are stacked with the extruded resin layer interposed therebetween. Thus, the laminate of this embodiment includes the extruded resin layer between the first resin layer and the heat-fusible resin layer.

In one embodiment, the first resin layer includes a polyolefin film layer containing a polyolefin as a main component and an extruded resin layer containing a polyolefin as a main component. The extruded resin layer is in contact with the following polar resin layer in the second resin layer. In one embodiment, the second resin layer includes a polar resin layer, an anchor coat layer, an extruded resin layer containing a polyolefin as a main component, and a heat-fusible resin layer. The polar resin layer is in contact with the extruded resin layer in the first resin layer. Such a laminate includes a first resin layer with high separability.

Layers that can be included in the second resin layer are described below.

### (Polyethylene Layer)

In one embodiment, the second resin layer includes a polyethylene layer with a density of 0.909 g/cm³ or less. A laminate including such a polyethylene layer is less likely to have lifting of the first resin layer from the second resin layer during production of the laminate and has high separation strength between the first resin layer and the second resin layer. More specifically, the polyethylene layer with a density of 0.909 g/cm³ or less has a good balance between the adhesiveness to and the separability from a heteroatom-containing resin layer.

The polyethylene layer preferably has a density of 0.908 g/cm³ or less, more preferably 0.907 g/cm³ or less, still more preferably 0.906 g/cm³ or less, still more preferably 0.905 g/cm³ or less, particularly preferably 0.904 g/cm³ or less. The polyethylene layer preferably has a density of 0.860 g/cm³ or more, more preferably 0.870 g/cm³ or more, more preferably 0.880 g/cm³ or more, still more preferably 0.890 g/cm³ or more, particularly preferably 0.895 g/cm³ or more. The polyethylene layer has a density of, for example, 0.860 g/cm³ or more and 0.909 g/cm³ or less. The density of the polyethylene layer is measured in accordance with JIS K 7112: 1999 method D (density-gradient tube method, 23°C).

In one embodiment, the polyethylene layer contains a polyethylene with a density of 0.909 g/cm³ or less as a main component and preferably contains a linear low-density polyethylene with a density of 0.909 g/cm³ or less as a main component. The linear low-density polyethylene is, for example, C4-LLDPE, C6-LLDPE, or C8-LLDPE. The polyethylene may be a biomass polyethylene from the perspective of environmental load reduction.

The polyethylene, such as a linear low-density polyethylene, preferably has a density of 0.908 g/cm³ or less, more preferably 0.907 g/cm³ or less, still more preferably 0.906 g/cm³ or less, still more preferably 0.905 g/cm³ or less, particularly preferably 0.904 g/cm³ or less, and preferably 0.860 g/cm³ or more, more preferably 0.870 g/cm³ or more, still more preferably 0.880 g/cm³ or more, still more preferably 0.890 g/cm³ or more, particularly preferably 0.895 g/cm³ or more, for example, 0.860 g/cm³ or more and 0.909 g/cm³ or less.

From the perspective of film formability and processability, the polyethylene with a density of 0.909 g/cm³ or less preferably has a MFR of 0.1 g/10 min or more, more preferably 0.3 g/10 min or more, still more preferably 0.5 g/10 min or more, and preferably 30 g/10 min or less, more preferably 20 g/10 min or less, still more preferably 10 g/10 min or less, particularly preferably 5 g/10 min or less, for example, 0.1 g/10 min or more and 30 g/10 min or less. The MFR of the polyethylene is measured at a temperature of 190°C and a load of 2.16 kg in accordance with JIS K 7210-1: 2014 Method A.

The polyethylene with a density of 0.909 g/cm³ or less may be a metallocene linear low-density polyethylene. The metallocene linear low-density polyethylene is a metallocene ethylene/α-olefin copolymer, that is, an ethylene/α-olefin copolymer produced by using a metallocene catalyst, and has an approximately linear molecular structure.

The α-olefin to be copolymerized with ethylene is, for example, an α-olefin with 3 or more and 12 or less carbon atoms, more specifically, propylene, 1-butene, 1-pentene, 1-hexene, 1-heptene, 1-octene, 4-methyl-1-pentene, 1-decene, or 1-dodecene. Among these, an α-olefin with 3 or more and 8 or less carbon atoms is preferred. The linear low-density polyethylene is, for example, C4-LLDPE, C6-LLDPE, or C8-LLDPE.

The metallocene linear low-density polyethylene preferably has a melting point (Tm) of 110°C or less, more preferably 105°C or less, still more preferably 100°C or less, particularly preferably 95°C or less, and preferably 80°C or more, more preferably 85°C or more, still more preferably 88°C or more, for example, 80°C or more and 110°C or less. Tm is the melting peak temperature measured by DSC in accordance with JIS K 7121: 2012.

Among the metallocene linear low-density polyethylenes, a resin called a metallocene ethylene plastomer is preferred. More specifically, the metallocene ethylene plastomer is a copolymer of ethylene and an α-olefin (ethylene/α-olefin copolymer) produced using a metallocene catalyst. The metallocene ethylene plastomer has a density in a region called very low density, which is relatively low among low densities, a uniform polymer distribution indicated by a narrow molecular weight distribution (Mw/Mn) derived from a polymerization method using a metallocene catalyst, which is a catalyst with a uniform catalytic active site, and plastomeric properties.

The metallocene ethylene plastomer may be a commercial product. The commercial product can be selected from, for example, "Kernel (registered trademark)" series manufactured by Japan Polyethylene Corporation. Examples thereof include "KF260T", "KF360T", and "KS340T".

The ratio (Mw/Mn) of the weight-average molecular weight (Mw) to the number-average molecular weight (Mn) of the polyethylene with a density of 0.909 g/cm³ or less is preferably 3.5 or less, more preferably 3.3 or less, still more preferably 3.0 or less, and is 1.0 or more, preferably 1.5 or more, more preferably 1.8 or more, still more preferably 2.1 or more, for example, 1.0 or more and 3.5 or less.

The Mw/Mn is defined as the ratio (Mw/Mn) of the weight-average molecular weight (Mw) to the number-average molecular weight (Mn) measured by gel permeation chromatography (GPC). Mw and Mn are measured by the following method.
Apparatus: GPC manufactured by Waters Corporation
150C type detector: MIRAN 1A infrared spectrophotometer (measurement wavelength, 3.42 µm)
Column: three AD806M/S columns manufactured by Showa Denko K.K.
[The columns are calibrated by measuring monodisperse polystyrenes manufactured by Tosoh Corporation (0.5 mg/ml solution of each of A500, A2500, F1, F2, F4, F10, F20, F40, and F288), and the logarithms of the elution volume and the molecular weight are approximated using a quadratic equation. The molecular weight of the sample is converted to its polyethylene equivalent using the viscosity formulae specific to polystyrene and polyethylene. The viscosity formula coefficients are α = 0.723 and log K = -3.967 for polystyrene and α = 0.707 and log K =-3.407 for polyethylene.]
Measurement temperature: 140°C
Injection volume: 0.2 ml
Concentration: 20 mg/10 mL
Solvent: o-dichlorobenzene
Flow rate: 1.0 ml/min

The amount of the polyethylene with a density of 0.909 g/cm³ or less in the polyethylene layer is preferably more than 50% by mass, more preferably 60% by mass or more, still more preferably 70% by mass or more, still more preferably 80% by mass or more, particularly preferably 90% by mass or more.

The polyethylene layer may contain the resin material other than polyethylene described above.

The polyethylene layer may contain the additive agent described above.

From the perspective of separation strength, the polyethylene layer with a density of 0.909 g/cm³ or less preferably has a thickness of 0.5 µm or more, more preferably 1 µm or more, still more preferably 3 µm or more, particularly preferably 5 µm or more. From the perspective of processability in film formation, the polyethylene layer with a density of 0.909 g/cm³ or less preferably has a thickness of 50 µm or less, more preferably 40 µm or less, still more preferably 30 µm or less, particularly preferably 20 µm or less. The polyethylene layer has a thickness of, for example, 0.5 µm or more and 50 µm or less.

### (Heat-Fusible Resin Layer)

The second resin layer may include a heat-fusible resin layer as a surface layer of the laminate. The second resin layer may include, as a surface layer of the laminate, a heat-fusible resin layer containing a polyolefin, such as polyethylene or polypropylene, as a main component. Such a heat-fusible resin layer functions as a sealing layer in a packaging bag including the laminate. In a packaging bag produced from a laminate according to the present disclosure, the heat-fusible resin layer is a layer facing the storage space of the packaging bag.

In one embodiment, the second resin layer is formed of a heat-fusible resin layer.

In one embodiment, the polyethylene layer with a density of 0.909 g/cm³ or less is one surface layer of the second resin layer, and the heat-fusible resin layer is the other surface layer of the second resin layer.

The heat-fusible resin layer preferably contains a heat-fusible resin as a main component.

The heat-fusible resin is, for example, a polyolefin resin or an ionomer resin. The polyolefin resin is, for example, a polyethylene, such as a linear low-density polyethylene, a low-density polyethylene, a medium-density polyethylene, a high-density polyethylene, an ethylene-vinyl acetate copolymer, or an ethylene-(meth)acrylate copolymer, a polypropylene, an ethylene-propylene copolymer, a polybutene, or an acid-modified polyolefin, such as an acid-modified polyethylene or an acid-modified polypropylene. The heat-fusible resin is preferably a polyethylene. The heat-fusible resin may be a biomass material from the perspective of environmental load reduction. The polyethylene may be a biomass polyethylene from the perspective of environmental load reduction.

From the perspective of heat sealability, the heat-fusible resin layer preferably contains a polyethylene as a main component. From the perspective of heat sealability, the heat-fusible resin layer preferably contains at least one polyethylene selected from a linear low-density polyethylene and a low-density polyethylene as a main component. The linear low-density polyethylene is, for example, C4-LLDPE, C6-LLDPE, or C8-LLDPE.

The total linear low-density polyethylene and low-density polyethylene content of the heat-fusible resin layer is preferably more than 50% by mass, more preferably 60% by mass or more, still more preferably 70% by mass or more, still more preferably 80% by mass or more, particularly preferably 90% by mass or more.

In one embodiment, the heat-fusible resin layer contains a linear low-density polyethylene and a low-density polyethylene. Such a heat-fusible resin layer has a good balance between the heat sealability and the low contamination (suppression of outgassing) of an article stored in a packaging bag.

The ratio of the linear low-density polyethylene (LLDPE) content to the low-density polyethylene (LDPE) content (LLDPE:LDPE) of the heat-fusible resin layer preferably ranges from 5:95 to 95:5, more preferably 10:90 to 90:10, still more preferably 20:80 to 80:20, on a mass basis.

From the perspective of film formability and processability, the polyolefin in the heat-fusible resin layer preferably has a MFR of 0.1 g/10 min or more, more preferably 0.3 g/10 min or more, still more preferably 0.5 g/10 min or more, and preferably 30 g/10 min or less, more preferably 20 g/10 min or less, still more preferably 10 g/10 min or less, particularly preferably 5 g/10 min or less, for example, 0.1 g/10 min or more and 30 g/10 min or less. The MFR of the polyolefin is measured at a load of 2.16 kg in accordance with JIS K 7210-1: 2014 Method A. The MFR measurement temperature depends on the melting point and the like of the polyolefin and is 190°C for polyethylene and 230°C for polypropylene.

The numerical range of the MFR of the polyethylene in the heat-fusible resin layer may be the same as the numerical range of the MFR of the polyethylene contained in the polyethylene layer of the first resin layer.

From the perspective of the balance between heat resistance and heat sealability, the melting point (Tm) of the polyethylene in the heat-fusible resin layer is preferably 140°C or less, more preferably 130°C or less, still more preferably 125°C or less, and preferably 80°C or more, more preferably 85°C or more, still more preferably 90°C or more, still more preferably 95°C or more, particularly preferably 100°C or more, for example, 80°C or more and 140°C or less. Tm is the melting peak temperature measured by DSC in accordance with JIS K 7121: 2012.

The heat-fusible resin layer may contain the additive agent described above.

The heat-fusible resin layer preferably has a thickness of 5 µm or more, more preferably 10 µm or more, still more preferably 15 µm or more, still more preferably 20 µm or more, particularly preferably 25 µm or more, and preferably 200 µm or less, more preferably 150 µm or less, still more preferably 100 µm or less, still more preferably 80 µm or less, particularly preferably 60 µm or less, for example, 5 µm or more and 200 µm or less.

### (Intermediate Layer)

The second resin layer may further include an intermediate layer between the polyethylene layer with a density of 0.909 g/cm³ or less and the heat-fusible resin layer. The intermediate layer preferably contains a polyolefin, such as polyethylene or polypropylene, as a main component, and more preferably contains a linear low-density polyethylene as a main component from the perspective of the puncture resistance of the laminate. The polyolefin may be a biomass polyolefin from the perspective of environmental load reduction.

The polyethylene is preferably at least one selected from a linear low-density polyethylene, a low-density polyethylene, a medium-density polyethylene, and a high-density polyethylene and, from the perspective of heat sealability, is more preferably at least one selected from a linear low-density polyethylene and a low-density polyethylene, still more preferably a linear low-density polyethylene. The linear low-density polyethylene is, for example, C4-LLDPE, C6-LLDPE, or C8-LLDPE. The polyethylene may be a biomass polyethylene from the perspective of environmental load reduction.

The polyethylene in the intermediate layer preferably has a density of 0.925 g/cm³ or more, more preferably 0.928 g/cm³ or more, still more preferably 0.930 g/cm³ or more. A laminate including such an intermediate layer has high puncture resistance. The polyethylene in the intermediate layer preferably has a density of 0.932 g/cm³ or less, for example, 0.925 g/cm³ or more and 0.932 g/cm³ or less.

The linear low-density polyethylene in the intermediate layer is preferably a linear low-density polyethylene containing 1-octene as a comonomer (an ethylene-1-octene copolymer, C8-LLDPE). A laminate including such an intermediate layer has high puncture resistance. In this case, the linear low-density polyethylene may have a density of 0.860 g/cm³ or more and 0.932 g/cm³ or less or 0.900 g/cm³ or more and 0.932 g/cm³ or less.

From the perspective of film formability and processability, the polyethylene in the intermediate layer preferably has a MFR of 0.1 g/10 min or more, more preferably 0.3 g/10 min or more, still more preferably 0.5 g/10 min or more. From the perspective of film formability and processability, the polyethylene in the intermediate layer preferably has a MFR of 30 g/10 min or less, more preferably 20 g/10 min or less, still more preferably 10 g/10 min or less, particularly preferably 5 g/10 min or less. The MFR is, for example, 0.1 g/10 min or more and 30 g/10 min or less. The MFR of the polyethylene is measured at a temperature of 190°C and a load of 2.16 kg in accordance with JIS K 7210-1: 2014 Method A.

From the perspective of heat resistance, the polyethylene in the intermediate layer preferably has a melting point (Tm) of 100°C or more, more preferably 105°C or more, still more preferably 110°C or more, particularly preferably 120°C or more, and preferably 140°C or less, for example, 100°C or more and 140°C or less. Tm is the melting peak temperature measured by DSC in accordance with JIS K 7121: 2012.

From the perspective of the puncture resistance and recyclability of the laminate, the polyolefin content, such as the polyethylene content, of the intermediate layer is preferably more than 50% by mass, more preferably 60% by mass or more, still more preferably 70% by mass or more, still more preferably 80% by mass or more, particularly preferably 90% by mass or more.

The intermediate layer may contain the resin material described above.

The intermediate layer may contain the additive agent described above.

The intermediate layer preferably has a thickness of 1 µm or more, more preferably 3 µm or more, still more preferably 5 µm or more, particularly preferably 10 µm or more, and preferably 50 µm or less, more preferably 40 µm or less, still more preferably 30 µm or less, particularly preferably 25 µm or less, for example, 1 µm or more and 50 µm or less.

### (Polar Resin Layer)

In one embodiment, the second resin layer includes a polar resin layer in contact with the first resin layer. The polar resin layer is a layer containing a polar resin as a main component. The polar resin is, for example, a polyester, such as poly(ethylene terephthalate), a polyamide, poly(vinyl alcohol), or an ethylene-vinyl alcohol copolymer. The polar resin layer may be a stretched film. The polar resin layer may contain the additive agent described above. The polar resin layer preferably has a thickness of 5 µm or more, more preferably 10 µm or more, and preferably 40 µm or less, more preferably 30 µm or less, for example, 5 µm or more and 40 µm or less.

### (Extruded Resin Layer)

In one embodiment, the second resin layer includes an extruded resin layer containing a polyolefin, such as polyethylene, as a main component. The polyolefin is, for example, polyethylene, polypropylene, or polymethylpentene, preferably polyethylene. From the perspective of adhesiveness, the polyethylene constituting the extruded resin layer is preferably at least one selected from a low-density polyethylene and a linear low-density polyethylene, more preferably a low-density polyethylene. The polyolefin may be a biomass polyolefin from the perspective of environmental load reduction.

In one embodiment, the extruded resin layer functions as an adhesive layer between the heteroatom-containing resin film in the first resin layer and the heat-fusible film in the second resin layer. A laminate including such an extruded resin layer can have a high polyolefin content, such as a high polyethylene content, has high recyclability, has an appropriate separation strength between the first resin layer and the second resin layer, and includes the first resin layer with high separability.

From the perspective of film formability and processability, the polyethylene in the extruded resin layer preferably has a MFR of 0.1 g/10 min or more, more preferably 1 g/10 min or more, still more preferably 3 g/10 min or more, and preferably 30 g/10 min or less, more preferably 25 g/10 min or less, still more preferably 20 g/10 min or less, for example, 0.1 g/10 min or more and 30 g/10 min or less. The MFR of the polyethylene is measured at a temperature of 190°C and a load of 2.16 kg in accordance with JIS K 7210-1: 2014 Method A.

From the perspective of the balance between heat resistance and adhesiveness, the polyethylene in the extruded resin layer preferably has a melting point (Tm) of 100°C or more, and preferably 140°C or less, more preferably 130°C or less, still more preferably 120°C or less, for example, 100°C or more and 140°C or less. Tm is the melting peak temperature measured by DSC in accordance with JIS K 7121: 2012.

The polyolefin content, such as the polyethylene content, of the extruded resin layer is preferably 80% by mass or more, more preferably 85% by mass or more, still more preferably 90% by mass or more, particularly preferably 95% by mass. A laminate including such an extruded resin layer has high recyclability.

The extruded resin layer in the second resin layer preferably has a thickness of 5 µm or more, more preferably 10 µm or more, and preferably 40 µm or less, more preferably 30 µm or less, for example, 5 µm or more and 40 µm or less. A laminate including such an extruded resin layer has high interlayer adhesiveness and recyclability.

The extruded resin layer can be formed, for example, by melting a polyolefin or a polyolefin resin composition and extruding it onto a film. The melting temperature at this time is preferably 280°C or more, more preferably 290°C or more, and preferably 340°C or less, more preferably 335°C or less, for example, 280°C or more and 340°C or less.

### (Anchor Coat Layer)

In one embodiment, the second resin layer may further include an anchor coat layer between the polar resin layer and the extruded resin layer. This can improve, for example, the interlayer adhesiveness in the second resin layer. The anchor coat layer is formed of an anchor coating agent. The anchor coating agent is, for example, a polyurethane, polyester, polyether, polyolefin, or epoxy resin anchor coating agent. The anchor coat layer may contain the additive agent described above. The anchor coat layer preferably has a thickness of 0.05 µm or more, more preferably 0.1 µm or more, still more preferably 0.2 µm or more, and preferably 3 µm or less, more preferably 2 µm or less, still more preferably 1 µm or less, for example, 0.05 µm or more and 3 µm or less.

### <Design Layer>

A laminate or a packaging bag according to the present disclosure may further include a design layer, such as a print layer. The design layer has an image. The image is, for example, a letter, a figure, a pattern, a symbol, or a combination thereof. The image may include textual information, such as the product name, the name of an article in the packaging bag, the manufacturer, and the list of ingredients. The image may be a monochrome plain image (so-called solid image).

The design layer may be provided, for example, on the surface of the first resin layer. For example, the design layer may be provided on the surface (outer surface) of the first resin layer opposite the surface facing the second resin layer.

In one embodiment, the design layer contains a colorant.

The colorant is, for example, a pigment, such as an inorganic pigment or an organic pigment, or a dye, such as an acid dye, a direct dye, a disperse dye, an oil-soluble dye, a metal-containing oil-soluble dye, or a sublimable dye. The colorant may also be a fluorescent material, such as a UV light emitting material that absorbs ultraviolet light and emits fluorescence or an infrared light emitting material that absorbs infrared light and emits fluorescence.

The colorant content of the design layer is preferably 1% by mass or more, more preferably 3% by mass or more, still more preferably 5% by mass or more, and preferably 90% by mass or less, more preferably 70% by mass or less, still more preferably 50% by mass or less, for example, 1% by mass or more and 90% by mass or less.

The design layer may contain the resin material described above and may contain the additive agent described above. The resin material content of the design layer is preferably 10% by mass or more, more preferably 30% by mass or more, still more preferably 50% by mass or more, and preferably 99% by mass or less, more preferably 97% by mass or less, still more preferably 95% by mass or less, for example, 10% by mass or more and 99% by mass or less.

The design layer can be formed, for example, using an ink composition containing the components described above and optionally a solvent. A method for forming the design layer is, for example, a gravure printing method, an offset printing method, a flexographic printing method, a screen printing method, a typography method, or a transfer printing method. In one embodiment, from the perspective of environmental load reduction, a flexographic printing method may be used.

The design layer preferably has a thickness of 0.1 µm or more, more preferably 0.2 µm or more, still more preferably 0.3 µm or more, and preferably 10 µm or less, more preferably 5 µm or less, still more preferably 3 µm or less, for example, 0.1 µm or more and 10 µm or less.

### <Configuration and Production Method of Laminate>

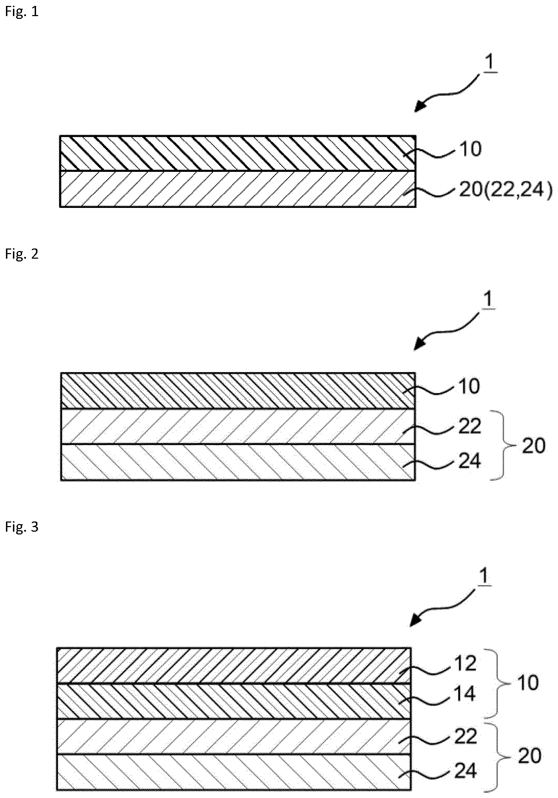

Figs. 1 to 5 and Fig. 10 show schematic cross-sectional views of an embodiment of a laminate according to the present disclosure. In one embodiment, these laminates are laminates as tubular films or laminates as a front sheet and a back sheet constituting a packaging bag.

A laminate 1 in Fig. 1 includes a first resin layer 10 and a second resin layer 20 in this order in the thickness direction. The second resin layer 20 may be, for example, a polyethylene layer 22 with a density of 0.909 g/cm³ or less or a heat-fusible resin layer 24.

A laminate 1 in Fig. 2 is the same as the laminate 1 in Fig. 1 except that the second resin layer 20 includes the polyethylene layer 22 with a density of 0.909 g/cm³ or less and the heat-fusible resin layer 24. The polyethylene layer 22 is in contact with the first resin layer 10.

A laminate 1 in Fig. 3 is the same as the laminate 1 in Fig. 2 except that the first resin layer 10 includes a polyolefin layer 12 and a heteroatom-containing resin layer 14. The heteroatom-containing resin layer 14 is in contact with the polyethylene layer 22.

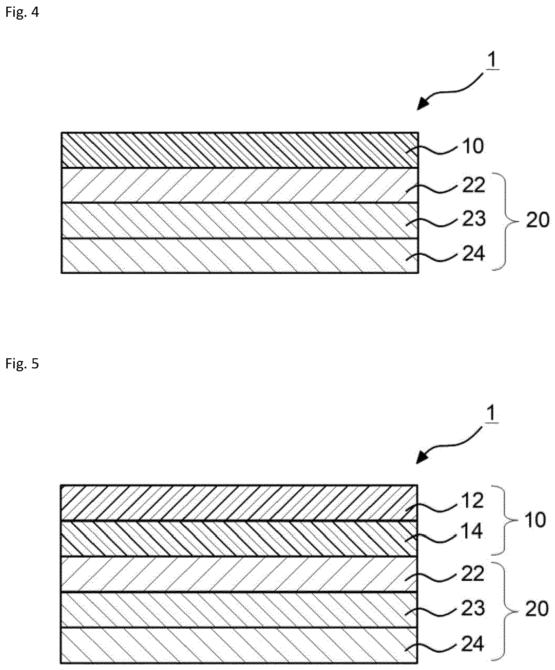

A laminate 1 in Fig. 4 is the same as the laminate 1 in Fig. 2 except that the second resin layer 20 further includes an intermediate layer 23 between the polyethylene layer 22 and the heat-fusible resin layer 24.

A laminate 1 in Fig. 5 is the same as the laminate 1 in Fig. 4 except that the first resin layer 10 includes the polyolefin layer 12 and the heteroatom-containing resin layer 14.

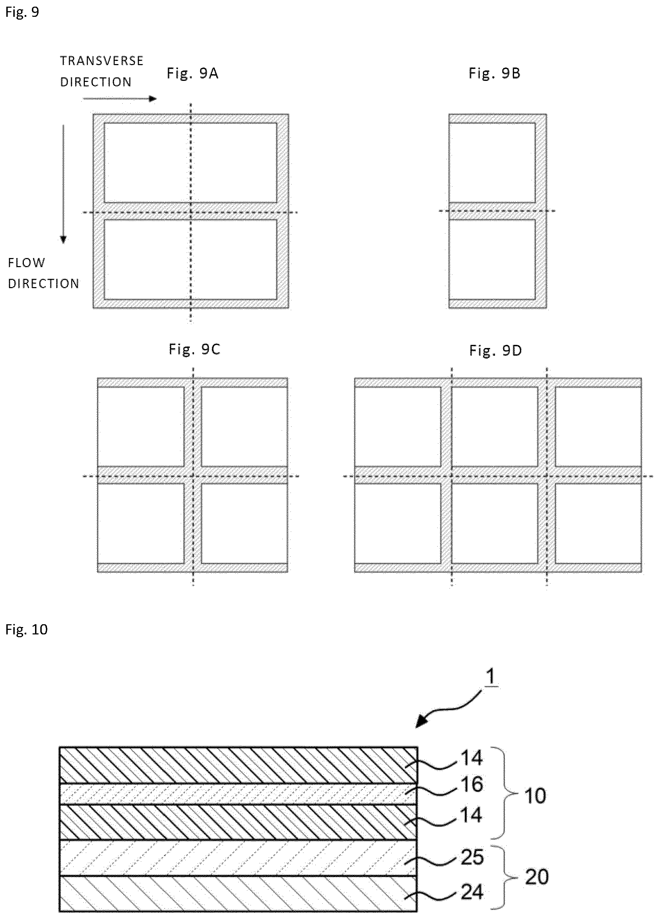

A laminate 1 in Fig. 10 includes a first resin layer 10 and a second resin layer 20 in this order in the thickness direction. The first resin layer 10 includes the heteroatom-containing resin layer 14, an adhesive layer 16, and the heteroatom-containing resin layer 14. The second resin layer 20 includes an extruded resin layer 25 and the heat-fusible resin layer 24. A laminated film corresponding to the first resin layer 10 and a heat-fusible film corresponding to the heat-fusible resin layer 24 are stacked with the extruded resin layer 25 interposed therebetween.

From the perspective of the strength and heat resistance of the laminate, a laminate according to the present disclosure preferably has a total thickness of 15 µm or more, more preferably 20 µm or more, still more preferably 30 µm or more, still more preferably 40 µm or more, particularly preferably 50 µm or more. From the perspective of the processability of the laminate, a laminate according to the present disclosure preferably has a total thickness of 300 µm or less, more preferably 250 µm or less, still more preferably 200 µm or less, still more preferably 150 µm or less, particularly preferably 100 µm or less. A laminate according to the present disclosure has a total thickness of, for example, 15 µm or more and 300 µm or less.

A laminate according to the present disclosure is preferably an unstretched film from the perspective of heat sealability. The unstretched film is a film that has not been subjected to stretching treatment and is, for example, an extruded film that has not been subjected to stretching treatment. The "unstretched film" is a concept including not only a film that is not stretched at all but also a film that is slightly stretched due to tension applied during film formation by an inflation method or the like.

In one embodiment, a separable film obtained from a laminate according to the present disclosure has a higher Young's modulus than a sealant film obtained from a laminate according to the present disclosure. Such a laminate includes a first resin layer with high separability. The Young's moduli measured in both the machine direction (flow direction) (MD) and the transverse direction (TD) of a film preferably have such a magnitude relationship.

The Young's modulus of the separable film is preferably 1.3 times or more, more preferably 1.5 times or more, still more preferably 1.8 times or more, the Young's modulus of the sealant film. The Young's modulus of the separable film is preferably 20 times or less, more preferably 15 times or less, still more preferably 10 times or less, the Young's modulus of the sealant film. The Young's modulus of the separable film is, for example, 1.3 times or more and 20 times or less the Young's modulus of the sealant film. The Young's modulus in the MD of the separable film and the Young's modulus in the MD of the sealant film preferably satisfy such a condition. The Young's modulus in the TD of the separable film and the Young's modulus in the TD of the sealant film preferably satisfy such a condition.

The sealant film preferably has a Young's modulus of 10 MPa or more, more preferably 30 MPa or more, still more preferably 50 MPa or more, and preferably 500 MPa or less, more preferably 400 MPa or less, still more preferably 330 MPa or less, for example, 10 MPa or more and 500 MPa or less. The Young's modulus in the MD and TD of the sealant film preferably satisfies such a condition.

A laminate according to the present disclosure preferably has a Young's modulus of 30 MPa or more, more preferably 50 MPa or more, still more preferably 100 MPa or more, still more preferably 150 MPa or more, particularly preferably 200 MPa or more, and preferably 800 MPa or less, more preferably 700 MPa or less, still more preferably 600 MPa or less, still more preferably 500 MPa or less, particularly preferably 400 MPa or less, for example, 30 MPa or more and 800 MPa or less. The Young's modulus in the MD and TD of the laminate preferably satisfies such a condition.

The Young's modulus (MPa) is measured in accordance with JIS K7161-1: 2014 using a tensile compression tester as a measuring instrument at a test speed of 5 mm/s. Details of the measurement conditions are described in Examples.

In one embodiment, a separable film obtained from a laminate according to the present disclosure has a lower loop stiffness value than a sealant film obtained from a laminate according to the present disclosure. Such a laminate includes a first resin layer with high separability. The loop stiffness value measured in both the machine direction (flow direction) (MD) and the transverse direction (TD) of a film preferably have such a magnitude relationship. The loop stiffness value is a physical property affected by the thickness of a film in addition to the hardness of the film. Thus, the magnitude relationship between the loop stiffness values of the separable film and the sealant film is opposite to the magnitude relationship between the Young's moduli of the separable film and the sealant film.

The loop stiffness value of the separable film is preferably 0.8 times or less, more preferably 0.6 times or less, still more preferably 0.4 times or less, the loop stiffness value of the sealant film. The loop stiffness value of the separable film is preferably 0.05 times or more, more preferably 0.1 times or more, still more preferably 0.15 times or more, the loop stiffness value of the sealant film. The loop stiffness value of the separable film is, for example, 0.05 times or more and 0.8 times or less the loop stiffness value of the sealant film. The loop stiffness value in the MD of the separable film and the loop stiffness value in the MD of the sealant film preferably satisfy such a condition. The loop stiffness value in the TD of the separable film and the loop stiffness value in the TD of the sealant film preferably satisfy such a condition.

The sealant film preferably has a loop stiffness value of 0.1 g or more, more preferably 0.2 g or more, still more preferably 0.3 g or more, and, for example, 5.0 g or less, preferably 3.0 g or less, more preferably 2.0 g or less, still more preferably 1.0 g or less, for example, 0.1 g or more and 5.0 g or less. The Young's modulus in the MD and TD of the sealant film preferably satisfies such a condition.

A laminate according to the present disclosure preferably has a loop stiffness value of 0.5 g or more, more preferably 1.0 g or more, still more preferably 1.5 g or more, still more preferably 2.0 g or more, particularly preferably 2.5 g or more, and, for example, 25.0 g or less, preferably 8.0 g or less, more preferably 7.0 g or less, still more preferably 6.0 g or less, still more preferably 5.0 g or less, particularly preferably 4.0 g or less, for example, 0.5 g or more and 25.0 g or less. The loop stiffness value in the MD and TD of the laminate preferably satisfies such a condition.

The loop stiffness value (g) is measured using a loop stiffness tester as a measuring instrument at an indentation speed of 3.3 mm/s. Details of the measurement conditions are described in Examples.

A laminate according to the present disclosure can be produced by a known method. The laminate is preferably a coextruded multilayer film and can be produced, for example, by a coextrusion film formation method, more preferably a T-die method or an inflation method. A laminate according to the present disclosure can be formed, for example, by extruding a resin or a resin composition for forming each layer in a molten state from an extruder.

In this method, a first surface of the second resin layer in contact with the first resin layer is not directly exposed to the outside air both during and after the production of the laminate. This can suppress the adhesion of a foreign material, such as dust or dirt, to the first surface of the second resin layer during the period from laminate production to the separation and removal of the first resin layer. When a packaging bag is used, the first surface of the second resin layer is exposed by separating and removing the first resin layer from the second resin layer of the laminate. The first surface is a clean surface to which adhesion of a foreign material is suppressed.

In one embodiment, a laminate according to the present disclosure can be produced by stacking a film corresponding to the first resin layer and a heat-fusible film corresponding to the heat-fusible resin layer with an extruded resin layer containing a polyolefin, such as polyethylene, as a main component interposed therebetween. More specifically, a laminate can be produced by stacking the above films by a melt extrusion lamination method, particularly by a sandwich lamination method, using a molten resin containing a polyolefin, such as polyethylene, as a main component. Lamination in a clean environment can suppress contamination of the first surface of the second resin layer.

The heat-fusible film corresponding to the heat-fusible resin layer is preferably an unstretched resin film from the perspective of heat sealability. The resin film can be produced, for example, by a casting method, a T-die method, or an inflation method.

The polyolefin resin content of a laminate according to the present disclosure may be 70% by mass or more, 75% by mass or more, 80% by mass or more, 85% by mass or more, or 90% by mass or more, for example, 70% by mass or more and 100% by mass or less, based on the mass of the laminate. Such a laminate has high recyclability. The polyolefin resin content of a laminate according to the present disclosure may be 99% by mass or less, 95% by mass or less, or 90% by mass or less, based on the mass of the laminate. The "polyolefin resin content of the laminate" can be read as "the polyethylene resin content of the laminate" or "the polypropylene resin content of the laminate".

### [Packaging Bag]

A laminate according to the present disclosure can be suitably used as a packaging material constituting a packaging bag. The second resin layer in the laminate constitutes the inner surface facing the storage space of the packaging bag (a surface with which an article in the packaging bag comes into contact). The following description can also be applied as desired to packaging bags according to first and second aspects described later.

An example of a usage form of a packaging bag according to the present disclosure is described below.

An article used in a clean environment, such as a clean room, is required to have high cleanliness. A packaging bag containing the article is brought into the clean environment and is opened. Thus, the packaging bag is also required to have high cleanliness. Thus, when the packaging bag containing the article is brought into the clean environment, it is necessary to suppress the adhesion of a foreign material, such as dust or dirt, to a surface (for example, the outer surface and/or the inner surface) of the packaging bag and entry of the foreign material into the clean environment along with the packaging bag. A packaging bag including a laminate according to the present disclosure or a packaging bag according to the present disclosure can be used, for example, to suppress the entry of such a foreign material as described below.

First, an article is stored in a packaging bag according to the present disclosure in a clean environment, degassing is performed by vacuum degassing or the like as required, and the opening of the packaging bag is sealed to produce a package containing the article in the packaging bag. The degassing is not limited to vacuum degassing as long as the gas in the packaging bag can be removed. For example, the packaging bag may be pressed from the outside using a pressing member for degassing. The package is brought into an anteroom in the clean environment. The first resin layer (separable film) (in the laminate) constituting the packaging bag is separated and removed. This exposes the first surface of the second resin layer (sealant film or packaging film) (in the laminate) constituting the packaging bag. As described above, the first surface of the second resin layer is a clean surface to which adhesion of a foreign material is suppressed. The packaging bag obtained by separating and removing the first resin layer has a small amount of foreign material adhering to the surface thereof. Such a packaging bag is brought into the clean environment. In the clean environment, the packaging bag is opened to take out and use the article. In one embodiment (for example, a packaging bag according to a first aspect described later), the second surface of the second resin layer (the inner surface of the packaging bag) is also a clean surface to which adhesion of a foreign material is suppressed. In this manner, it is possible to suppress the entry of a foreign material into the clean environment along with the packaging bag.

According to the above configuration, a packaging bag according to the present disclosure does not need to be configured as a double bag or a triple or more bag including at least an inner bag and an outer bag. However, there is no limitation on the use of a packaging bag according to the present disclosure as an outer bag or the like in a double bag or a triple or more bag.

In the present disclosure, an article to be contained in a packaging bag is, for example, a semiconductor product, such as an IC or an LSI, a semiconductor-related component, such as a valve for a semiconductor device or a filter for producing a semiconductor, a precision machine, a magnetic disk, a silicon wafer, an O-ring, bellows, a pharmaceutical product, a product for regenerative medicine, or a chemical liquid product, such as a diluent for a blood cell inspection device or a hemodialysis solution. The article may also be a dustproof cloth, dustproof gloves, or an instrument used in a clean environment.

In one embodiment, a packaging bag according to the present disclosure includes a laminate according to the present disclosure. In one embodiment, a packaging bag according to the present disclosure includes a front sheet constituting the front surface and a back sheet constituting the back surface. The front sheet may be composed of one laminate, and the back sheet may be composed of another laminate. The front sheet and the back sheet may be integrated with each other or may be composed of a single laminate. The front sheet and the back sheet may be constituted by a single tubular laminate.

The packaging bag typically has a heat-sealed portion (a heat seal portion, hereinafter also referred to as a "sealed portion"). The packaging bag has, for example, a sealed portion formed by fusing the second resin layers in the laminate. The heat sealing method is, for example, bar sealing, rotating roll sealing, belt sealing, impulse sealing, high-frequency sealing, or ultrasonic sealing.

The packaging bag is, for example, one of various types, such as a standing pouch type, a side seal type, a two-sided seal type, a three-sided seal type, a four-sided seal type, an envelope seal type, a butt seal type (pillow seal type), a ribbed seal type, a flat bottom seal type, a square bottom seal type, and a gusset type. The planar shape of the packaging bag may be, for example, a rectangular shape or a shape other than a rectangular shape, such as a circular shape.

An example of producing a packaging bag using a laminate according to the present disclosure is described below. Two laminates are prepared. The two laminates are stacked with the second resin layers of the laminates facing each other. A sealed portion is then formed on three sides, that is, the left and right sides and the lower side, which are outer peripheral portions of the laminate. If desired, a half-cut line is then formed. In this manner, a packaging bag with an opening on one side is produced.

Instead of using two laminates according to the present disclosure, a packaging bag may be produced by preparing one laminate according to the present disclosure, folding the laminate so that the second surface of the second resin layer of the laminate faces inward, and then forming a heat-sealed portion on two sides of the left and right outer peripheral portions. In this manner, a packaging bag with an opening on one side is produced. In this case, a sealed portion may also be formed at the folded lower portion, and the lower side of the sealed portion at the lower portion may be cut and removed. Thus, the first resin layer can be separated and removed from each of the front sheet and the back sheet of the packaging bag.

A packaging bag may be produced as described below. A laminate according to the present disclosure is formed into a tubular film by an inflation method. Both end portions of the tubular film in the width direction perpendicular to the flow direction (machine direction) are cut in the flow direction. Both end portions of the film in the width direction are then heat-sealed in the flow direction, and a portion of the film extending in the width direction is heat-sealed at a certain interval in the flow direction. The film is then cut in the flow direction at the central portion of the film in the width direction and is cut in the width direction at the heat-sealed portion extending in the width direction. Fig. 9A is a front view of the film, wherein the hatched portion indicates the heat-sealed portion, and the dotted line indicates the portion to be cut. In this manner, a plurality of packaging bags each having an opening on one side are produced.

A packaging bag may be produced as described below. Both end portions of the tubular film in the width direction are cut in the flow direction. One end portions of the film in the width direction is then heat-sealed in the flow direction, and a portion of the film extending in the width direction is heat-sealed at a certain interval in the flow direction. The film is then cut in the width direction at the heat-sealed portion extending in the width direction (see Fig. 9B). In this manner, a plurality of packaging bags each having an opening on one side are produced.

A packaging bag may be produced as described below. Both end portions of the tubular film in the width direction are cut in the flow direction. A portion of the film extending in the flow direction is then heat-sealed at the central portion in the width direction, or a portion of the film extending in the flow direction is then heat-sealed at a certain interval in the width direction, and a portion of the film extending in the width direction is heat-sealed at a certain interval in the flow direction. The portion of the film to be heat-sealed in the flow direction may be, for example, 1 row or more and 5 rows or less, or 1 row or more and 3 rows or less. The film is then cut in the flow direction at the heat-sealed portion extending in the flow direction and is cut in the width direction at the heat-sealed portion extending in the width direction (see Figs. 9C and 9D). In this manner, a plurality of packaging bags each having an opening on one side are produced.

A half-cut line may be formed at a desired time point.

An article is inserted from the opening of the non-heat-sealed portion of the packaging bag produced as described above. The opening of the packaging bag can then be heat-sealed to form a heat-sealed portion and produce a package containing the article in the packaging bag.

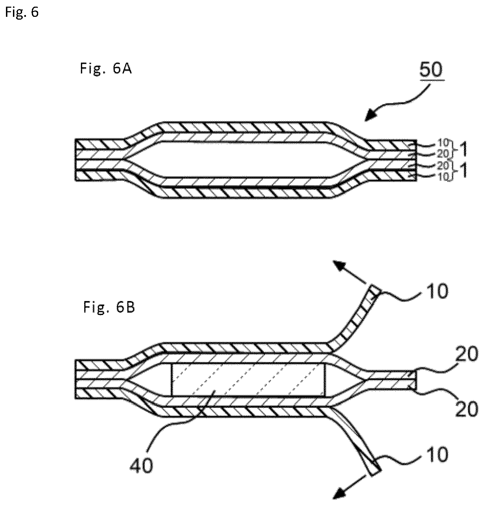

Fig. 6a is a cross-sectional view of an embodiment of a packaging bag according to the present disclosure. A sealed portion of a packaging bag 50 is formed by stacking and heat-sealing the laminates 1 each including the first resin layer 10 and the second resin layer 20.

Fig. 6b is a cross-sectional view of an embodiment of a usage form of a packaging bag according to the present disclosure. For example, the first resin layers 10, 10 are separated from the second resin layers 20, 20 of the packaging bag 50 immediately before the packaging bag 50 is brought into a clean room.

The packaging bag may have an easy-to-open portion. The easy-to-open portion is, for example, a notch portion serving as a starting point for tearing the packaging bag, or an easy-to-open line formed by laser processing, with a cutter, or the like as a tear line for the packaging bag.

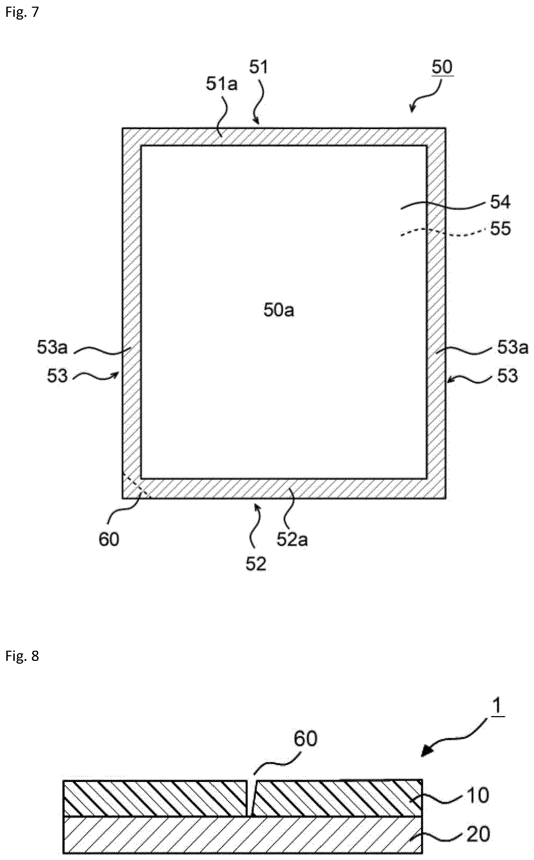

Fig. 7 is a front view of an embodiment of a packaging bag according to the present disclosure. An example of the packaging bag is described below with reference to Fig. 7. A packaging bag 50 in Fig. 7 has a storage portion (storage space) 50a for storing an article. The packaging bag 50 includes an upper portion 51, a lower portion 52, and side portions 53, 53, and has an approximately rectangular profile in the front view. It should be noted that the designations "upper portion", "lower portion", "side portion", and the like and the terms "upper", "lower", and the like merely represent relative positions and directions of the packaging bag 50 and constituent elements thereof. The orientation and the like of the packaging bag 50 at the time of transport and use are not limited by the designations and terms in the present description.

As illustrated in Fig. 7, the packaging bag 50 includes a front sheet 54 constituting the front surface and a back sheet 55 constituting the back surface. In the packaging bag 50 illustrated in Fig. 7, the front sheet 54 and the back sheet 55 are each formed of a single laminate. Although not shown, in the packaging bag 50, the front sheet 54 and the back sheet 55 may be integrated with each other or may be formed of one laminate. At this time, the laminate is, for example, folded back at the lower portion 52 so that the second resin layer constitutes the inner surface of the packaging bag 50. In this case, the packaging bag 50 has a sealed portion extending along three sides of the packaging bag 50.

The inner surfaces of the front sheet 54 and the back sheet 55 are joined together at the sealed portion. In the front view of the packaging bag 50 in Fig. 7, the sealed portion is hatched. The sealed portion is a portion where the sealant layers (second resin layers) of the laminate(s) are joined together.

As illustrated in Fig. 7, the packaging bag 50 has a sealed portion extending along four sides of the packaging bag 50. The sealed portion includes an upper sealed portion 51a extending along the upper portion 51, a pair of side sealed portions 53a, 53a extending along the pair of side portions 53, 53, and a lower sealed portion 52a extending along the lower portion 52. In the packaging bag 50 in a state before an article is stored (a state in which an article is not stored), the upper portion 51 of the packaging bag 50 has an opening (not shown). After an article is stored in the packaging bag 50, the inner surface of the front sheet 54 and the inner surface of the back sheet 55 are joined together at the upper portion 51 to form the upper sealed portion 51a and seal the packaging bag 50.

The upper sealed portion 51a, the side sealed portions 53a, 53a, and the lower sealed portion 52a are formed by joining the inner surface of the front sheet 54 and the inner surface of the back sheet 55.

A sealed portion may be formed by any method of joining the facing sheets 54 and 55 to seal the packaging bag 50. For example, the inner surfaces of the sheets are melted by heating or the like and are fused or heat-sealed to form a sealed portion.

In one embodiment, the laminate (for example, the front sheet and/or the back sheet) constituting the packaging bag has a half-cut line. The half-cut line refers to a cut line that extends from the surface of the first resin layer constituting the laminate to the interface between the first resin layer and the second resin layer but does not penetrate the laminate. The first resin layer in the laminate can be easily separated and removed by hand using the half-cut line as a starting point. The half-cut line may be a half-cut line described in the packaging bag according to the second aspect described later.

The half-cut line may be formed at any position. For example, a packaging bag with a rectangular planar shape preferably has a half-cut line in at least one corner portion of the packaging bag. The half-cut line is preferably formed on both the front sheet and the back sheet of the packaging bag. In one embodiment, the half-cut line extends from a side outer edge to a lower outer edge of the front sheet and the back sheet at a corner portion of the front sheet and the back sheet. The half-cut line can be formed, for example, by mechanically making a cut in the thickness direction of the laminate using a cutter or the like or by irradiating the laminate with a laser.

The half-cut line is more specifically described with reference to Figs. 7 and 8.

As illustrated in Fig. 7, a half-cut line 60 is formed at one corner portion of the sealed portion of the packaging bag 50. As illustrated in Fig. 7, the half-cut line 60 extends from the outer edge of the side portion 53 of the packaging bag 50 to the outer edge of the lower portion 52. The half-cut line 60 is formed on the front and back sides of the packaging bag 50, that is, on the front sheet 54 and the back sheet 55. Fig. 8 is an enlarged view of the half-cut line provided in the laminate constituting the packaging bag.

Since the half-cut line 60 is formed on the front and back sides of the packaging bag 50, the corner portion of the packaging bag 50 can be bent along the half-cut line 60 formed on one surface immediately before the packaging bag 50 containing an article is brought into a clean room. This enables the first resin layer 10 to be easily separated from the second resin layer 20. The corner portion of the packaging bag 50 can then be bent in the same manner along the half-cut line 60 formed on the other surface to separate the other first resin layer 10 from the second resin layer 20.

### <Packaging Bag according to First Aspect>

The packaging bag according to the first aspect of the present disclosure and one aspect of a method for producing the packaging bag are described below. According to these aspects, it is possible to provide a packaging bag that can store an article to be used in a clean environment and has high cleanliness, and a method for producing the packaging bag.

The packaging bag according to the first aspect of the present disclosure includes a front sheet and a back sheet facing the front sheet. The front sheet constitutes the front surface of the packaging bag. The back sheet constitutes the back surface of the packaging bag. The terms "the front surface" and "the back surface" of the sheet merely represent the front surface and the back surface of the packaging bag relative to each other. The orientation and the like of the packaging bag at the time of transport and use are not limited by the front surface and the back surface in the present description.

Each of the front sheet and the back sheet includes at least a first resin layer and a second resin layer constituting the inner surface of the packaging bag. In one embodiment, the first resin layer constitutes the outer surface of the packaging bag. The second resin layer constitutes the inner surface facing the storage space of the packaging bag (a surface with which an article in the packaging bag comes into contact). In the front sheet and the back sheet, the first resin layer is provided so as to be separable from the second resin layer. The details of the first resin layer and the second resin layer are as described above, and the detailed description thereof is omitted in this section. In the following description, a laminate according to the present disclosure described above can be used as the front sheet and/or the back sheet.

The front sheet and the back sheet are derived from the same tubular film produced by a coextrusion inflation method. The tubular film includes at least a first resin layer constituting the tube outer surface and a second resin layer constituting the tube inner surface. As described later, the inner surface is less likely to be exposed to the outside air and the like during production of the tubular film and the packaging bag and therefore has high cleanliness. A laminate according to the present disclosure described above can be used as the tubular film.

The second resin layer has a first surface and a second surface facing the first surface. The first resin layer is provided on the first surface of the second resin layer. The first resin layer is in contact with the second resin layer, more specifically, in contact with the first surface of the second resin layer. Thus, the first surface of the second resin layer is typically a separation surface from which the first resin layer is separated.

The number of particles with a particle size of 0.2 µm or more adhering to the inner surface of the packaging bag according to the first aspect of the present disclosure is preferably 100 particles/cm² or less, more preferably 80 particles/cm² or less, still more preferably 60 particles/cm² or less, still more preferably 40 particles/cm² or less, particularly preferably 20 particles/cm² or less, 15 particles/cm² or less, 10 particles/cm² or less, or 5 particles/cm² or less. The lower limit of the number of particles may be, for example, but is not limited to, 0.1 particles/cm², 0.5 particles/cm², or 1 particle/cm². The number of particles is measured with a particle counter. Details of the measurement method are described in Examples. The number of particles adhering to the inner surface of the packaging bag can be suppressed by producing a packaging bag by the production method described later.

The packaging bag has a sealed portion formed by joining (for example, fusing) a portion of the second resin layer in the front sheet and a portion of the second resin layer in the back sheet. The sealed portion is, for example, a heat-sealed portion (a heat seal portion).

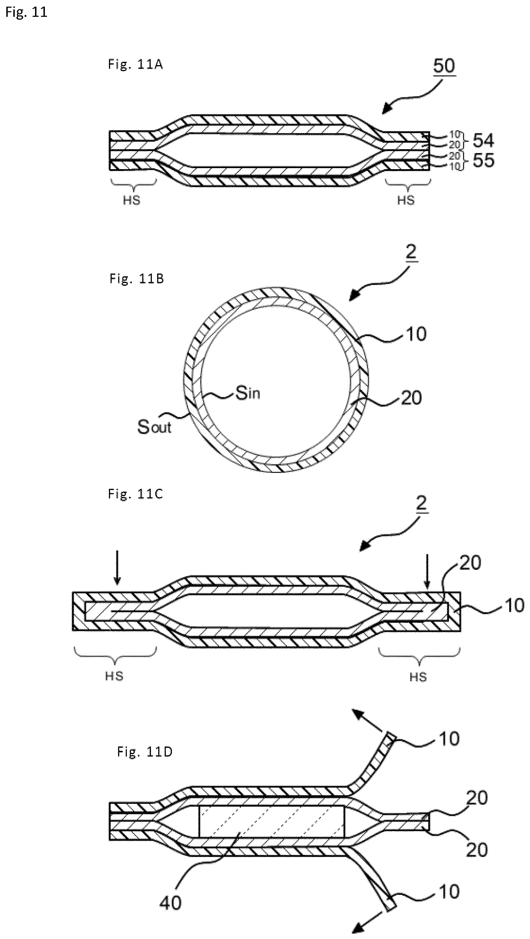

Fig. 11a is a cross-sectional view of an embodiment of the packaging bag according to the first aspect of the present disclosure. A packaging bag 50 includes a front sheet 54 and a back sheet 55. The front sheet 54 includes a first resin layer 10 and a second resin layer 20. The back sheet 55 includes the first resin layer 10 and the second resin layer 20. The packaging bag 50 has a sealed portion HS formed by joining a portion of the second resin layer 20 in the front sheet 54 and a portion of the second resin layer 20 in the back sheet 55.

The packaging bag 50 is formed, for example, as described below.

As illustrated in Fig. 11b, a tubular film 2 including at least the first resin layer 10 constituting the tube outer surface Sₒᵤₜ and the second resin layer 20 constituting the tube inner surface Sᵢₙ is formed by a coextrusion inflation method, and the film 2 is deformed (more specifically, folded) into a flat shape. As illustrated in Fig. 11c, portions of the second resin layer 20 that face each other in the tubular film 2 are joined together to form the sealed portion HS. In Fig. 11c, to make the figure easy to see, the tubular film 2 is not deformed into a flat shape. Both end portions of the heat-sealed tubular film 2 are cut off at a predetermined width. The sealed portion HS may be formed after the cutting. A predetermined cutting process is then performed. The packaging bag 50 is produced in this manner. Thus, the packaging bag 50 is produced by directly making a bag from the tubular film 2 deformed into the flat shape or from the stacked films produced by cutting the tubular film 2. Details of a method for producing the packaging bag 50 are described later.

The phrase "packaging bag produced by directly making a bag from the tubular film deformed into the flat shape or from the stacked films produced by cutting the tubular film" means a packaging bag produced by forming a sealed portion and cutting the film without releasing the contact between the second resin layers in face-to-face contact with each other in the tubular film deformed into the flat shape or in the stacked films produced by cutting the tubular film. Before the formation of the sealed portion, although the tubular film may be cut, for example, in the flow direction of the tubular film, the bag-making process is performed without releasing the contact between the second resin layers in the stacked films after the cutting.

"Without releasing the contact between the second resin layers in face-to-face contact with each other" means that, in the case of a flattened tubular film, the flattened state is maintained without introducing the outside air into the tube, and in the case of stacked films, the stacked state of the films is maintained without separating the stacked films from each other by cutting the tubular film. The facing second resin layers may not be in contact with each other in a small region within the scope of not impairing the objects of the present disclosure.

Fig. 11d is a cross-sectional view of an embodiment of a usage form of the packaging bag according to the first aspect of the present disclosure. For example, the first resin layers 10, 10 are separated from the second resin layers 20, 20 of the packaging bag 50 immediately before the packaging bag 50 is brought into a clean room.

As illustrated in Fig. 7, the packaging bag 50 includes a front sheet 54 constituting the front surface and a back sheet 55 constituting the back surface. In one embodiment of the packaging bag 50 illustrated in Fig. 7, the front sheet 54 and the back sheet 55 are derived from the same tubular film produced by a coextrusion inflation method.

From the perspective of the strength and heat resistance of the packaging bag, the front sheet and the back sheet preferably have a thickness of 15 µm or more, more preferably 20 µm or more, still more preferably 30 µm or more, still more preferably 40 µm or more, particularly preferably 50 µm or more. From the perspective of the processability of the packaging bag, the front sheet and the back sheet preferably have a thickness of preferably 300 µm or less, more preferably 250 µm or less, still more preferably 200 µm or less, still more preferably 150 µm or less, particularly preferably 100 µm or less. The front sheet and the back sheet have a thickness of, for example, 15 µm or more and 300 µm or less.

The front sheet and the back sheet are preferably unstretched films from the perspective of heat sealability. The "unstretched film" is a concept including not only a film that is not stretched at all but also a film that is stretched due to tension applied during film formation by a coextrusion inflation method or the like.

In one embodiment, the polyolefin resin content of the front sheet and the back sheet may be 70% by mass or more, 75% by mass or more, 80% by mass or more, 85% by mass or more, or 90% by mass or more, based on the mass of the sheet. Such a packaging bag has high recyclability. The polyolefin resin content of the front sheet and the back sheet may be 99% by mass or less, 95% by mass or less, or 90% by mass or less, based on the mass of the sheet. The polyolefin resin content of the front sheet and the back sheet is, for example, 70% by mass or more and 100% by mass or less. The "polyolefin resin content" can be read as "the polyethylene resin content" or "the polypropylene resin content".

The packaging bag according to the first aspect may have the half-cut line and/or the easy-to-open portion described above. The packaging bag according to the first aspect may have a half-cut line described in the packaging bag according to the second aspect.

A method for producing the packaging bag according to the first aspect of the present disclosure includes a step of forming a tubular film including at least a first resin layer constituting the tube outer surface and a second resin layer containing a polyolefin as a main component and constituting the tube inner surface by a coextrusion inflation method and deforming the tubular film into a flat shape (hereinafter also referred to as a "step (1)"), and a step of performing a bag-making process on the tubular film deformed into the flat shape or a film produced by cutting the tubular film and stacking the cut films without releasing the contact between the second resin layers in face-to-face contact with each other to produce the packaging bag (hereinafter also referred to as a "step (2)").

### (Step (1))

The step (1) includes forming, by the coextrusion inflation method, a tubular film including at least a first resin layer constituting the tube outer surface and a second resin layer containing a polyolefin as a main component and constituting the tube inner surface, and deforming (more specifically, folding) the tubular film into a flat shape.

A melt extruder used in the coextrusion inflation method is, for example, a single-screw extruder, a twin-screw extruder, a vent extruder, or a tandem extruder. Since the packaging bag has a multilayer structure, a multilayer ring die and a plurality of melt extruders are used. The coextrusion inflation method includes an air-cooled inflation method and a water-cooled inflation method. Due to its high film-forming speed and ability to produce a wide film, the air-cooled inflation method is preferred, and an upward air-cooled inflation method is more preferred.

One embodiment of the coextrusion inflation method is described below.

First, a material constituting each layer is supplied to an extruder, is melted, and is extruded into a tubular shape by a multilayer ring die. At this time, air is fed into the tubular molten resin from below to expand the diameter of the tube to a predetermined size, and cooling air is fed from the outside of the tube to form a tubular film. The tubular film is then deformed into a flat shape using a stabilizer and a pinch roll while being pulled up with the pinch roll. At this time, facing portions of the inner surface, that is, of the second resin layer, in the tubular film are in contact with each other. If desired, the flattened tubular film is wound with a winding unit to produce a roll.

The coextrusion inflation method easily enables one-step production of a tubular film with the first resin layer and the second resin layer stacked together. The first resin layer is provided so as to be separable from the second resin layer after bag making as described later.

### (Step (2))

The step (2) includes performing a bag-making process on the tubular film deformed into the flat shape or a film produced by cutting the tubular film and stacking the cut films in the step (1) without releasing the contact between the second resin layers in face-to-face contact with each other to produce a packaging bag.

In the tubular film deformed into a flat shape, facing portions of the second resin layer, that is, of the inner surface, constituting the film are in contact with each other. In the step (2), a packaging bag is produced from the tubular film deformed into the flat shape without releasing the contact between the second resin layers in face-to-face contact with each other.

For example, in the tubular film deformed into the flat shape, portions of the second resin layers in face-to-face contact with each other are joined to form a sealed portion, and the film is then cut to produce a packaging bag. For example, in stacked films produced by cutting the tubular film deformed into the flat shape, for example, in the flow direction, portions of the second resin layers in face-to-face contact with each other are joined to form a sealed portion, and the films are then cut to produce a packaging bag.

The sealed portion is formed, for example, by a heat sealing method, such as bar sealing, rotating roll sealing, belt sealing, impulse sealing, high-frequency sealing, or ultrasonic sealing.

In a production method according to the present disclosure, the first surface of the second resin layer in contact with the first resin layer is not directly exposed to the outside air both during and after the production of the packaging bag. This can suppress the adhesion of a foreign material, such as dust or dirt, to the first surface of the second resin layer during the period from packaging bag production to the separation and removal of the first resin layer. When a packaging bag is used, the first surface of the second resin layer is exposed by separating and removing the first resin layer from the second resin layer of the packaging bag. The first surface is a clean surface to which adhesion of a foreign material is suppressed.

Furthermore, the tubular film is deformed into the flat shape to maintain the inner surface of the tubular film clean without exposing the inner surface to the outside air. The tubular film deformed into the flat shape can be subjected to the bag-making process while portions of the inner surface of the tubular film are in contact with each other, thereby producing the packaging bag while the inner surface is kept clean without being exposed to the outside air. Thus, the second surface of the second resin layer is a clean surface to which adhesion of a foreign material is suppressed. Thus, in the method according to the present disclosure, the bag-making process does not necessarily have to be performed in a clean environment. When higher cleanliness is required, the bag-making process may be performed in a clean environment. On the other hand, in a method of cutting both end portions of the tubular film in the width direction at a predetermined width to divide the tubular film into two films and then stacking the two films to perform the bag-making process, both surfaces of each film are exposed to the outside air before the bag-making process, and it may not be possible to sufficiently suppress the adhesion of a foreign material to the inner surface of the packaging bag.

An example of the bag-making process is described below.

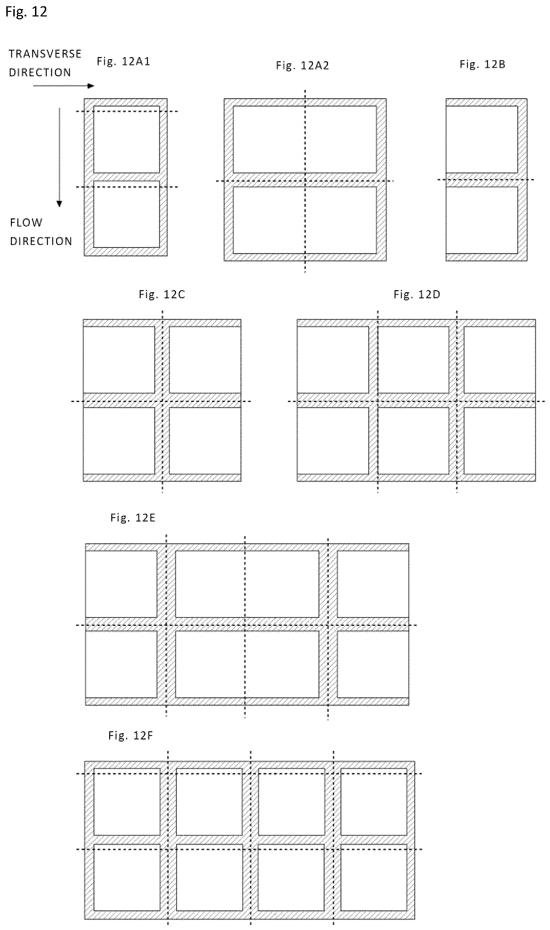

Both end portions in a width direction intersecting (for example, perpendicular to) the flow direction (extrusion direction) of a film deformed into a flat shape are heat-sealed in the flow direction, and a portion of the film extending in the width direction is heat-sealed at a certain interval in the flow direction to form a sealed portion. The film is then cut in the width direction at a position slightly below the sealed portion extending in the width direction. Fig. 12A1 is a front view of the film, wherein the hatched portion indicates the sealed portion, and the dotted line indicates the portion to be cut. In this manner, a plurality of packaging bags each having an opening on one side are produced.

Another example of the bag-making process is described below.

Both end portions in the width direction of a film deformed into a flat shape are heat-sealed in the flow direction, and a portion of the film extending in the width direction is heat-sealed at a certain interval in the flow direction to form a sealed portion. The film is then cut in the flow direction at the central portion of the film in the width direction and is cut in the width direction at the sealed portion extending in the width direction (see Fig. 12A2). In this manner, a plurality of packaging bags each having an opening on one side are produced.

Another example of the bag-making process is described below.

One end portion in the width direction of a film deformed into a flat shape is heat-sealed in the flow direction, and a portion of the film extending in the width direction is heat-sealed at a certain interval in the flow direction to form a sealed portion. The film is then cut in the width direction at the sealed portion extending in the width direction (see Fig. 12B). In this manner, a plurality of packaging bags each having an opening on one side are produced.

Another example of the bag-making process is described below.

A portion of a film deformed into a flat shape extending in the flow direction is heat-sealed at the central portion in the width direction, or a portion of the film extending in the flow direction is heat-sealed at a certain interval in the width direction, and a portion of the film extending in the width direction is heat-sealed at a certain interval in the flow direction to form a sealed portion. The portion of the film to be heat-sealed in the flow direction may be, for example, 1 row or more and 5 rows or less, or 1 row or more and 3 rows or less. The film is then cut in the flow direction at the sealed portion extending in the flow direction and is cut in the width direction at the sealed portion extending in the width direction (see Figs. ¹²C and 12D). In this manner, a plurality of packaging bags each having an opening on one side are produced.

Another example of the bag-making process is described below.

A portion of a film deformed into a flat shape extending in the flow direction is heat-sealed at an interval in the width direction, and a portion of the film extending in the width direction is heat-sealed at a certain interval in the flow direction to form a sealed portion. The film is then cut in the flow direction at the sealed portion extending in the flow direction, is cut in the flow direction at the central portion of the film in the width direction, and is cut in the width direction at the sealed portion extending in the width direction (see Fig. 12E). In this manner, a plurality of packaging bags each having an opening on one side are produced.

Another example of the bag-making process is described below.

Both end portions in the width direction of a film deformed into a flat shape are heat-sealed in the flow direction, a portion of the film extending in the flow direction is heat-sealed at a certain interval in the width direction, and a portion of the film extending in the width direction is heat-sealed at a certain interval in the flow direction to form a sealed portion. The portion of the film to be heat-sealed in the flow direction may be, for example, 1 row or more and 5 rows or less, or 1 row or more and 3 rows or less. The film is then cut in the flow direction at the sealed portion extending in the flow direction and is cut in the width direction at a position slightly below the sealed portion extending in the width direction (see Fig. 12F). In this manner, a plurality of packaging bags each having an opening on one side are produced.

In the above examples of the bag-making process, both end portions of the film in the width direction are cut off at a predetermined width in the flow direction. The cutting may be performed before the heat sealing or after the heat sealing.

For example, in a clean environment, an article is inserted from the opening of the unsealed portion of the packaging bag produced as described above. The opening of the packaging bag can then be heat-sealed to form a sealed portion and produce a package containing the article in the packaging bag.

### <Packaging Bag according to Second Aspect>

The packaging bag according to the second aspect of the present disclosure includes a laminate including a second resin layer as a main body portion and a first resin layer as a separable portion in the thickness direction. In the following description, the first resin layer is also referred to as a separable portion, and the second resin layer is also referred to as a main body portion. The main body portion includes a heat-fusible resin layer. The separable portion is provided so as to be separable from the main body portion. Separating the separable portion from the packaging bag in an anteroom of a clean room enables the clean packaging bag to be brought into the clean room. The details of the first resin layer and the second resin layer are as described above, and the detailed description thereof is omitted in this section.

The heat-fusible resin layer in the main body portion constitutes the inner surface facing the storage portion of the packaging bag (a surface with which an article in the packaging bag comes into contact). The main body portion has a first surface and a second surface facing the first surface. The separable portion is provided on the first surface of the main body portion. The separable portion is in contact with the main body portion, more specifically, the first surface of the main body portion. Thus, the first surface of the main body portion is typically a separation surface from which the separable portion is separated.

The packaging bag includes a front sheet formed of the laminate, a back sheet formed of the laminate, a sealed portion in which the heat-fusible resin layer of the front sheet and the heat-fusible resin layer of the back sheet are joined together, and a storage portion for storing a content. The laminate constituting the front sheet may be the same as or different from the laminate constituting the back sheet.

The packaging bag according to the second aspect of the present disclosure is described below with reference to the accompanying drawings. A laminate according to the present disclosure described above can be used as the laminate. The packaging bag according to the second aspect may have the easy-to-open portion.

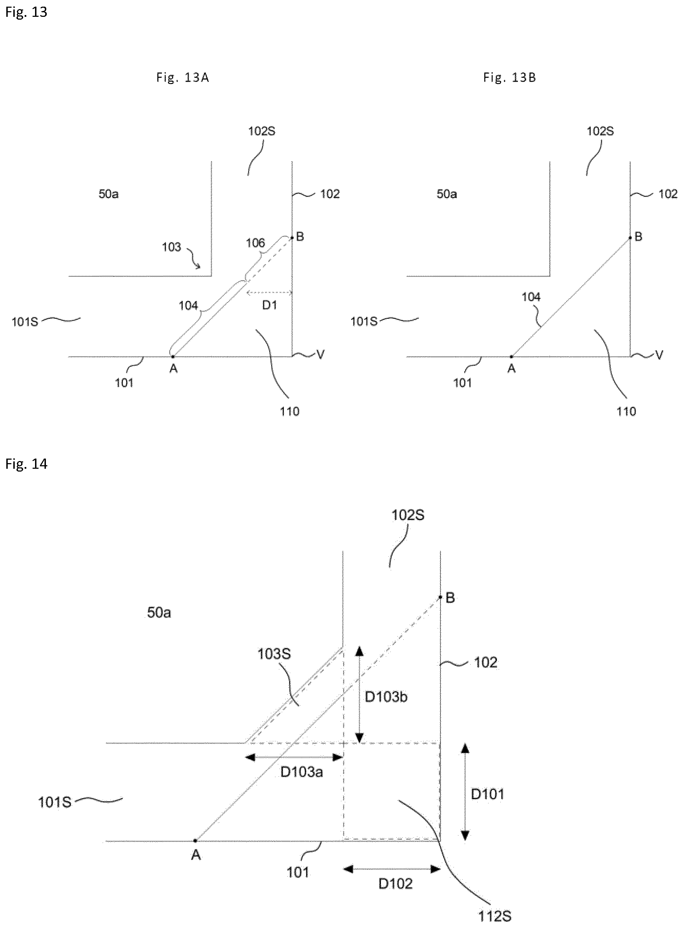

As illustrated in Fig. 13A, in a plan view, the packaging bag has a first side 101 with a point A, a second side 102 with a point B, and a corner portion 110 including a vertex V connecting the first side 101 and the second side 102. In the present description, a plan view means that the packaging bag is viewed in the direction normal to the front sheet or the back sheet of the packaging bag. The point A and the point B are virtual points for describing the position of a half-cut line 104 and the like, and such points are not actually provided on the packaging bag.

The packaging bag has a half-cut line extending from the point A on a line connecting the point A on the first side and the point B on the second side in the front sheet and/or the back sheet. The line connecting the point A and the point B is a virtual line for describing the position of the half-cut line and the like, and such a line is not actually provided on the packaging bag. The line connecting the point A and the point B is hereinafter also referred to as an "imaginary line". In the plan view, the imaginary line and the half-cut line may have a linear shape or a curved shape, such as an arc shape, formed in a convex shape or a concave shape with respect to the storage portion side of the packaging bag. An example of the linear shape is illustrated in Fig. 13A.

The half-cut line refers to a cut line that extends from the surface of the separable portion constituting the laminate to the interface between the separable portion and the main body portion in the thickness direction but does not penetrate the laminate (see Fig. 8). Thus, the half-cut line is provided such that the separable portion is cut without cutting at least part of the main body portion in the thickness direction of the laminate. With the half-cut line as a starting point, the separable portion in the laminate can be easily separated and removed from the main body portion by hand. The half-cut line can be formed, for example, by mechanically making a cut in the thickness direction of the laminate using a cutter, a cutting blade, or the like or by irradiating the laminate with a laser.

In one embodiment, a half-cut line is formed at a corner portion of the front sheet of the packaging bag. Thus, the corner portion of the packaging bag can be bend along the half-cut line formed on the front sheet before the packaging bag containing an article is brought into a clean room. Thus, in the laminate constituting the front sheet, the separable portion can be easily separated from the main body portion. Preferably, a half-cut line is also formed at a corner portion of the back sheet of the packaging bag. The corner portion of the packaging bag can be bent in the same manner along the half-cut line formed on the back sheet to separate the separable portion from the main body portion in the laminate constituting the back sheet.

The half-cut line is provided from the point A to the middle of the imaginary line, that is, does not reach the point B. As illustrated in Fig. 13B, in the case where the half-cut line 104 is provided from the point A on the first side 101 to the point B on the second side 102, when the separable portion is separated from the main body portion with the half-cut line 104 as a starting point, a portion of the separable portion (for example, a triangular portion below the half-cut line 104 in Fig. 13B) remains on the main body portion. The separable portion remaining on the main body portion may become a foreign material in a clean room. When the half-cut line is provided from the point A to the middle of the imaginary line, the separable portion can be cleanly separated without remaining on the main body portion.

The shortest distance D1 between the half-cut line and the second side is preferably 2.0 mm or more, 2.5 mm or more, 3.0 mm or more, or 3.5 mm or more, more preferably 4 mm or more, still more preferably 4.5 mm or more, particularly preferably 5 mm or more, and preferably 20 mm or less, more preferably 15 mm or less, still more preferably 10 mm or less, for example, 2.0 mm or more and 20 mm or less. When the shortest distance D1 is less than the lower limit, a portion where the half-cut line is not provided is also cut at the time of separating the separable portion, and a portion of the separable portion may remain on the main body portion. When the shortest distance D1 is 3.5 mm or more, the separable portion can be cleanly separated without remaining on the main body portion. The shortest distance D1 between the half-cut line and the second side refers to the length of the shortest straight line among straight lines connecting an arbitrary point on the half-cut line and an arbitrary point on the second side.

The distance between the point A, which is the starting point of the half-cut line, and the vertex V is preferably 8 mm or more, more preferably 10 mm or more, 12 mm or more, or 14 mm or more, and preferably 50 mm or less, more preferably 45 mm or less, still more preferably 40 mm or less, still more preferably 35 mm or less, particularly preferably 30 mm or less, for example, 8 mm or more and 50 mm or less.

The half-cut line preferably has a length of 4 mm or more or 5 mm or more, more preferably 6 mm or more, still more preferably 7 mm or more, 8 mm or more, or 10 mm or more, and preferably 60 mm or less, more preferably 50 mm or less, still more preferably 40 mm or less, still more preferably 30 mm or less, particularly preferably 25 mm or less, for example, 4 mm or more and 60 mm or less.

In one embodiment, the imaginary line and the half-cut line are straight lines. In this case, the ratio of the length of the half-cut line to the length of the imaginary line is preferably 20% or more, more preferably 25% or more, still more preferably 30% or more, still more preferably 35% or more, particularly preferably 40% or more, and preferably 80% or less, more preferably 75% or less, still more preferably 70% or less, still more preferably 65% or less, particularly preferably 60% or less, for example, 20% or more and 80% or less.

In one embodiment, the half-cut line is a straight line. The angle formed by the first side and the half-cut line is preferably 10 degrees or more, more preferably 20 degrees or more, still more preferably 30 degrees or more, still more preferably 35 degrees or more, particularly preferably 40 degrees or more, and preferably 80 degrees or less, more preferably 70 degrees or less, still more preferably 60 degrees or less, still more preferably 55 degrees or less, particularly preferably 50 degrees or less, for example, 10 degrees or more and 80 degrees or less, for example, approximately 45 degrees.

The angle formed by the first side and the second side is preferably 60 degrees or more, more preferably 70 degrees or more, still more preferably 75 degrees or more, still more preferably 80 degrees or more, particularly preferably 85 degrees or more, and preferably 120 degrees or less, more preferably 110 degrees or less, still more preferably 105 degrees or less, still more preferably 100 degrees or less, particularly preferably 95 degrees or less, for example, 60 degrees or more and 120 degrees or less, for example, approximately 90 degrees.

As illustrated in Fig. 13A, in one embodiment, the packaging bag has a first sealed portion 101S extending along the first side 101 and a second sealed portion 102S extending along the second side 102. The first sealed portion is, for example, a linear sealed portion extending along the first side. The second sealed portion is, for example, a linear sealed portion extending along the second side. As illustrated in Fig. 14, the first sealed portion 101S has a seal width D101, and the second sealed portion 102S has a seal width D102.

The first sealed portion and the second sealed portion are superposed with each other at a corner portion of the packaging bag in a plan view. Thus, as illustrated in Fig. 14, the packaging bag has an intersecting portion 112S between the first sealed portion 101S and the second sealed portion 102S. The first sealed portion and the second sealed portion are typically formed integrally by heat sealing at the corner portion.

The first sealed portion and the second sealed portion each independently preferably have a seal width of 3 mm or more, more preferably 4 mm or more, still more preferably 5 mm or more, and preferably 30 mm or less, more preferably 25 mm or less, still more preferably 20 mm or less, still more preferably 15 mm or less, particularly preferably 10 mm or less, for example, 3 mm or more and 30 mm or less. The seal length of each of the first sealed portion and the second sealed portion is typically determined in accordance with the size of the packaging bag.

In the case of a packaging bag with an approximately rectangular shape in a plan view, in one embodiment, the first side may correspond to a lower or upper side of the packaging bag, and the second side may correspond to a side of the packaging bag, or the first side may correspond to a side of the packaging bag, and the second side may correspond to a lower or upper side of the packaging bag.

In the case of a packaging bag with an approximately rectangular shape in a plan view, the first side and the second side each independently preferably have a length of 40 mm or more, more preferably 60 mm or more, still more preferably 80 mm or more, still more preferably 100 mm or more, and preferably 600 mm or less, more preferably 500 mm or less, still more preferably 400 mm or less, still more preferably 300 mm or less, for example, 40 mm or more and 600 mm or less.

As illustrated in Fig. 14, in one embodiment, the packaging bag further includes a third sealed portion 103S provided at a corner 103 formed by the first sealed portion 101S and the second sealed portion 102S in a plan view. The third sealed portion allows the half-cut line to be provided closer to the storage portion side in the plan view of the packaging bag and the separable portion to be easily grasped by hand and more easily separated from the main body portion. In one embodiment, the half-cut line is provided at least on the third sealed portion.

The third sealed portion may have any shape, for example, a triangular shape or a shape in which an oblique side of a triangular shape is deformed into a convex shape or a concave shape with respect to the storage portion side of the packaging bag. The length of the side of the third sealed portion in contact with the first sealed portion (D103a in Fig. 14) and the length of the side of the third sealed portion in contact with the second sealed portion (D103b in Fig. 14) are each independently preferably 2 mm or more, more preferably 4 mm or more, still more preferably 6 mm or more, still more preferably 8 mm or more, particularly preferably 10 mm or more, and preferably 40 mm or less, more preferably 35 mm or less, still more preferably 30 mm or less, still more preferably 25 mm or less, particularly preferably 20 mm or less, for example, 2 mm or more and 40 mm or less. The third sealed portion with such a size allows the half-cut line to be provided closer to the storage portion side in the plan view of the packaging bag and the separable portion to be easily grasped by hand and more easily separated from the main body portion.

The first sealed portion, the second sealed portion, and the third sealed portion are typically formed integrally by heat sealing at the corner portion. The third sealed portion is usually not formed separately and independently from the first sealed portion or the second sealed portion, and "the shape of the third sealed portion" is therefore for describing a virtual shape of the third sealed portion.

In the case of a packaging bag with an approximately rectangular planar shape, for example, the half-cut line may be provided in at least one corner portion of the packaging bag and may be provided in two or more corner portions. When the half-cut line is provided in two or more corner portions, the description of the first side, the second side, and the vertex, and the position, the shape, the length, and the like of the half-cut line can be applied to the two sides defining each corner portion. The half-cut line may be provided on one of the front sheet and the back sheet of the packaging bag but is preferably provided on both.

In one embodiment, the half-cut line is provided at a corner portion of the packaging bag in a plan view, and from the perspective of suppressing contamination of the bag and suppressing breakage of the bag, the half-cut line is preferably provided at least on a sealed portion, more preferably not provided in a region overlapping the storage portion of the packaging bag in the plan view, still more preferably provided only on the sealed portion.

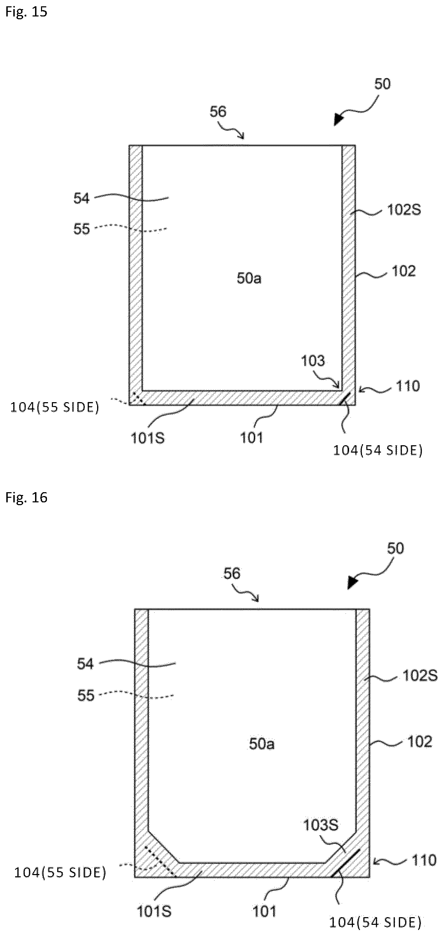

Figs. 15 and 16 are front views of an embodiment of the packaging bag according to the second aspect of the present disclosure. As illustrated in Fig. 15, in one embodiment, a packaging bag 50 has a front sheet 54, a back sheet 55, a first sealed portion 101S, a second sealed portion 102S, an opening 56, and a storage portion 50a for storing a content. As illustrated in Fig. 16, in one embodiment, a packaging bag 50 has a front sheet 54, a back sheet 55, a first sealed portion 101S, a second sealed portion 102S, a third sealed portion 103S, an opening 56, and a storage portion 50a for storing a content. In the packaging bag 50 of Figs. 15 and 16, the second sealed portion 102S is provided on one side portion, and a sealed portion is also provided on the other side portion. Fig. 13A is an example of an enlarged view of the vicinity of the corner portion 110 of the packaging bag 50 in Fig. 15. Fig. 14 is an example of an enlarged view of the vicinity of the corner portion 110 of the packaging bag 50 in Fig. 16.

A half-cut line is formed at one corner portion of a sealed portion of the packaging bag. In Figs. 15 and 16, the half-cut line is formed on the front sheet and the back sheet of the packaging bag. The position of the half-cut line is not limited to the position illustrated in Figs. 15 and 16. The half-cut line may be provided at two or more corner portions.

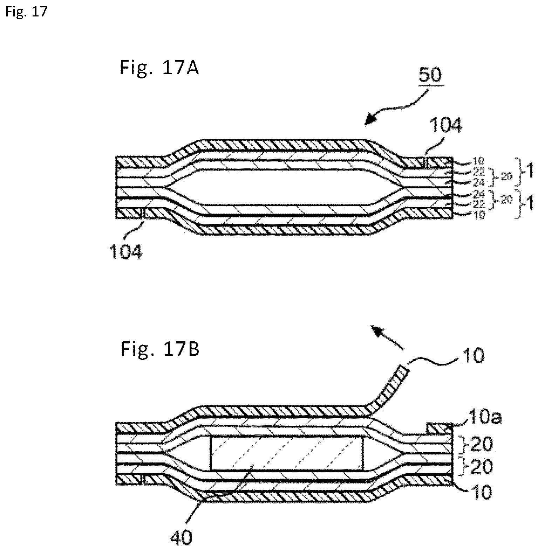

Fig. 17a is a cross-sectional view of an embodiment of the packaging bag according to the second aspect of the present disclosure. A sealed portion of a packaging bag 50 is formed by stacking and heat-sealing laminates 1 each including a separable portion 10 and a main body portion 20, and a half-cut line 104 is further formed. Fig. 17b is a cross-sectional view of an embodiment of a usage form of the packaging bag. For example, the separable portions 10, 10 are separated from the main body portions 20, 20 of the packaging bag 50 immediately before the packaging bag 50 is brought into a clean room. In the case where the half-cut line 104 reaches the point B from the point A, when the separable portion 10 is separated in Fig. 17b, a portion 10a of the separable portion 10 remains on the main body portion 20. On the other hand, when the half-cut line 104 is provided from the point A to the middle of the imaginary line, 10a can also be separated as a portion of the separable portion 10.

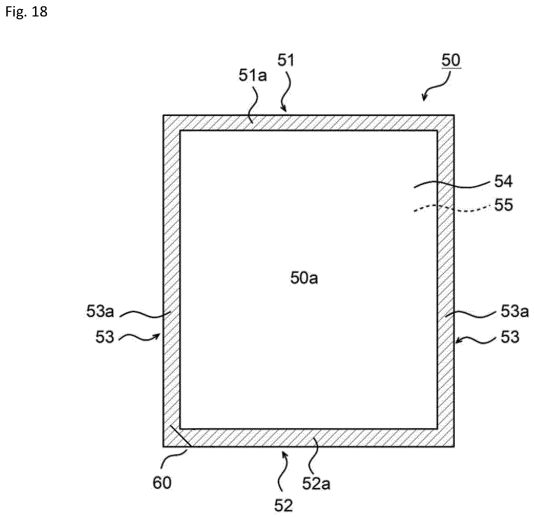

Fig. 18 is a front view of an embodiment of the packaging bag according to the second aspect of the present disclosure. The packaging bag 50 of Fig. 18 is the same as the packaging bag 50 of Fig. 7 except that the packaging bag 50 of Fig. 18 has the half-cut line 60 described in the packaging bag according to the second aspect.

### [One Example of Aspect of Present Disclosure]

The present disclosure relates to, for example, the following [1] to [16]:
[1] A laminate including at least a first resin layer and a second resin layer, wherein the first resin layer is provided so as to be separable from the second resin layer, a separation strength between the first resin layer and the second resin layer is 1.0 N/15 mm width or less as measured at a separation angle of 180 degrees and a test speed of 50 mm/min, and the second resin layer is a sealant layer including at least a polyethylene layer with a density of 0.909 g/cm³ or less, and the polyethylene layer in the second resin layer is in contact with the first resin layer.
[2] The laminate according to [1], wherein the first resin layer includes at least a heteroatom-containing resin layer containing a heteroatom-containing resin as a main component, and the heteroatom-containing resin layer is in contact with the polyethylene layer with a density of 0.909 g/cm³ or less.
[3] The laminate according to [2], wherein the heteroatom-containing resin contains at least one selected from a polyamide, an ethylene-vinyl alcohol copolymer, and poly(vinyl alcohol).
[4] The laminate according to [2] or [3], wherein the first resin layer further includes a polyolefin layer containing a polyolefin as a main component.
[5] The laminate according to [4], wherein the polyolefin layer further contains a modified polyolefin in addition to the polyolefin.
[6] The laminate according to [4] or [5], wherein the polyolefin layer contains a polyethylene with a density of 0.925 g/cm³ or more and a modified polyethylene.
[7] The laminate according to any one of [1] to [6], wherein the second resin layer further includes a heat-fusible resin layer as one surface layer of the laminate.
[8] The laminate according to [7], wherein the heat-fusible resin layer contains at least one polyethylene selected from a linear low-density polyethylene and a low-density polyethylene as a main component.
[9] The laminate according to [7] or [8], wherein the second resin layer further includes an intermediate layer containing a linear low-density polyethylene as a main component between the polyethylene layer with a density of 0.909 g/cm³ or less and the heat-fusible resin layer.
[10] The laminate according to [9], wherein the linear low-density polyethylene in the intermediate layer has a density of 0.925 g/cm³ or more or is an ethylene-1-octene copolymer.
[11] A laminate including at least a first resin layer and a second resin layer, wherein the first resin layer is provided so as to be separable from the second resin layer, a separation strength between the first resin layer and the second resin layer is 0.15 N/15 mm width or more and 1.0 N/15 mm width or less as measured at a separation angle of 180 degrees and a test speed of 50 mm/min, and the second resin layer is a sealant layer.
[12] The laminate according to any one of [1] to [11], wherein the laminate is a coextruded multilayer film.
[13] The laminate according to any one of [1] to [12], wherein a film formed of the first resin layer obtained by separating the first resin layer from the second resin layer has a higher Young's modulus than a film formed of the second resin layer after the separation.
[14] The laminate according to any one of [1] to [13], wherein a film formed of the first resin layer obtained by separating the first resin layer from the second resin layer has a smaller loop stiffness value than a film formed of the second resin layer after the separation.
[15] A packaging bag including the laminate according to any one of [1] to [14].
[16] The packaging bag according to [15], which has a half-cut line.

### [One Example of Aspect of Present Disclosure]

The present disclosure relates to, for example, the following [1] to [19]:
[1] A laminate including at least a first resin layer and a second resin layer, wherein the first resin layer is provided so as to be separable from the second resin layer, a separation strength between the first resin layer and the second resin layer is 1.0 N/15 mm width or less as measured at a separation angle of 180 degrees and a test speed of 50 mm/min, and the second resin layer is a sealant layer containing a polyolefin as a main component and has a polyolefin content of 82% by mass or more based on the mass of the second resin layer.
[2] The laminate according to [1], wherein the proportion of the same type of resin materials in the first resin layer is 70% by mass or more based on the mass of the first resin layer.
[3] The laminate according to [2], wherein the first resin layer includes at least a heteroatom-containing resin layer containing a heteroatom-containing resin as a main component.
[4] The laminate according to [3], wherein the heteroatom-containing resin contains at least one selected from a polyamide, an ethylene-vinyl alcohol copolymer, a polyester, and poly(vinyl alcohol).
[5] The laminate according to [3] or [4], wherein the first resin layer further includes a polyolefin layer containing a polyolefin as a main component.
[6] The laminate according to [5], wherein the polyolefin layer further contains a modified polyolefin in addition to the polyolefin.
[7] The laminate according to [6], wherein the polyolefin layer contains a polyethylene with a density of 0.925 g/cm³ or more and a modified polyethylene.
[8] The laminate according to [1] or [2], wherein the first resin layer is a polymethylpentene layer containing polymethylpentene as a main component.
[9] The laminate according to any one of [1] to [8], wherein the second resin layer includes, as one surface layer of the laminate, a heat-fusible resin layer containing a polyolefin as a main component.
[10] The laminate according to [9], wherein the heat-fusible resin layer contains at least one polyethylene selected from a linear low-density polyethylene and a low-density polyethylene as a main component.
[11] The laminate according to any one of [3] to [7], wherein the second resin layer includes a polyethylene layer with a density of 0.909 g/cm³ or less and, as one surface layer of the laminate, a heat-fusible resin layer containing a polyethylene as a main component, and the polyethylene layer in the second resin layer is in contact with the heteroatom-containing resin layer in the first resin layer.
[12] The laminate according to [11], wherein the second resin layer further includes an intermediate layer containing a linear low-density polyethylene as a main component between the polyethylene layer with a density of 0.909 g/cm³ or less and the heat-fusible resin layer.
[13] The laminate according to [12], wherein the linear low-density polyethylene in the intermediate layer has a density of 0.925 g/cm³ or more or is an ethylene-1-octene copolymer.
[14] The laminate according to [9], wherein the second resin layer includes an extruded resin layer containing a polyethylene as a main component and the heat-fusible resin layer containing a polyethylene as a main component.
[15] The laminate according to any one of [1] to [14], wherein the laminate has a polyolefin resin content of 70% by mass or more based on the mass of the laminate.
[16] The laminate according to any one of [1] to [15], wherein the laminate is a coextruded multilayer film.
[17] The laminate according to any one of [1] to [16], wherein a film formed of the first resin layer obtained by separating the first resin layer from the second resin layer has a smaller loop stiffness value than a film formed of the second resin layer after the separation.
[18] A packaging bag including the laminate according to any one of [1] to [17].
[19] The packaging bag according to [18], which has a half-cut line.

### [One Example of Aspect of Present Disclosure]

The present disclosure relates to, for example, the following [1] to [17]:
[1] A laminate including at least a first resin layer and a second resin layer, wherein the first resin layer is provided so as to be separable from the second resin layer, the second resin layer is a sealant layer containing a polyolefin as a main component, and at least one resin layer selected from the first resin layer and the second resin layer contains at least a biomass-derived resin material.
[2] The laminate according to [1], wherein the first resin layer includes at least a heteroatom-containing resin layer containing a heteroatom-containing resin as a main component, and the heteroatom-containing resin layer is in contact with the second resin layer.
[3] The laminate according to [2], wherein at least part of the heteroatom-containing resin is a biomass-derived resin material.
[4] The laminate according to [2] or [3], wherein the heteroatom-containing resin contains at least one selected from a polyamide, an ethylene-vinyl alcohol copolymer, a polyester, and poly(vinyl alcohol).
[5] The laminate according to any one of [2] to [4], wherein the first resin layer further includes a polyolefin layer containing a polyolefin as a main component.
[6] The laminate according to [5], wherein at least part of the polyolefin is a biomass-derived resin material.
[7] The laminate according to [5] or [6], wherein the polyolefin layer further contains a modified polyolefin in addition to the polyolefin.
[8] The laminate according to any one of [1] to [7], wherein the second resin layer includes, as one surface layer of the laminate, a heat-fusible resin layer containing a polyolefin as a main component.
[9] The laminate according to [8], wherein the heat-fusible resin layer contains at least one polyethylene selected from a linear low-density polyethylene and a low-density polyethylene as a main component.
[10] The laminate according to any one of [2] to [7], wherein the second resin layer includes a polyethylene layer with a density of 0.909 g/cm³ or less and, as one surface layer of the laminate, a heat-fusible resin layer containing a polyethylene as a main component, and the polyethylene layer in the second resin layer is in contact with the heteroatom-containing resin layer in the first resin layer.
[11] The laminate according to [10], wherein the second resin layer further includes an intermediate layer containing a linear low-density polyethylene as a main component between the polyethylene layer with a density of 0.909 g/cm³ or less and the heat-fusible resin layer.
[12] The laminate according to any one of [1] to [11], wherein the biomass content is 3% or more.
[13] The laminate according to any one of [1] to [12], wherein the first resin layer has a biomass content of 10% or more.
[14] The laminate according to any one of [1] to [13], wherein the separation strength between the first resin layer and the second resin layer is 1.0 N/15 mm width or less as measured at a separation angle of 180 degrees and a test speed of 50 mm/min.
[15] The laminate according to any one of [1] to [14], wherein the laminate is a coextruded multilayer film.
[16] A packaging bag including the laminate according to any one of [1] to [15].
[17] The packaging bag according to [16], including a sealed portion formed by fusing the second resin layers in the laminate.

### [One Example of Aspect of Present Disclosure]

The present disclosure relates to, for example, the following [1] to [21]:
[1] A method for producing a packaging bag, including the steps of: forming, by a coextrusion inflation method, a tubular film including at least a first resin layer constituting a tube outer surface and a second resin layer containing a polyolefin as a main component and constituting a tube inner surface, and deforming the film into a flat shape, and performing a bag-making process on the tubular film deformed into the flat shape or a film produced by cutting the tubular film and stacking the cut films without releasing contact between the second resin layers in face-to-face contact with each other to produce a packaging bag, wherein the packaging bag includes a front sheet and a back sheet facing the front sheet, the front sheet and the back sheet each include at least the first resin layer and the second resin layer constituting an inner surface of the packaging bag, the first resin layer in the front sheet and the back sheet is provided so as to be separable from the second resin layer, and the packaging bag has a sealed portion formed by joining a portion of the second resin layer in the front sheet and a portion of the second resin layer in the back sheet.
[2] The method for producing a packaging bag according to [1], wherein the first resin layer includes at least a heteroatom-containing resin layer containing a heteroatom-containing resin as a main component, and the heteroatom-containing resin layer is in contact with the second resin layer.
[3] The method for producing a packaging bag according to [2], wherein the heteroatom-containing resin contains at least one selected from a polyamide, an ethylene-vinyl alcohol copolymer, a polyester, and poly(vinyl alcohol).
[4] The method for producing a packaging bag according to [2] or [3], wherein the first resin layer further includes a polyolefin layer containing a polyolefin as a main component.
[5] The method for producing a packaging bag according to [4], wherein the polyolefin layer further contains a modified polyolefin in addition to the polyolefin.
[6] The method for producing a packaging bag according to any one of [1] to [5], wherein the second resin layer includes a heat-fusible resin layer constituting the tube inner surface and containing a polyolefin as a main component.
[7] The method for producing a packaging bag according to [6], wherein the heat-fusible resin layer contains at least one polyethylene selected from a linear low-density polyethylene and a low-density polyethylene as a main component.
[8] The method for producing a packaging bag according to any one of [2] to [7], wherein the second resin layer includes a polyethylene layer with a density of 0.909 g/cm³ or less and a heat-fusible resin layer constituting the tube inner surface and containing a polyethylene as a main component, and the polyethylene layer in the second resin layer is in contact with the heteroatom-containing resin layer in the first resin layer.
[9] The method for producing a packaging bag according to [8], wherein the second resin layer further includes an intermediate layer containing a linear low-density polyethylene as a main component between the polyethylene layer with a density of 0.909 g/cm³ or less and the heat-fusible resin layer.
[10] The method for producing a packaging bag according to any one of [1] to [9], wherein the separation strength between the first resin layer and the second resin layer in the packaging bag is 1.0 N/15 mm width or less as measured at a separation angle of 180 degrees and a test speed of 50 mm/min.
[11] A packaging bag including a front sheet and a back sheet facing the front sheet, wherein the front sheet and the back sheet each include at least a first resin layer and a second resin layer constituting an inner surface of the packaging bag, and the second resin layer contains a polyolefin as a main component, the first resin layer in the front sheet and the back sheet is provided so as to be separable from the second resin layer, the packaging bag has a sealed portion formed by joining a portion of the second resin layer in the front sheet and a portion of the second resin layer in the back sheet, and the packaging bag is produced by directly making a bag from a film produced by deforming a tubular film produced by a coextrusion inflation method and including at least the first resin layer constituting a tube outer surface and the second resin layer constituting a tube inner surface into a flat shape or from a film produced by cutting the tubular film and stacking the cut films.
[12] A packaging bag including a front sheet and a back sheet facing the front sheet, wherein the front sheet and the back sheet each include at least a first resin layer and a second resin layer constituting an inner surface of the packaging bag, and the second resin layer contains a polyolefin as a main component, the first resin layer in the front sheet and the back sheet is provided so as to be separable from the second resin layer, the packaging bag has a sealed portion formed by joining a portion of the second resin layer in the front sheet and a portion of the second resin layer in the back sheet, and the number of particles with a particle size of 0.2 µm or more adhering to the inner surface of the packaging bag is 100 particles/cm² or less as measured with a particle counter.
[13] The packaging bag according to [11] or [12], wherein the first resin layer includes at least a heteroatom-containing resin layer containing a heteroatom-containing resin as a main component, and the heteroatom-containing resin layer is in contact with the second resin layer.
[14] The packaging bag according to [13], wherein the heteroatom-containing resin contains at least one selected from a polyamide, an ethylene-vinyl alcohol copolymer, a polyester, and poly(vinyl alcohol).
[15] The packaging bag according to [13] or [14], wherein the first resin layer further includes a polyolefin layer containing a polyolefin as a main component.
[16] The packaging bag according to [15], wherein the polyolefin layer further contains a modified polyolefin in addition to the polyolefin.
[17] The packaging bag according to any one of [11] to [16], wherein the second resin layer includes a heat-fusible resin layer constituting the inner surface of the packaging bag and containing a polyolefin as a main component.
[18] The packaging bag according to [17], wherein the heat-fusible resin layer contains at least one polyethylene selected from a linear low-density polyethylene and a low-density polyethylene as a main component.
[19] The packaging bag according to any one of [13] to [18], wherein the second resin layer includes a polyethylene layer with a density of 0.909 g/cm³ or less and a heat-fusible resin layer constituting the inner surface of the packaging bag and containing a polyethylene as a main component, and the polyethylene layer in the second resin layer is in contact with the heteroatom-containing resin layer in the first resin layer.
[20] The packaging bag according to [19], wherein the second resin layer further includes an intermediate layer containing a linear low-density polyethylene as a main component between the polyethylene layer with a density of 0.909 g/cm³ or less and the heat-fusible resin layer.
[21] The packaging bag according to any one of [11] to [20], wherein the separation strength between the first resin layer and the second resin layer in the packaging bag is 1.0 N/15 mm width or less as measured at a separation angle of 180 degrees and a test speed of 50 mm/min.

### [One Example of Aspect of Present Disclosure]

The present disclosure relates to, for example, the following [1] to [9]:
[1] A packaging bag including a laminate, wherein the laminate includes, in a thickness direction, a main body portion including a heat-fusible resin layer and a separable portion provided so as to be separable from the main body portion, the separable portion has a thickness of 10 µm or more, the packaging bag includes a front sheet formed of the laminate, a back sheet formed of the laminate, a sealed portion in which the heat-fusible resin layer of the front sheet and the heat-fusible resin layer of the back sheet are joined together, and a storage portion for storing a content, the packaging bag includes, in a plan view, a first side with a point A, a second side with a point B, and a corner portion including a vertex connecting the first side and the second side, and the packaging bag has a half-cut line extending from the point A on a line connecting the point A on the first side and the point B on the second side, and the half-cut line is provided from the point A to a middle of the line.
[2] The packaging bag according to [1], wherein the packaging bag has a first sealed portion extending along the first side and a second sealed portion extending along the second side, the first sealed portion and the second sealed portion are superposed with each other in a plan view at the corner portion of the packaging bag, and the half-cut line is provided on the sealed portion at the corner portion.
[3] The packaging bag according to [2], further including a third sealed portion provided at a corner formed by the first sealed portion and the second sealed portion in a plan view.
[4] The packaging bag according to [3], wherein the half-cut line is provided at least on the third sealed portion.
[5] The packaging bag according to [3] or [4], wherein the third sealed portion has a triangular shape.
[6] The packaging bag according to any one of [1] to [5], wherein a shortest distance D1 between the half-cut line and the second side is 2.0 mm or more.
[7] The packaging bag according to any one of [1] to [5], wherein a shortest distance D1 between the half-cut line and the second side is 3.5 mm or more.
[8] The packaging bag according to any one of [3] to [7], wherein a side of the third sealed portion in contact with the first sealed portion and a side of the third sealed portion in contact with the second sealed portion each independently have a length of 2 mm or more and 40 mm or less.
[9] The packaging bag according to any one of [1] to [8], wherein a separation strength between the separable portion and the main body portion is 1.0 N/15 mm width or less as measured at a separation angle of 180 degrees and a test speed of 50 mm/min.

### EXAMPLES

Although a laminate, a packaging bag, and a method for producing them according to the present disclosure are more specifically described with reference to examples, the laminate, the packaging bag, and the method for producing them according to the present disclosure are not limited by the examples.

### [Production of Laminate]

Components used in the following examples, reference examples, comparative examples, and production examples are described below.

### [Raw Material Components]

- Biomass polyamide (bPA)
   Amilan CM2001L manufactured by Toray Industries, Inc., polyamide 610,
   melting point: 225°C, density: 1.08 g/cm³,
   biomass content: 59.5%
- Biomass polyamide (bPA)
   RILSAN BESN P20 TL manufactured by Arkema,
   polyamide 11,
   melting point: 185°C, density: 1.04 g/cm³, biomass content: 70%
- Biomass polyamide (bPA)
   VESTAMID Terra DS22 manufactured by Daicel-Evonik Ltd.,
   polyamide 1010,
   melting point: 199°C, density: 1.04 g/cm³, MFR: 2.0 g/10 min, biomass content: 100%
- Polyamide (PA)
   5033B manufactured by UBE, polyamide 6/66 copolymer,
   melting point: 197°C, density: 1.14 g/cm³,
   MFR: 4.0 g/10 min (temperature: 235°C, load: 2.16 kg)
- Ethylene-vinyl alcohol copolymer (EVOH)
   E173B manufactured by Kuraray Co., Ltd.,
   melting point: 165°C, density: 1.14 g/cm³,
   MFR: 2.5 g/10 min (temperature: 190°C, load: 2.16 kg),
   ethylene content: 44% by mole
- Polymethylpentene
   TPX MX004 manufactured by Mitsui Chemicals, Inc., melting point: 228°C,
   density: 0.833 g/cm³,
   MFR: 25.0 g/10 min (260°C/5 kg)
- Polymethylpentene
   TPX MX002 manufactured by Mitsui Chemicals, Inc., melting point: 224°C,
   density: 0.834 g/cm³,
   MFR: 21.0 g/10 min (260°C/5 kg)
- High-density polyethylene (HDPE)
   HZ5000SF manufactured by Prime Polymer Co., Ltd.
   melting point: 132°C, density: 0.954 g/cm³,
   MFR: 0.66 g/10 min
- Biomass high-density polyethylene (bHDPE)
   GreenPE SGF4950 manufactured by Braskem,
   melting point: 133°C, density: 0.956 g/cm³,
   MFR: 0.34 g/10 min,
   biomass content: 96%
- Linear low-density polyethylene (LLDPE)
   KF260T manufactured by Japan polyethylene Corporation, C6-LLDPE,
   melting point: 93°C, density: 0.901 g/cm³,
   MFR: 2.0 g/10 min
- Linear low-density polyethylene (LLDPE)
   SP0511 manufactured by Prime Polymer Co., Ltd., C6-LLDPE,
   melting point: 98°C, density: 0.901 g/cm³,
   MFR: 1.2 g/10 min
- Linear low-density polyethylene (LLDPE)
   UZ3500ZA manufactured by Prime Polymer Co., Ltd., C4-LLDPE,
   melting point: 120°C, density: 0.921 g/cm³,
   MFR: 2.1 g/10 min
- Linear low-density polyethylene (LLDPE)
   UZ2021L manufactured by Prime Polymer Co., Ltd., C6-LLDPE,
   melting point: 120°C, density: 0.919 g/cm³,
   MFR: 2.0 g/10 min
- Linear low-density polyethylene (LLDPE)
   UZ3520L manufactured by Prime Polymer Co., Ltd., C6-LLDPE,
   melting point: 124°C, density: 0.931 g/cm³,
   MFR: 2.1 g/10 min
- Linear low-density polyethylene (LLDPE)
   INNATE ST50 manufactured by The Dow Chemical Company, C8-LLDPE,
   melting point: 124°C, density: 0.918 g/cm³,
   MFR: 0.85 g/10 min
- Linear low-density polyethylene (LLDPE)
   UMERIT125FN manufactured by Ube-Maruzen polyethylene,
   melting point: 120°C, density: 0.924 g/cm³,
   MFR: 2.2 g/10 min
- Linear low-density polyethylene (LLDPE)
   Harmolex NF444N manufactured by Japan polyethylene Corporation,
   melting point: 121°C, density: 0.912 g/cm³,
   MFR: 2.0 g/10 min
- Low-density polyethylene (LDPE)
   B128 manufactured by Ube-Maruzen polyethylene,
   melting point: 114°C, density: 0.928 g/cm³,
   MFR: 1.0 g/10 min
- Maleic anhydride graft modified high-density polyethylene (mHDPE)
   BYNEL 40E 1053 manufactured by The Dow Chemical Company, adhesive resin,
   melting point: 130°C, density: 0.960 g/cm³,
   MFR: 2.0 g/10 min

### [Laminate according to First Aspect]

### [Example 1]

A polyamide (5033B), LLDPE (KF260T), and a mixture of 70% by mass of LDPE (B128) and 30% by mass of LLDPE (UZ3500ZA) were coextruded by an inflation method to form a film. In this manner, a laminate with a total thickness of 70 µm including a polyamide layer with a thickness of 15 µm, a LLDPE layer with a thickness of 15 µm, and a polyethylene blend layer with a thickness of 40 µm was produced. The notation "% by mass" in a mixture refers to each component content of the mixture.

### [Example 2]

A polyamide (5033B), LLDPE (KF260T), and a mixture of 30% by mass of LDPE (B128) and 70% by mass of LLDPE (UZ2021L) were coextruded by the inflation method to form a film. In this manner, a laminate with a total thickness of 75 µm including a polyamide layer with a thickness of 20 µm, a LLDPE layer with a thickness of 15 µm, and a polyethylene blend layer with a thickness of 40 µm was produced.

### [Example 3]

A mixture of 80% by mass of LLDPE (UZ3520L) and 20% by mass of an acid-modified polyethylene (BYNEL 40E 1053), a polyamide (5033B), LLDPE (KF260T), and a mixture of 30% by mass of LDPE (B128) and 70% by mass of LLDPE (UZ2021L) were coextruded by the inflation method to form a film. In this manner, a laminate with a thickness of 75 µm including a LLDPE blend layer with a thickness of 15 µm, a polyamide layer with a thickness of 5 µm, a LLDPE layer with a thickness of 15 µm, and a polyethylene blend layer with a thickness of 40 µm was produced.

### [Example 3A]

A mixture of 80% by mass of HDPE (HZ5000SF) and 20% by mass of an acid-modified polyethylene (BYNEL 40E 1053), a polyamide (5033B), LLDPE (SP0511), and a mixture of 30% by mass of LDPE (B128) and 70% by mass of LLDPE (UZ2021L) were coextruded by the inflation method to form a film. In this manner, a laminate with a thickness of 75 µm including a HDPE blend layer with a thickness of 15 µm, a polyamide layer with a thickness of 5 µm, a LLDPE layer with a thickness of 15 µm, and a polyethylene blend layer with a thickness of 40 µm was produced.

### [Example 4]

EVOH (E173B), LLDPE (KF260T), and a mixture of 30% by mass of LDPE (B128) and 70% by mass of LLDPE (UZ2021L) were coextruded by the inflation method to form a film. In this manner, a laminate with a total thickness of 70 µm including an EVOH layer with a thickness of 15 µm, a LLDPE layer with a thickness of 15 µm, and a polyethylene blend layer with a thickness of 40 µm was produced.

### [Example 5]

A laminate with a total thickness of 75 µm was produced in the same manner as in Example 4 except that the thickness of the EVOH layer was changed to 20 µm.

### [Reference Example 1]

A polyamide (5033B) and a mixture of 70% by mass of LDPE (B128) and 30% by mass of LLDPE (UZ3500ZA) were coextruded by the inflation method to form a film. In this manner, a laminate with a total thickness of 70 µm including a polyamide layer with a thickness of 15 µm and a polyethylene blend layer with a thickness of 55 µm was produced.

### [Reference Example 2]

EVOH (E173B) and a mixture of 70% by mass of LDPE (B128) and 30% by mass of LLDPE (UZ3500ZA) were coextruded by the inflation method to form a film. In this manner, a laminate with a total thickness of 70 µm including an EVOH layer with a thickness of 15 µm and a polyethylene blend layer with a thickness of 55 µm was produced.

### [Reference Example 3]

A mixture of 80% by mass of LLDPE (UZ3520L) and 20% by mass of an acid-modified polyethylene (BYNEL 40E 1053), a polyamide (5033B), and a mixture of 70% by mass of LDPE (B128) and 30% by mass of LLDPE (UZ3500ZA) were coextruded by the inflation method to form a film. In this manner, a laminate with a total thickness of 75 µm including a LLDPE blend layer with a thickness of 15 µm, a polyamide layer with a thickness of 5 µm, and a polyethylene blend layer with a thickness of 55 µm was produced.

### [Example 6]

A polyamide (5033B), LLDPE (KF260T), LLDPE (UZ3520L), and a mixture of 30% by mass of LDPE (B128) and 70% by mass of LLDPE (UZ2021L) were coextruded by the inflation method to form a film. In this manner, a laminate with a total thickness of 75 µm including a polyamide layer with a thickness of 15 µm, a LLDPE layer with a thickness of 15 µm, a LLDPE layer with a thickness of 20 µm, and a polyethylene blend layer with a thickness of 25 µm was produced.

### [Example 7]

A laminate was produced in the same manner as in Example 6 except that LLDPE (UZ3520L) was changed to LLDPE (INNATE ST50).

### [Example 8]

A mixture of 80% by mass of LLDPE (UZ3520L) and 20% by mass of an acid-modified polyethylene (BYNEL 40E 1053), a polyamide (5033B), LLDPE (KF260T), LLDPE (UZ3520L), and a mixture of 30% by mass of LDPE (B128) and 70% by mass of LLDPE (UZ2021L) were coextruded by the inflation method to form a film. In this manner, a laminate with a total thickness of 75 µm including a LLDPE blend layer with a thickness of 15 µm, a polyamide layer with a thickness of 5 µm, a LLDPE layer with a thickness of 20 µm, a LLDPE layer with a thickness of 15 µm, and a polyethylene blend layer with a thickness of 20 µm was produced.

### [Example 8A]

A mixture of 80% by mass of HDPE (HZ5000SF) and 20% by mass of an acid-modified polyethylene (BYNEL 40E 1053), a polyamide (5033B), LLDPE (SP0511), LLDPE (UZ3520L), and a mixture of 30% by mass of LDPE (B128) and 70% by mass of LLDPE (UZ2021L) were coextruded by the inflation method to form a film. In this manner, a laminate with a total thickness of 75 µm including a HDPE blend layer with a thickness of 15 µm, a polyamide layer with a thickness of 5 µm, a LLDPE layer with a thickness of 20 µm, a LLDPE layer with a thickness of 15 µm, and a polyethylene blend layer with a thickness of 20 µm was produced.

### [Example 9]

A laminate was produced in the same manner as in Example 6 except that the polyamide (5033B) was changed to EVOH (E173B).

Tables 1-1 and 1-2 show examples and reference examples of the laminate according to the first aspect.

### [Laminate according to Second Aspect]

Examples 1 to 5 of the laminate according to the first aspect correspond to Examples 1 to 5 of the laminate according to the second aspect, Reference Examples 1 to 3 of the laminate according to the first aspect correspond to Examples 6 to 8 of the laminate according to the second aspect, and Examples 6 to 9 of the laminate according to the first aspect correspond to Examples 9 to 12 of the laminate according to the second aspect.

### [Example 13]

A biaxially stretched PET film with one corona-treated surface and with a thickness of 12 µm (FE2001A manufactured by Futamura Chemical Co., Ltd.) was prepared (a film 1 and a film 2 in Example 13). A low-density polyethylene film with one corona-treated surface and with a thickness of 60 µm (L-535 manufactured by Aicello Corporation) was prepared. A two-component curing urethane adhesive agent (RU-77T/H-7 manufactured by Rock Paint Co., Ltd.) was applied to the corona-treated surface of the film 1 at a dry thickness of 3 µm, and the film 1 and the film 2 were laminated such that the corona-treated surface of the film 2 was in contact with the coated surface of the film 1, thereby producing an intermediate laminate. The intermediate laminate and the low-density polyethylene film were sandwich-laminated via an extruded resin layer (EC-PE) with a thickness of 20 µm formed by melt-extruding a low-density polyethylene (LC600A manufactured by Japan Polyethylene Corporation) to produce a laminate. The extruded resin layer and the low-density polyethylene film were stacked on the surface of the film 2 not treated with corona in the intermediate laminate.

### [Example 14]

A polymethylpentene (TPX MX004) and a mixture of 30% by mass of LDPE (B128) and 70% by mass of LLDPE (UZ2021L) were coextruded by the inflation method to form a film. In this manner, a laminate with a total thickness of 70 µm including a polymethylpentene layer with a thickness of 15 µm and a polyethylene blend layer with a thickness of 55 µm was produced.

### [Example 15]

A polymethylpentene (TPX MX004), LLDPE (KF260T), and a mixture of 30% by mass of LDPE (B128) and 70% by mass of LLDPE (UZ2021L) were coextruded by the inflation method to form a film. In this manner, a laminate with a total thickness of 75 µm including a polymethylpentene layer with a thickness of 20 µm, a LLDPE layer with a thickness of 15 µm, and a polyethylene blend layer with a thickness of 40 µm was produced.

### [Example 16]

A laminate was produced in the same manner as in Example 14 except that the polymethylpentene (TPX MX004) was changed to another polymethylpentene (TPX MX002).

### [Example 17]

A laminate was produced in the same manner as in Example 15 except that the polymethylpentene (TPX MX004) was changed to another polymethylpentene (TPX MX002).

### [Comparative Example 1]

A biaxially stretched PET film with one corona-treated surface and with a thickness of 12 µm (FE2001A manufactured by Futamura Chemical Co., Ltd.) was prepared (a film 3 and a film 4 in Comparative Example 1). A low-density polyethylene film with one corona-treated surface and with a thickness of 60 µm (L-535 manufactured by Aicello Corporation) was prepared. A two-component curing urethane adhesive agent (RU-77T/H-7 manufactured by Rock Paint Co., Ltd.) was applied to the corona-treated surface of the film 3 at a dry thickness of 3 µm, and the film 3 and the low-density polyethylene film were bonded together such that the corona-treated surface of the low-density polyethylene film was in contact with the coated surface of the film 3, thereby producing an intermediate laminate. A urethane anchor coating agent (A-3210/A-3075 manufactured by Mitsui Chemicals, Inc.) was applied to the corona-treated surface of the film 4 at a dry thickness of 0.3 µm, and the intermediate laminate and the film 4 were sandwich-laminated via an extruded resin layer (EC-PE) with a thickness of 20 µm formed by melt-extruding a low-density polyethylene (LC600A manufactured by Japan Polyethylene Corporation) such that the film 3 surface of the intermediate laminate and the anchor-coated surface of the film 4 faced each other, thereby producing a laminate.

Tables 2-1 to 2-3 show examples and comparative examples of the laminate according to the second aspect.

### [Laminate according to Third Aspect]

### [Example 21]

bPA (Amilan CM2001L), LLDPE (SP0511), and a mixture of 70% by mass of LDPE (B128) and 30% by mass of LLDPE (UZ3500ZA) were coextruded by the inflation method to form a film. In this manner, a laminate with a total thickness of 70 µm including a PA layer with a thickness of 15 µm, a LLDPE layer with a thickness of 15 µm, and a polyethylene blend layer with a thickness of 40 µm was produced.

The notation "% by mass" in a mixture refers to each component content of the mixture.

### [Example 22]

A mixture of 80% by mass of HDPE (HZ5000SF) and 20% by mass of an acid-modified polyethylene (BYNEL 40E 1053), bPA (Amilan CM2001L), LLDPE (SP0511), and a mixture of 30% by mass of LDPE (B128) and 70% by mass of LLDPE (UZ2021L) were coextruded by the inflation method to form a film. In this manner, a laminate with a total thickness of 75 µm including a HDPE blend layer with a thickness of 15 µm, a PA layer with a thickness of 5 µm, a LLDPE layer with a thickness of 15 µm, and a polyethylene blend layer with a thickness of 40 µm was produced.

### [Example 23]

A mixture of 80% by mass of bHDPE (SGF4950) and 20% by mass of an acid-modified polyethylene (BYNEL 40E 1053), bPA (Amilan CM2001L), LLDPE (SP0511), LLDPE (UZ3520L), and a mixture of 30% by mass of LDPE (B128) and 70% by mass of LLDPE (UZ2021L) were coextruded by the inflation method to form a film. In this manner, a laminate with a total thickness of 75 µm including a HDPE blend layer with a thickness of 15 µm, a PA layer with a thickness of 5 µm, a LLDPE layer with a thickness of 15 µm, a LLDPE layer with a thickness of 20 µm, and a polyethylene blend layer with a thickness of 20 µm was produced.

### [Example 24]

A laminate with a total thickness of 75 µm was produced in the same manner as in Example 23 except that the bPA (Amilan CM2001L) was changed to another bPA (RILSAN BESN P20 TL).

### [Example 25]

A laminate with a total thickness of 75 µm was produced in the same manner as in Example 23 except that the bPA (Amilan CM2001L) was changed to another bPA (VESTAMIDTerra DS22).

### [Reference Example 21]

A laminate with a total thickness of 70 µm was produced in the same manner as in Example 21 except that the bPA (Amilan CM2001L) was changed to PA (5033B).

### [Reference Example 22]

A laminate with a total thickness of 75 µm was produced in the same manner as in Example 23 except that the bHDPE (SGF4950) was changed to HDPE (HZ5000SF), and the bPA (Amilan CM2001L) was changed to PA (5033B).

Table 3 shows examples and reference examples of the laminate according to the third aspect.

### [Production of Packaging Bag]

Using the laminates produced in the examples, reference examples, and comparative examples of the first to third aspects and a high-speed three-sided sealing automatic bag-making machine (BH-60D manufactured by Totani Corporation), heat sealing was performed under the conditions of a temperature of 160°C, a pressure bonding time of 0.8 seconds, and a pressure of 3 kgf/cm² to prepare a three-sided pouch.

### [Evaluation of Physical Properties]

Methods for evaluating physical properties of laminates and films are described below.

Unless otherwise specified, the physical properties are measured at a temperature of 23°C and a humidity of 50% RH. Each physical property was measured using three test specimens, and the arithmetic mean of the three measurements was described as the physical property value.

In the following description, a film corresponding to the separation layer produced by separating a first resin layer (separation layer) from a second resin layer (sealant layer) in a laminate is referred to as a separable film, and a film corresponding to the sealant layer is referred to as a sealant film.

### <Separation strength>

A laminate was cut to prepare a test specimen with a width of 15 mm and a length of 100 mm. The separation strength (N/15 mm width) between the separation layer and the sealant layer in the laminate was measured using the test specimen and a table-top tensile compression tester MCT-1150 (manufactured by AND) as a measuring instrument under the conditions of an initial grip distance of 100 mm, a separation angle of 180 degrees, and a test speed of 50 mm/min.

### <Appearance (Interlayer Lifting)>

In each step of the production of a laminate, lifting between a separation layer and a sealant layer (a portion with an area of 1 cm² or more that turned white due to the presence of an air bubble) was visually inspected. A laminate with lifting was rated "BB", and a laminate with no lifting was rated "AA".

### <Monomaterial Ratio>

The highest resin material content (monomaterial ratio, % by mass) was calculated for laminates, separable films, and sealant films.

### <Rigidity (Loop Stiffness)>

A loop stiffness tester (manufactured by Toyo Seiki Seisaku-Sho, Ltd.) was used as a measuring instrument. A laminate, a separable film, or a sealant film was cut to prepare a test specimen with a width of 15 mm and a length of 200 mm. A test specimen with a length direction in the machine direction (MD) of the laminate or the film is denoted by "MD" in the table, and a test specimen with a length direction in the transverse direction (TD) of the laminate or the film is denoted by "TD" in the table. The loop stiffness tester includes a pair of chucks for gripping a pair of end portions of a test specimen in the length direction and a support member for supporting the chucks. Both end portions of the test specimen were then fixed in place using their respective chucks. The distance between the pair of chucks was 60 mm. The pair of chucks was then slid on the support member in a direction in which the distance between the chucks was reduced to bring the chucks into contact with each other via the test specimen. In this manner, a circular loop with a width of 15 mm was formed. In the case of the laminate, the circular loop was formed with the sealant layer facing the inside of the loop. In the case of the separable film, the circular loop was formed with the separation surface facing the outside of the loop. In the case of the sealant film, the circular loop was formed with the separation surface facing the outside of the loop. The circular loop was pushed in the diametrical direction of the loop from the opposite side of the chucks at an indentation speed of 3.3 mm/s, and the measured value was taken as the loop stiffness value (g).

### <Young's Modulus>

A laminate, a separable film, or a sealant film was cut to prepare a test specimen with a width of 15 mm and a length of 120 mm. A test specimen with a length direction in the machine direction (MD) of the laminate or the film is denoted by "MD" in the table, and a test specimen with a length direction in the transverse direction (TD) of the laminate or the film is denoted by "TD" in the table. In accordance with JIS K7161-1: 2014, the table-top tensile compression tester MCT-1150 (manufactured by AND) was used as a measuring instrument, and a test specimen was pulled in the machine direction or the transverse direction at a test speed of 5 mm/s to measure the Young's modulus (tensile modulus) (MPa).

### <Puncture Strength>

The puncture strength of each of the laminates, the separable films, and the sealant films was measured in accordance with JIS Z1707: 2019. A laminate, a separable film, or a sealant film was cut to prepare a test specimen with a width of 5 cm and a length of 5 cm. The table-top tensile compression tester MCT-1150 (manufactured by AND) was used as a measuring instrument. A semicircular needle with a diameter of 1.0 mm and a tip shape radius of 0.5 mm was stuck into the test specimen at a test speed of 50 mm/min to measure the maximum strength (N) until the needle penetrated the test specimen. In the case of the laminates, the needle was stuck into the sealant layer surface and the separation layer surface to measure the puncture strength (N). In the case of the separable films, the needle was stuck into the surface opposite the separation surface to measure the puncture strength (N). In the case of the sealant films, the needle was stuck into the separation surface to measure the puncture strength (N).

### <Seal Strength>

A laminate was cut to prepare a test specimen with a width of 15 mm and a length of 100 mm. Two test specimens were stacked such that the sealant layers were in contact with each other, and a 15 mm x 15 mm end portion of the test specimens was heat-sealed under the conditions of a temperature of 140°C (one-sided heating), a pressure bonding time of 1 second, and a pressure of 1 kgf/cm² to form a sealed portion, thereby preparing a specimen. In accordance with JIS Z1707: 2019 except that the test conditions were changed as follows, the seal strength (N/15 mm width) was measured using the table-top tensile compression tester MCT-1150 (manufactured by AND) as a measuring instrument under conditions of a grip distance of 100 mm, a separation mode of T-type separation, and a test speed of 300 mm/min. More specifically, the specimen was opened by 180 degrees so that the sealed portion of the specimen was located at the center of the two grips of the tester, both end portions of the specimen were attached to the two grips of the tester, and the specimen was pulled at a speed of 300 mm/min until the sealed portion was broken to determine the maximum strength (N). The maximum strength (N) measured for the specimen with a width of 15 mm was taken as the heat-seal strength (N/15 mm width).

### <Method for Measuring Number of Particles in Liquid>

The number of foreign materials (the number of particles) attached to the surface and the inner surface of a sample bag produced using each of the laminates produced in the examples, reference examples, and comparative examples was measured using a particle counter (KE-40/KS-40AF manufactured by Rion Co., Ltd.) as a measuring apparatus under the condition of a measurement size of 0.2 µm or more. The sample bags and blank bags were prepared in a clean class 1000 environment. The measurements were performed in a clean class 100 environment.

### (Method for Measuring Number of Particles in Liquid: Inner Surface of Bag)

1. After the inside of the measuring apparatus was purged with pure water (25 mL x 4 times), the number of particles in the liquid of a pure water blank was measured.
2. A 30 cm x 30 cm sample bag was prepared using each of the laminates produced in the examples, reference examples, and comparative examples.
3. After the pure water with the known blank value was poured into the sample bag and was spread over the inner surface of the sample bag, the sample bag was allowed to stand for 12 hours or more.
4. After the inside of the measuring apparatus was purged with the pure water (25 mL x 4 times), the number of particles in the liquid was measured for 10 mL of water collected from the sample bag after the above "3.", and the blank value of the pure water was subtracted from the number of particles in the liquid to determine the number of foreign materials (the number of particles) attached to the inner surface of the sample bag.

### (Method for Measuring Number of Particles in Liquid: Surface of Bag)

1. After the inside of the measuring apparatus was purged with pure water (25 mL x 4 times), the number of particles in the liquid of a pure water blank was measured.
2. A blank film was used to prepare a 30 cm x 30 cm blank bag.
3. A 20 cm x 20 cm sample bag was prepared using each of the laminates produced in the examples, reference examples, and comparative examples. After the opening of the sample bag was heat-sealed, two types of bags were prepared: a test bag 1 with the sample bag in the blank bag, and a test bag 2 with only the blank bag.
4. After the pure water with the known blank value was poured into the blank bag (outside the sample bag) of the test bag 1 and was spread over the inner surface of the blank bag and the surface of the sample bag, the test bag 1 was allowed to stand for 12 hours or more. Likewise, after the pure water with the known blank value was poured into the blank bag of the test bag 2 and was spread over the inner surface of the blank bag, the test bag 2 was allowed to stand for 12 hours or more.
5. After the inside of the measuring apparatus was purged with the pure water (25 mL x 4 times), the number of particles in the liquid was measured for 10 mL of water collected from each of the test bag 1 and the test bag 2 after the above "4.". The blank value of the pure water and the number of particles in the liquid of the test bag 2 were subtracted from the number of particles in the liquid of the test bag 1 to calculate the number of foreign materials (the number of particles) attached to the surface of the sample bag.

### (Method for Measuring Number of Particles in Liquid: Surface of Bag after Separation of First Resin Layer)

1. After the inside of the measuring apparatus was purged with pure water (25 mL x 4 times), the number of particles in the liquid of a pure water blank was measured.
2. A blank film was used to prepare a 30 cm x 30 cm blank bag.
3. A 20 cm x 20 cm bag was prepared using each of the laminates produced in the examples, reference examples, and comparative examples. After the opening of the bag was heat-sealed, the first resin layer (separation layer) of the bag was separated to prepare a sample bag in which the surface (separation surface) of the second resin layer was exposed. Two types of test bags were prepared: a test bag 3 with the sample bag in the blank bag and a test bag 4 with only the blank bag.
4. After the pure water with the known blank value was poured into the blank bag (outside the sample bag) of the test bag 3 and was spread over the inner surface of the blank bag and the surface of the sample bag, the test bag 3 was allowed to stand for 12 hours or more. Likewise, after the pure water with the known blank value was poured into the blank bag of the test bag 4 and was spread over the inner surface of the blank bag, the test bag 4 was allowed to stand for 12 hours or more.
5. After the inside of the measuring apparatus was purged with the pure water (25 mL x 4 times), the number of particles in the liquid was measured for 10 mL of water collected from each of the test bag 3 and the test bag 4 after the above "4.". The blank value of the pure water and the number of particles in the liquid of the test bag 4 were subtracted from the number of particles in the liquid of the test bag 3 to calculate the number of foreign materials (the number of particles) attached to the surface of the sample bag (the surface (separation surface) of the second resin layer of the bag).

### [Table 1-1]

**Table 1 -1**

| Layer configuration | | | | Example 1 | Example 2 | Example 3 | Example 3A | Example 4 | Example 5 | Reference example 1 | Reference example 2 | Reference example 3 |
|---|---|---|---|---|---|---|---|---|---|---|---|---|
| First resin layer (separation layer) | | Polyolefin layer | | 5033B | 5033B | UZ3520L 80% | HZ5000SF 80% | E173B | E173B | 5033B | E173B | UZ3520L 80% |
| | | | | | | BYNEL 40E 20% | BYNEL 40E 20% | | | | | BYNEL 40E 20% |
| | | Heteroatom-containing resin layer | | | | 5033B | 5033B | | | | | 5033B |
| Second resin layer (sealant layer) | | Polyethylene layer | | KF260T | KF260T | KF260T | SP0511 | KF260T | KF260T | B128 70% | B128 70% | B128 70% |
| | | Heat-fusible resin layer | | B128 70% | B128 30% | B128 30% | B128 30% | B128 30% | B128 30% | | | |
| | | | | UZ3500ZA 30% | UZ2021L 70% | UZ2021L 70% | UZ2021L 70% | UZ2021L 70% | UZ2021L 70% | UZ3500ZA 30% | UZ3500ZA 30% | UZ3500ZA 30% |
| Thickness of each layer Separation layer and sealant layer from left | | µ^{m} | | 15/15/40 | 20/15/40 | 15/5/15/40 | 15/5/15/40 | 15/15/40 | 20/15/40 | 15/55 | 15/55 | 15/5/55 |
| Total thickness of laminate | | µ^{m} | | 70 | 75 | 75 | 75 | 70 | 75 | 70 | 70 | 75 |
| Physical properties | | | | | | | | | | | | |
| Separation strength | | N/15 mm width | | 0.3 | 0.4 | 0.3 | 0.4 | 0.3 | 0.2 | 0.1 | 0.12 | 0.1 |
| Appearance (interlayer lifting) | | | | AA | AA | AA | AA | AA | AA | BB | BB | BB |
| Loop stiffness | Laminate before separation | g | MD | 2.77 | 2.65 | 2.44 | 3.11 | 2.98 | 4.18 | 3.24 | 3.12 | 1.87 |
| | | | TD | 2.98 | 2.88 | 2.54 | 3.07 | 2.12 | 2.98 | 3.33 | 2.22 | 2.35 |
| | Separable film after separation | | MD | 0.16 | 0.18 | 0.23 | 0.19 | 0.08 | 0.23 | 0.15 | 0.08 | 0.25 |
| | | | TD | 0.15 | 0.17 | 0.15 | 0.16 | 0.07 | 0.23 | 0.16 | 0.10 | 0.13 |
| | Sealant film after separation | | MD | 0.38 | 0.68 | 0.64 | 0.69 | 0.45 | 0.62 | 0.55 | 0.44 | 0.66 |
| | | | TD | 0.35 | 0.71 | 0.68 | 0.72 | 0.35 | 0.38 | 0.45 | 0.35 | 0.71 |
| Young's modulus | Laminate before separation | MPa | MD | 148 | 234 | 192 | 201 | 467 | 485 | 220 | 471 | 199 |
| | | | TD | 130 | 156 | 249 | 198 | 402 | 424 | 255 | 405 | 250 |
| | Separable film after separation | | MD | 316 | 532 | 382 | 406 | 1611 | 1822 | 339 | 1599 | 388 |
| | | | TD | 257 | 504 | 445 | 375 | 1300 | 1500 | 390 | 1255 | 464 |
| | Sealant film after separation | | MD | 105.9 | 135 | 124 | 116 | 93 | 96 | 171 | 101 | 134 |
| | | | TD | 95 | 92 | 138 | 109 | 88 | 84 | 201 | 99 | 138 |
| Puncture strength (N) | | Separation layer surface before separation | | 5.20 | 5.25 | 6.58 | 5.32 | 4.92 | 6.59 | 7.00 | 5.01 | 6.44 |
| | | Sealant layer surface before separation | | 4.31 | 5.49 | 6.34 | 5.14 | 5.60 | 7.82 | 6.12 | 5.45 | 6.24 |
| | | Separable film after separation | | 2.16 | 2.56 | 4.98 | 4.93 | 2.53 | 4.34 | 2.23 | 2.66 | 4.55 |
| | | Sealant film after separation | | 3.17 | 3.60 | 3.25 | 3.36 | 3.42 | 3.97 | 3.30 | 3.52 | 3.30 |
| Seal strength (140°C) | | N/15 mm width | | 20.1 | 21.5 | 22.1 | 21.8 | 21.5 | 20.5 | 20.0 | 21.2 | 22.1 |
| Evaluation of particles in liquid | | Surface | Particles/cm² | 612 | 588 | 599 | 597 | 584 | 600 | 612 | 610 | 605 |
| | | Surface after separation | | 4.7 | 4.2 | 3.5 | 3.9 | 3.8 | 4.2 | 4.8 | 5.0 | 3.8 |
| | | Inner surface | | 3.2 | 2.8 | 3.1 | 2.7 | 3.5 | 4.0 | 4.1 | 3.6 | 3.8 |

### [Table 1-2]

**Table 1 - 2**

| Layer configuration | | | | Example 6 | Example 7 | Example 8 | Example 8A | Example 9 |
|---|---|---|---|---|---|---|---|---|
| First resin layer (separation layer) | | Polyolefin layer | | 5033B | 5033B | UZ3520L 80% | HZ5000SF 80% | E173B |
| | | | | | | BYNEL 40E 20% | BYNEL 40E 20% | |
| | | Heteroatom-containing resin layer | | | | 5033B | 5033B | |
| Second resin layer (sealant layer) | | Polyethylene layer | | KF260T | KF260T | KF260T | SP0511 | KF260T |
| | | Intermediate layer | | UZ3520L | INNATE ST50 | UZ3520L | UZ3520L | UZ3520L |
| | | Heat-fusible resin layer | | B128 30% | B128 30% | B128 30% | B128 30% | B128 30% |
| | | | | UZ2021L 70% | UZ2021L 70% | UZ2021L 70% | UZ2021L 70% | UZ2021L 70% |
| Thickness of each layer Separation layer and sealant layer from left | | µ^{m} | | 15/15/20/25 | 15/15/20/25 | 15/⁵ /20/15/20 | 15/⁵ /20/15/20 | 15/15/20/25 |
| Total thickness of laminate | | µ^{m} | | 75 | 75 | 75 | 75 | 75 |
| Physical properties | | | | | | | | |
| Separation strength | | N/15 mm width | | 0.3 | 0.4 | 0.5 | 0.5 | 0.4 |
| Appearance (interlayer lifting) | | | | AA | AA | AA | AA | AA |
| Loop stiffness | Laminate before separation | g | MD | 3.55 | 3.78 | 3.15 | 3.86 | 3.54 |
| | | | TD | 3.23 | 3.55 | 2.87 | 3.62 | 3.01 |
| | Separable film after separation | | MD | 0.18 | 0.16 | 0.23 | 0.19 | 0.09 |
| | | | TD | 0.17 | 0.17 | 0.15 | 0.15 | 0.07 |
| | Sealantfilm after separation | | MD | 0.75 | 0.79 | 0.77 | 0.76 | 0.72 |
| | | | TD | 0.77 | 0.78 | 0.78 | 0.79 | 0.75 |
| Young's modulus | Laminate before separation | MPa | MD | 354 | 388 | 392 | 408 | 545 |
| | | | TD | 265 | 303 | 315 | 337 | 475 |
| | Separable film after separation | | MD | 458 | 471 | 415 | 431 | 1611 |
| | | | TD | 435 | 444 | 435 | 446 | 1300 |
| | Sealantfilm after separation | | MD | 231 | 254 | 312 | 261 | 243 |
| | | | TD | 154 | 174 | 243 | 238 | 235 |
| Puncture strength (N) | | Separation layer surface before separation | | 5.55 | 5.80 | 7.30 | 6.07 | 5.95 |
| | | Sealant layer surface before separation | | 5.60 | 5.54 | 7.10 | 6.64 | 6.00 |
| | | Separable film after separation | | 2.20 | 2.30 | 5.01 | 4.89 | 2.65 |
| | | Sealant film after separation | | 4.25 | 4.85 | 4.01 | 4.30 | 3.88 |
| Seal strength (140°C) | | N/15 mm width | | 20.5 | 22.2 | 21.5 | 21.2 | 21.6 |
| Evaluation of particles in liquid | | Surface | Particles/cm² | 600 | 599 | 587 | 603 | 575 |
| | | Surface after separation | | 4.8 | 4.3 | 3.8 | 4.3 | 4.0 |
| | | Inner surface | | 3.1 | 3.0 | 3.2 | 3.1 | 3.1 |

### [Table 2-1]

**Table 2 - 1**

| Layer configuration | | | | Example 1 | Example 2 | Example 3 | Example 4 | Example 5 | Example 6 | Example 7 | Example 8 |
|---|---|---|---|---|---|---|---|---|---|---|---|
| First resin layer (separation layer) | | Polyolefin layer | | 5033B | 5033B | UZ3520L 80% | E173B | E173B | 5033B | E173B | UZ3520L 80% |
| | | | | | | BYNEL 40E 20% | | | | | BYNEL 40E 20% |
| | | Heteroatom-containing resin layer | | | | 5033B | | | | | 5033B |
| Second resin layer (sealant layer) | | Polyethylene layer | | KF260T | KF260T | KF260T | KF260T | KF260T | B128 70% | B128 70% | B128 70% |
| | | Heat-fusible resin layer | | B128 70% | B128 30% | B128 30% | B128 30% | B128 30% | | | |
| | | | | UZ3500ZA 30% | UZ2021L 70% | UZ2021L 70% | UZ2021L 70% | UZ2021L 70% | UZ3500ZA 30% | UZ3500ZA 30% | UZ3500ZA 30% |
| Thickness of each layer Separation layer and sealant layer from left | | µ^{m} | | 15/15/40 | 20/15/40 | 15/5/15/40 | 15/15/40 | 20/15/40 | 15/55 | 15/55 | 15/5/55 |
| Total thickness of laminate | | µ^{m} | | 70 | 75 | 75 | 70 | 75 | 70 | 70 | 75 |
| Physical properties | | | | | | | | | | | |
| Separation strength | | N/15 mm width | | 0.3 | 0.4 | 0.3 | 0.3 | 0.2 | 0.1 | 0.12 | 0.1 |
| Monomaterial ratio (mass%) | Laminate before separation | | | 78 | 73 | 73 | 78 | 73 | 78 | 78 | 73 |
| | Separable film after separation | | | 100 | 100 | 75 | 100 | 100 | 100 | 100 | 75 |
| | Sealant film after separation | | | 100 | 100 | 100 | 100 | 100 | 100 | 100 | 100 |
| Loop stiffness | Laminate before separation | g | MD | 2.77 | 2.65 | 2.44 | 2.98 | 4.18 | 3.24 | 3.12 | 1.87 |
| | | | TD | 2.98 | 2.88 | 2.54 | 2.12 | 2.98 | 3.33 | 2.22 | 2.35 |
| | Separable film after separation | | MD | 0.16 | 0.18 | 0.23 | 0.08 | 0.23 | 0.15 | 0.08 | 0.25 |
| | | | TD | 0.15 | 0.17 | 0.15 | 0.07 | 0.23 | 0.16 | 0.10 | 0.13 |
| | Sealant film after separation | | MD | 0.38 | 0.68 | 0.64 | 0.45 | 0.62 | 0.55 | 0.44 | 0.66 |
| | | | TD | 0.35 | 0.71 | 0.68 | 0.35 | 0.38 | 0.45 | 0.35 | 0.71 |
| Puncture strength (N) | | Separation layer surface before separation | | 5.20 | 5.25 | 6.58 | 4.92 | 6.59 | 7.00 | 5.01 | 6.44 |
| | | Sealant layer surface before separation | | 4.31 | 5.49 | 6.34 | 5.60 | 7.82 | 6.12 | 5.45 | 6.24 |
| | | Separable film after separation | | 2.16 | 2.56 | 4.98 | 2.53 | 4.34 | 2.23 | 2.66 | 4.55 |
| | | Sealant film after separation | | 3.17 | 3.60 | 3.25 | 3.42 | 3.97 | 3.30 | 3.52 | 3.30 |
| Seal strength (140°C) | | N/15 mm width | | 20.1 | 21.5 | 22.1 | 21.5 | 20.5 | 20.0 | 21.2 | 22.1 |
| Evaluation of particles in liquid | | Surface | Particles/cm² | 587 | 575 | 642 | 566 | 612 | 611 | 609 | 604 |
| | | Surface after separation | | 4.5 | 4.1 | 3.8 | 3.9 | 4.0 | 4.1 | 4.9 | 3.9 |
| | | Inner surface | | 3.0 | 3.1 | 2.9 | 2.6 | 3.6 | 2.8 | 3.8 | 4.0 |

### [Table 2-2]

**Table 2 - 2**

| Layer configuration | | | | Example 9 | Example 10 | Example 11 | Example 12 | Example 13 | Comparative example 1 |
|---|---|---|---|---|---|---|---|---|---|
| First resin layer (separation layer) | | Polyolefin layer | | 5033B | 5033B | UZ3520L 80% | E173B | PET film(FE2001A) | PET film(FE2001A) |
| | | | | | | BYNEL 40E 20% | | Adhesive agent (RU-77T/H-7) | Anchor coating agent |
| | | Heteroatom-containing resin layer | | | | 5033B | | PET film(FE2001A) | EC-PE |
| Second resin layer (sealant layer) | | Polyethylene layer | | KF260T | KF260T | KF260T | KF260T | EC-PE | PET film(FE2001A) |
| | | Intermediate layer | | UZ3520L | INNATE ST50 | UZ3520L | UZ3520L | Low-density PE film (L-535) | Adhesive agent (RU-77T/H-7) |
| | | Heat-fusible resin layer | | B128 30% | B128 30% | B128 30% | B128 30% | | Low-density PE film (L-535) |
| | | | | UZ2021L 70% | UZ2021L 70% | UZ2021L 70% | UZ2021L 70% | | |
| Thickness of each layer Separation layer and sealant layer from left | | µ^{m} | | 15/15/20/25 | 15/15/20/25 | 15/⁵ /20/15/20 | 15/15/20/25 | 12/3/12/20/60 | 12/0.3/20/12/3/60 |
| Total thickness of laminate | | µ^{m} | | 75 | 75 | 75 | 75 | 107 | 107 |
| Physical properties | | | | | | | | | |
| Separation strength | | N/15 mm width | | 0.3 | 0.4 | 0.5 | 0.4 | 0.4 | 0.2 |
| Monomaterial ratio (mass%) | Laminate before separation | | | 80 | 80 | 73 | 80 | 88 | 72 |
| | Separable film after separation | | | 100 | 100 | 75 | 100 | 100 | 62 |
| | Sealant film after separation | | | 100 | 100 | 100 | 100 | 100 | 80 |
| Loop stiffness | Laminate before separation | g | MD | 3.55 | 3.78 | 3.15 | 3.54 | 17.96 | 18.50 |
| | | | TD | 3.23 | 3.55 | 2.87 | 3.01 | 22.21 | 21.50 |
| | Separable film after separation | | MD | 0.18 | 0.16 | 0.23 | 0.09 | 0.90 | 1.05 |
| | | | TD | 0.17 | 0.17 | 0.15 | 0.07 | 0.66 | 0.95 |
| | Sealant film after separation | | MD | 0.75 | 0.79 | 0.77 | 0.72 | 3.74 | 3.51 |
| | | | TD | 0.77 | 0.78 | 0.78 | 0.75 | 4.41 | 4.14 |
| Puncture strength (N) | | Separation layer surface before separation | | 5.55 | 5.80 | 7.30 | 5.95 | 19.01 | 18.50 |
| | | Sealant layer surface before separation | | 5.60 | 5.54 | 7.10 | 6.00 | 20.81 | 21.50 |
| | | Separable film after separation | | 2.20 | 2.30 | 5.01 | 2.65 | 13.65 | 8.50 |
| | | Sealant film after separation | | 4.25 | 4.85 | 4.01 | 3.88 | 6.01 | 10.50 |
| Seal strength (140°C) | | N/15 mm width | | 20.5 | 22.2 | 21.5 | 21.6 | 34.5 | 37.5 |
| Evaluation of particles in liquid | | Surface | Particles/cm² | 612 | 611 | 588 | 566 | 598 | 584 |
| | | Surface after separation | | 4.5 | 4.7 | 3.9 | 4.1 | 4.2 | 3.5 |
| | | Inner surface | | 3.0 | 2.6 | 2.8 | 2.5 | 2.8 | 2.6 |

### [Table 2-3]

**Table 2 - 3**

| Layer configuration | | | | Example 14 | Example 15 | Example 16 | Example 17 |
|---|---|---|---|---|---|---|---|
| First resin layer (separation layer) | | Polyolefin layer | | MX004 | MX004 | MX002 | MX002 |
| Second resin layer (sealant layer) | | Polyethylene layer | | B128 30% | KF260T | B128 30% | KF260T |
| | | Heat-fusible resin layer | | | B128 30% | | B128 30% |
| | | | | UZ2021L 70% | UZ2021L 70% | UZ2021L 70% | UZ2021L 70% |
| Thickness of each layer Separation layer and sealant layer from left | | µ^{m} | | 15/55 | 20/15/40 | 15/55 | 20/15/40 |
| Total thickness of laminate | | µ^{m} | | 70 | 75 | 70 | 75 |
| Physical properties | | | | | | | |
| Separation strength | | N/15 mm width | | 0.6 | 0.5 | 0.6 | 0.5 |
| Monomaterial ratio (mass%) | Laminate before separation | | | 78 | 73 | 78 | 73 |
| | Separable film after separation | | | 100 | 100 | 100 | 100 |
| | Sealant film after separation | | | 100 | 100 | 100 | 100 |
| Seal strength (140°C) | | N/15 mm width | | 25.5 | 22.4 | 21.5 | 23.5 |
| Evaluation of particles in liquid | | Surface | Particles/cm² | 605 | 584 | 574 | 534 |
| | | Surface after separation | | 5.6 | 4.5 | 4.7 | 4.8 |
| | | Inner surface | | 3.2 | 2.9 | 3.3 | 3.8 |

### [Table. 3]

**Table 3**

| Layer configuration | | Example 21 | Example 22 | Example 23 | Example 24 | Example 25 | Reference example 21 | Reference example 22 |
|---|---|---|---|---|---|---|---|---|
| First resin layer (separation layer) | Polyolefin layer | | HDPE (HZ5000SF) 80% | bHDPE (SGF4950) 80% mHDPE (BYNEL) 20% | | | | HDPE (HZ5000SF) 80% |
| | | | mHDPE (BYNEL) 20% | | | | | mHDPE (BYNEL) 20% |
| | Heteroatom-containing resin layer | bPA (CM2001L) | bPA (CM2001L) | bPA (CM2001L) | bPA (RILSAN) | bPA (Terra DS22) | PA (5033B) | PA (5033B) |
| Second resin layer (sealant layer) | Polyethylene layer | LLDPE (SP0511) | LLDPE (SP0511) | LLDPE (SP0511) | | | LLDPE (SP0511) | LLDPE (SP0511) |
| | | | | LLDPE (UZ3520L) | | | | LLDPE (UZ3520L) |
| | Heat-fusible resin layer | LDPE (B128) 70% | LDPE (B128) 30% | LDPE (B128) 30% | | | LDPE (B128) 70% | LDPE (B128) 30% |
| | | LLDPE (UZ3500ZA) 30% | LLDPE (UZ2021L) 70% | LLDPE (UZ2021L) 70% | | | LLDPE (UZ3500ZA) 30% | LLDPE (UZ2021L) 70% |
| Thickness of each layer Separation layer and sealant layer from left | µ^{m} | 15/15/40 | 15/5/15/40 | 15/5 /15/20/20 | | | 15/15/40 | 15/5/15/20/20 |
| Total thickness of laminate | µ^{m} | 70 | 75 | 75 | | | 70 | 75 |
| Biomass content of first resin layer | | 60% | 15% | 72% | 75% | 83% | 0% | 0% |
| Biomass content of laminate | | 13% | 4% | 19% | 20% | 22% | 0% | 0% |
| Monomaterial ratio (mass%) | Laminate before separation | 79% | 93% | 93% | 93% | 93% | 79% | 93% |
| | Separable film after separation | 100% | 75% | 75% | 75% | 75% | 100% | 75% |
| | Sealant film after separation | 100% | 100% | 100% | 100% | 100% | 100% | 100% |
| Physical properties | | | | | | | | |
| Separation strength | N/15 mm width | 0.15 | 0.14 | 0.15 | 0.2 | 0.2 | 0.3 | 0.5 |
| Appearance (interlayer lifting) | | AA | AA | AA | AA | AA | AA | AA |
| Puncture strength (N) | Separation layer surface before separation | 5.20 | 6.77 | 7.00 | 6.88 | 6.88 | 5.20 | 7.30 |
| | Sealant layer surface before separation | 4.31 | 6.41 | 6.90 | 6.45 | 6.45 | 4.31 | 7.10 |
| | Separable film after separation | 2.16 | 4.50 | 4.88 | 4.34 | 4.34 | 2.16 | 5.01 |
| | Sealant film after separation | 3.17 | 3.12 | 3.80 | 3.80 | 3.80 | 3.17 | 4.01 |
| Seal strength (140°C) | N/15 mm width | 20.1 | 19.8 | 18.4 | 19.4 | 19.4 | 20.1 | 21.5 |

### [Packaging Bag according to First Aspect]

### [Example 31]

A mixture of 80% by mass of HDPE (HZ5000SF) and 20% by mass of mHDPE (BYNEL 40E 1053), PA (5033B), LLDPE (SP0511), LLDPE (UZ3520L), and a mixture of 80% by mass of LLDPE (UZ2021L) and 20% by mass of LDPE (B128) were extruded from an extruder through a multilayer ring die into a tube using a 5-layer coextrusion inflation apparatus, and the tube was inflated with air pressure to form a tubular film while being taken up in the vertical direction. The tubular film included a HDPE layer with a thickness of 15 µm constituting the tube outer surface, a PA layer with a thickness of 5 µm, a LLDPE layer with a thickness of 15 µm, a LLDPE layer with a thickness of 20 µm, and a polyethylene blend layer with a thickness of 25 µm constituting the tube inner surface, and had a total thickness of 80 µm. The inner surface of the tubular film was folded onto itself and pressed using a pinch roll to flatten the tubular film.

The notation "% by mass" in a mixture refers to each component content of the mixture.

The flattened film was heat-sealed at a temperature of 140°C, for a pressure bonding time of 0.8 seconds, and at a pressure of 3 kgf/cm² using the high-speed three-sided sealing automatic bag-making machine (BH-60D manufactured by Totani Corporation) and was subjected to a predetermined cutting process to prepare a three-sided sealed bag. Such a bag-making method is referred to as a "method A".

The separation layer as the first resin layer is composed of a HDPE layer with a thickness of 15 µm and a PA layer with a thickness of 5 µm. The sealant layer as the second resin layer is composed of a LLDPE layer with a thickness of 15 µm, a LLDPE layer with a thickness of 20 µm, and a polyethylene blend layer with a thickness of 25 µm.

### [Example 32]

A mixture of 80% by mass of HDPE (HZ5000SF) and 20% by mass of mHDPE (BYNEL 40E 1053), PA (5033B), LLDPE (SP0511), LLDPE (UMERIT125FN), and a mixture of 80% by mass of LLDPE (NF444N) and 20% by mass of LDPE (B128) were extruded from an extruder through a multilayer ring die into a tube using the 5-layer coextrusion 5-layer coextrusion inflation apparatus in the same manner as in Example 31, and the tube was inflated with air pressure to form a tubular film while being taken up in the vertical direction. The tubular film included a HDPE layer with a thickness of 15 µm constituting the tube outer surface, a PA layer with a thickness of 5 µm, a LLDPE layer with a thickness of 15 µm, a LLDPE layer with a thickness of 20 µm, and a polyethylene blend layer with a thickness of 25 µm constituting the tube inner surface, and had a total thickness of 80 µm. The subsequent operations were performed in the same manner as in Example 31 to prepare a three-sided sealed bag.

### [Example 33]

A tubular film with a total thickness of 95 µm including a HDPE layer with a thickness of 30 µm constituting the tube outer surface, a PA layer with a thickness of 5 µm, a LLDPE layer with a thickness of 20 µm, a LLDPE layer with a thickness of 20 µm, and a polyethylene blend layer with a thickness of 20 µm constituting the tube inner surface was produced in the same manner as in Example 31 except that the thickness of each layer was changed. The subsequent operations were performed in the same manner as in Example 31 to prepare a three-sided sealed bag.

### [Example 34]

A tubular film with a total thickness of 95 µm including a HDPE layer with a thickness of 30 µm constituting the tube outer surface, a PA layer with a thickness of 5 µm, a LLDPE layer with a thickness of 20 µm, a LLDPE layer with a thickness of 20 µm, and a polyethylene blend layer with a thickness of 20 µm constituting the tube inner surface was produced in the same manner as in Example 32 except that the thickness of each layer was changed. The subsequent operations were performed in the same manner as in Example 31 to prepare a three-sided sealed bag.

### [Reference Example 31]

A tubular film was produced in the same manner as in Example 31. The inner surface of the tubular film was folded onto itself and pressed using a pinch roll to flatten the tubular film. Both end portions of the flattened film in the width direction were cut off at a predetermined width to divide the film into two films, and the two films were wound up to prepare two rolls of the film. The films unwound from the two rolls were stacked such that the polyethylene blend layers (heat-fusible resin layers) were in contact with each other, were heat-sealed at a temperature of 140°C, for a pressure bonding time of 0.8 seconds, and at a pressure of 3 kgf/cm² using the high-speed three-sided sealing automatic bag-making machine (BH-60D manufactured by Totani Corporation), and were subjected to a predetermined cutting process to prepare a three-sided sealed bag. Such a bag-making method is referred to as a "method B".

### [Reference Examples 32 to 34]

A three-sided sealed bag of Reference Example 32 was produced in the same manner as in Reference Example 31 using the tubular film produced in Example 32. A three-sided sealed bag of Reference Example 33 was produced in the same manner as in Reference Example 31 using the tubular film produced in Example 33. A three-sided sealed bag of Reference Example 34 was produced in the same manner as in Reference Example 31 using the tubular film produced in Example 34.

Table 4 shows examples and reference examples of the packaging bag according to the first aspect.

### [Evaluation of Physical Properties]

Methods for evaluating the physical properties of the three-sided sealed bag, which is the packaging bag according to the first aspect, are described below. Unless otherwise specified, the physical properties are measured at a temperature of 23°C and a humidity of 50% RH. Each physical property was measured using three test specimens, and the arithmetic mean of the three measurements was described as the physical property value.

### <Separation strength>

The three-sided sealed bag was cut to prepare a test specimen with a width of 15 mm and a length of 100 mm. The separation strength (N/15 mm width) between the separation layer and the sealant layer in the test specimen was measured using the test specimen and the table-top tensile compression tester MCT-1150 (manufactured by AND) as a measuring instrument under the conditions of an initial grip distance of 100 mm, a separation angle of 180 degrees, and a test speed of 50 mm/min.

### <Puncture Strength>

The three-sided sealed bag was cut to prepare a test specimen with a width of 5 cm and a length of 5 cm. The puncture strength of the test specimen was measured in accordance with JIS Z1707: 2019. The table-top tensile compression tester MCT-1150 (manufactured by AND) was used as a measuring instrument. A semicircular needle with a diameter of 1.0 mm and a tip shape radius of 0.5 mm was stuck into the sealant layer surface and the separation layer surface of the test specimen at a test speed of 50 mm/min to measure the puncture strength (N), which is the maximum strength until the needle penetrated the test specimen.

### <Seal Strength>

A tubular film was cut to prepare a test specimen with a width of 15 mm and a length of 100 mm. Two test specimens were stacked such that the sealant layers were in contact with each other, and a 15 mm x 15 mm end portion of the test specimens was heat-sealed under the conditions of a temperature of 140°C (one-sided heating), a pressure bonding time of 1 second, and a pressure of 1 kgf/cm² to form a sealed portion, thereby preparing a specimen. In accordance with JIS Z1707: 2019 except that the test conditions were changed as follows, the seal strength (N/15 mm width) was measured using the table-top tensile compression tester MCT-1150 (manufactured by AND) as a measuring instrument under conditions of a grip distance of 100 mm, a separation mode of T-type separation, and a test speed of 300 mm/min. More specifically, the specimen was opened by 180 degrees so that the sealed portion of the specimen was located at the center of the two grips of the tester, both end portions of the specimen were attached to the two grips of the tester, and the specimen was pulled at a speed of 300 mm/min until the sealed portion was broken to determine the maximum strength (N). The maximum strength (N) measured for the specimen with a width of 15 mm was taken as the heat-seal strength (N/15 mm width).

### <Method for Measuring Number of Particles in Liquid>

The number of foreign materials (the number of particles) attached to the inner surface of the three-sided sealed bag and the surface of the second resin layer was measured using the particle counter (KE-40/KS-40AF manufactured by Rion Co., Ltd.) as a measuring apparatus under the condition of a measurement size of 0.2 µm or more. The bag was prepared in a clean class 1000 environment. The measurements were performed in a clean class 100 environment.

### (Method for Measuring Number of Particles in Liquid: Inner Surface of Bag)

1. After the inside of the measuring apparatus was purged with pure water (25 mL x 4 times), the number of particles in the liquid of a pure water blank was measured.
2. A 30 cm x 30 cm three-sided sealed bag was prepared in the same manner as in the examples or reference examples.
3. After the pure water with the known blank value was poured into the three-sided sealed bag and was spread over the inner surface of the three-sided sealed bag, the three-sided sealed bag was allowed to stand for 24 hours.
4. After the inside of the measuring apparatus was purged with the pure water (25 mL x 4 times), the number of particles in the liquid was measured for 10 mL of water collected from the three-sided sealed bag after the above "3.", and the blank value of the pure water was subtracted from the number of particles in the liquid to determine the number of foreign materials (the number of particles) attached to the inner surface of the three-sided sealed bag.

### (Method for Measuring Number of Particles in Liquid: Surface of Bag after Separation of First Resin Layer)

1. After the inside of the measuring apparatus was purged with pure water (25 mL x 4 times), the number of particles in the liquid of a pure water blank was measured.
2. A blank film was used to prepare a 30 cm x 30 cm blank bag.
3. A 20 cm x 20 cm three-sided sealed bag was prepared in the same manner as in the examples or reference examples. After the opening of the three-sided sealed bag was heat-sealed, the first resin layer (separation layer) of the bag was separated to prepare a sample bag in which the surface (separation surface) of the second resin layer was exposed. Two types of test bags were prepared: a test bag 1 with the sample bag in the blank bag and a test bag 2 with only the blank bag.
4. After the pure water with the known blank value was poured into the blank bag (outside the sample bag) of the test bag 1 and was spread over the inner surface of the blank bag and the surface of the sample bag, the test bag 1 was allowed to stand for 24 hours. Likewise, after the pure water with the known blank value was poured into the blank bag of the test bag 2 and was spread over the inner surface of the blank bag, the test bag 2 was allowed to stand for 24 hours.
5. After the inside of the measuring apparatus was purged with the pure water (25 mL x 4 times), the number of particles in the liquid was measured for 10 mL of water collected from each of the test bag 1 and the test bag 2 after the above "4.". The blank value of the pure water and the number of particles in the liquid of the test bag 2 were subtracted from the number of particles in the liquid of the test bag 1 to calculate the number of foreign materials (the number of particles) attached to the surface of the sample bag (the surface (separation surface) of the second resin layer of the three-sided sealed bag).

### [Table. 4]

**Table4**

| Layer configuration | | Example 31 | Reference example 31 | Example 32 | Reference example 32 | Example 33 | Reference example 33 | Example 34 | Reference example 34 |
|---|---|---|---|---|---|---|---|---|---|
| First resin layer (separation layer) | Polyolefin layer | HDPE (HZ5000SF) 80% | | ← | | ← | | ← | |
| | | mHDPE (1053) 20% | | | | | | | |
| | Heteroatom-containing resin layer | PA (5033B) | | ← | | ← | | ← | |
| Second resin layer (sealant layer) | Polyethylene layer | LLDPE (SP0511) | | ← | | ← | | ← | |
| | | LLDPE (UZ3520L) | | LLDPE (UMERIT125FN) | | LLDPE (UZ3520L) | | LLDPE (UMERIT125FN) | |
| | Heat-fusible resin layer | LLDPE (UZ2021L) 80% | | LLDPE (NF444N) 80% | | LLDPE (UZ2021L) 80% | | LLDPE (NF444N) 80% | |
| | | LDPE (B128) 20% | | LDPE (B128) 20% | | LDPE (B128) 20% | | LDPE (B128) 20% | |
| Thickness of each layer (polyolefin layer to heat-fusible resin layer from left) | µm | 15/5/15/20/25 | | 15/5/15/20/25 | | 30/5/20/20/20 | | 30/5/20/20/20 | |
| Total thickness of laminate | µm | 80 | | 80 | | 95 | | 95 | |
| Bag-making method | | Method A | Method B | Method A | Method B | Method A | Method B | Method A | Method B |
| Physical properties | | | | | | | | | |
| Separation strength | N/15 mm width | 0.13 | 0.13 | 0.15 | 0.14 | 0.14 | 0.13 | 0.17 | 0.16 |
| Puncture strength (N) | Separation layer surface before separation | 5.32 | 5.02 | 5.58 | 5.53 | 5.87 | 5.79 | 5.96 | 5.64 |
| | Sealant layer surface before separation | 5.14 | 5.3 | 5.51 | 5.48 | 5.71 | 5.82 | 5.83 | 5.85 |
| Seal strength (140°C) | N/15 mm width | 13.07 | 13.07 | 12.63 | 13.23 | 13.11 | 12.98 | 12.77 | 13.21 |
| Number of particles (inner surface) | Particles/cm² | 4.32 | 148.49 | 2.53 | 161.97 | 4.11 | 170.26 | 3.86 | 182.03 |
| Number of particles (separation surface) | Particles/cm² | 12.3 | 15.6 | 11.8 | 12.9 | 14.4 | 17.1 | 12.1 | 14.8 |

| | | | | | | | | | |
|---|---|---|---|---|---|---|---|---|---|
| "←" indicates that the composition of this layer is identical to the composition on the left. | | | | | | | | | |

### [Packaging Bag according to Second Aspect]

### [Production Example 1]

A mixture of 80% by mass of HDPE (HZ5000SF) and 20% by mass of an acid-modified polyethylene (BYNEL 40E 1053), a polyamide (5033B), LLDPE (KF260T), and a mixture of 30% by mass of LDPE (B128) and 70% by mass of LLDPE (UZ2021L) were coextruded by the inflation method to form a film. In this manner, a laminate with a thickness of 70 µm including a HDPE blend layer with a thickness of 10 µm, a polyamide layer with a thickness of 5 µm, a LLDPE layer with a thickness of 15 µm, and a polyethylene blend layer with a thickness of 40 µm was produced.

The notation "% by mass" in a mixture refers to each component content of the mixture.

### [Production Example 2]

A laminate with a thickness of 65 µm including a HDPE blend layer with a thickness of 5 µm, a polyamide layer with a thickness of 5 µm, a LLDPE layer with a thickness of 15 µm, and a polyethylene blend layer with a thickness of 40 µm was produced in the same manner as in Production Example 1 except that the thickness of the HDPE blend layer was changed to 5 µm.

### [Production Example 3]

A low-density polyethylene (LC522 manufactured by Japan Polyethylene Corporation, MFR: 4.0 g/10 min, density: 0.923 g/cm³) was melt-extruded to a thickness of 30 µm, and one surface thereof was subjected to corona treatment to prepare a LDPE film. A biaxially stretched PET film (E5102 manufactured by Toyobo Co., Ltd.) with one corona-treated surface and with a thickness of 12 µm was prepared. A two-component curing anchor coating agent (A3210/A3075 manufactured by Mitsui Chemicals, Inc., hereinafter also referred to as "AC") was applied to the corona-treated surface of the biaxially stretched PET film to a thickness of 0.3 µm. The coated surface of the biaxially stretched PET film and the corona-treated surface of the LDPE film were bonded together via an extruded resin layer (EC-PE) with a thickness of 15 µm formed by melt-extruding a low-density polyethylene (LC600A manufactured by Japan polyethylene Corporation, MFR: 7.0 g/10 min, density: 0.918 g/cm³). The surface of the biaxially stretched PET film not treated with corona and a polyethylene film with a thickness of 60 µm (NB-1 manufactured by Tamapoly Co., Ltd.) were then bonded together via an extruded resin layer (EC-PE) with a thickness of 15 µm formed by melt-extruding a low-density polyethylene (LC600A). Thus, a laminate was prepared.

### [Production Example 4]

A laminate was produced in the same manner as in Production Example 3 except that the biaxially stretched PET film (E5102) with one corona-treated surface and with a thickness of 12 µm was changed to a biaxially stretched nylon film (ON-RT manufactured by Unitika Ltd.) with one corona-treated surface and with a thickness of 15 µm.

### [Production Example 5]

A laminate with a thickness of 63 µm including a HDPE blend layer with a thickness of 4 µm, a polyamide layer with a thickness of 4 µm, a LLDPE layer with a thickness of 15 µm, and a polyethylene blend layer with a thickness of 40 µm was produced in the same manner as in Production Example 1 except that the thickness of each of the HDPE blend layer and the polyamide layer was changed to 4 µm.

### [Examples and Reference Examples: Production of Packaging Bag]

Using the laminate produced in each of the production examples and the high-speed three-sided sealing automatic bag-making machine (BH-60D manufactured by Totani Corporation), heat sealing was performed under the conditions of a temperature of 160°C, a pressure bonding time of 0.8 seconds, a pressure of 3 kgf/cm², and a seal width shown in Tables 5-1 and 5-2 to produce a three-sided pouch with a size of 170 mm x 120 mm. A half-cut line was formed on the three-sided pouch using a cutting blade at the position and the like described in Tables 5-1 and 5-2. In Tables 5-1 and 5-2, the starting point position of the half-cut line is the distance between the starting point A of the half-cut line and the vertex V. In Table 5-2, the third sealed portion has a triangular shape, has a width corresponding to the length of the side of the third sealed portion in contact with the first sealed portion, and has a height corresponding to the length of the side of the third sealed portion in contact with the second sealed portion.

Tables 5-1 and 5-2 show examples and reference examples of the packaging bag according to the second aspect.

### [Evaluation]

### <Evaluation of Separation>

In the prepared three-sided pouch, the separable portion was separated from the main body portion with the half-cut line as a starting point. The presence or absence of a cut in the separable portion (separable film) at the time of separation, the presence or absence of the separable portion remaining on the main body portion after the separation, and the ease of separation were evaluated.
AA: The separable film can be separated without being cut.
BB: The separable film is easily cut but can be separated.
CC: The separable film is cut and cannot be separated, or the separable portion remains partially on the main body portion.

### <Separation strength>

A laminate was cut to prepare a test specimen with a width of 15 mm and a length of 100 mm. The separation strength (N/15 mm width) between the main body portion and the separable portion in the laminate was measured using the test specimen and the table-top tensile compression tester MCT-1150 (manufactured by AND) as a measuring instrument under the conditions of an initial grip distance of 100 mm, a separation angle of 180 degrees, and a test speed of 50 mm/min. The measurement was performed at a temperature of 23°C and a humidity of 50% RH. The measurement was performed on three test specimens, and the arithmetic mean of the three measurements was described as the separation strength.

### [Table 5-1]

**Table 5 - 1**

| | | Example 41 | Example 42 | Example 43 | Example 44 | Reference example 41 | Example 45 | Reference example 42 |
|---|---|---|---|---|---|---|---|---|
| Laminate | | Production example 1 | Production example 2 | Production example 3 | Production example 4 | Production example 5 | Production example 2 | Production example 2 |
| Layer configuration | Separable portion | HZ5000SF 80% | HZ5000SF 80% | PE film | PE film | HZ5000SF 80% | HZ5000SF 80% | ← |
| | | BYNEL 40E 20% | BYNEL 40E 20% | | | BYNEL 40E 20% | BYNEL 40E 20% | |
| | | 5033B | 5033B | EC-PE | EC-PE | 5033B | 5033B | ← |
| | Main body portion | KF260T | KF260T | PET film | Ny film | KF260T | KF260T | ← |
| | | B128 30% | B128 30% | AC | AC | B128 30% | B128 30% | ← |
| | | | | EC-PE | EC-PE | | | |
| | | UZ2021 70% | UZ2021 70% | LDPE film | LDPE film | UZ2021 70% | UZ2021 70% | |
| Thickness of each layer (µm) | | 10/5/15/40 | 5/5/15/40 | 60/15/12/15/30 | 60/15/15/15/30 | 4/4/15/40 | 5/5/15/40 | ← |
| Seal width of first and second seal portions (mm) | | 6 | 6 | 6 | 6 | 6 | 6 | 6 |
| Starting point position of half-cut line (mm) | | 10 | 10 | 10 | 10 | 10 | 10 | 10 |
| Shortest distance D1 (mm) | | 5 | 5 | 5 | 5 | 5 | 3 | 0 |
| Angle of half-cut line (°) | | 45 | 45 | 45 | 45 | 45 | 45 | 45 |
| Length of half-cut line (mm) | | 7.1 | 7.1 | 7.1 | 7.1 | 7.1 | 9.9 | 14.1 |
| Percent of half-cut line (%) | | 50 | 50 | 50 | 50 | 50 | 70 | 100 |
| Thickness of separable portion (µm) | | 15 | 10 | 75 | 75 | 8 | 10 | 10 |
| Film cut after separation | | AA | AA | AA | AA | CC | BB | CC |
| Separable portion remaining after separation | | Absent | Absent | Absent | Absent | Present | Absent | Present |
| Separation strength (N/15mm) | | 0.3 | 0.1 | 0.5 | 0.4 | 0.3 | 0.2 | 0.3 |

### [Table 5-2]

**Table 5 - 2**

| | | Example 46 | Example 47 | Example 48 | Example 49 |
|---|---|---|---|---|---|
| Laminate | | Production example 1 | Production example 1 | Production example 1 | Production example 1 |
| Layer configuration | Separable portion | HZ5000SF 80% | ← | ← | ← |
| | | BYNEL 40E 20% | | | |
| | | 5033B | ← | ← | ← |
| | Main body portion | KF260T | ← | ← | ← |
| | | B128 30% | ← | ← | ← |
| | | UZ2021 70% | | | |
| Thickness of each layer (µ^{m}) | | 10/5/15/40 | ← | ← | ← |
| Seal width of first and second seal portions (mm) | | 6 | 6 | 6 | 6 |
| Starting point position of half-cut line (mm) | | 20 | 15 | 10 | 8 |
| Shortest distance D1 (mm) | | 5 | 5 | 5 | 5 |
| Angle of half-cut line (°) | | 45 | 45 | 45 | 45 |
| Length of half-cut line (mm) | | 21.2 | 14.1 | 7.1 | 4.2 |
| Percent of half-cut line (%) | | 75 | 67 | 50 | 38 |
| Width of third sealed portion (mm) | | 13 | 8 | 3 | 0 |
| Height of third sealed portion (mm) | | 13 | 8 | 3 | 0 |
| Thickness of separable portion (µm) | | 15 | 15 | 15 | 15 |
| Film cut after separation | | AA | AA | AA | AA |
| Separable portion remaining after separation | | Absent | Absent | Absent | Absent |
| Ease of separation | | Easily separable | Easily separable | Easily separable | Separable |
| Separation strength (N/15mm) | | 0.2 | 0.3 | 0.2 | 0.3 |

### Reference Signs List

- 1: laminate
- 2: tubular film
- 10: first resin layer or separable portion
- 10a: portion of first resin layer or separable portion
- 12: polyolefin layer
- 14: heteroatom-containing resin layer
- 16: adhesive layer
- 20: second resin layer or main body portion
- 22: polyethylene layer with density of 0.909 g/cm³ or less
- 23: intermediate layer
- 24: heat-fusible resin layer
- 25: extruded resin layer
- 40: article
- 50: packaging bag
- 50a: storage portion (storage space)
- 51: upper portion
- 51a: upper sealed portion
- 52: lower portion
- 52a: lower sealed portion
- 53: side portion
- 53a: side sealed portion
- 54: front sheet
- 55: back sheet
- 56: opening
- 60: half-cut line
- 101: first side
- 101S: first sealed portion
- 102: second side
- 102S: second sealed portion
- 103: corner
- 103S: third sealed portion
- 104: half-cut line
- 106: non-half-cut line
- 110: corner portion
- 112S: intersecting portion
- D1: shortest distance between half-cut line and second side
- D101: seal width of first sealed portion
- D102: seal width of second sealed portion
- D103a: length of side of third sealed portion in contact with first sealed portion
- D103b: length of side of third sealed portion in contact with second sealed portion

Those skilled in the art will appreciate that a laminate or the like according to the present disclosure is not limited to these examples, the examples and the description only illustrate the principles of the present disclosure, various modifications and improvements may be made without departing from the gist and scope of the present disclosure, and all the modifications and improvements fall within the scope of the present disclosure as claimed. Furthermore, the scope of protection claimed by the present disclosure includes not only the claims but also equivalents thereof.

## Claims

1. A laminate comprising at least a first resin layer and a second resin layer,
wherein the first resin layer is provided so as to be separable from the second resin layer,
a separation strength between the first resin layer and the second resin layer is 1.0 N/15 mm width or less as measured at a separation angle of 180 degrees and a test speed of 50 mm/min, and
the laminate satisfies the following requirements (1) and/or (2):
(1) the second resin layer is a sealant layer including at least a polyethylene layer with a density of 0.909 g/cm³ or less, and the polyethylene layer in the second resin layer is in contact with the first resin layer, and/or
(2) the second resin layer is a sealant layer containing a polyolefin as a main component and has a polyolefin content of 82% by mass or more based on a mass of the second resin layer.

2. A laminate comprising at least a first resin layer and a second resin layer,
wherein the first resin layer is provided so as to be separable from the second resin layer, the second resin layer is a sealant layer containing a polyolefin as a main component, and
at least one resin layer selected from the first resin layer and the second resin layer contains at least a biomass-derived resin material.

3. The laminate according to claim 1 or 2, wherein the first resin layer includes at least a heteroatom-containing resin layer containing a heteroatom-containing resin as a main component, and the heteroatom-containing resin layer is in contact with the second resin layer.

4. The laminate according to claim 3, wherein the heteroatom-containing resin contains at least one selected from a polyamide, an ethylene-vinyl alcohol copolymer, a polyester, and poly(vinyl alcohol).

5. The laminate according to claim 3 or 4, wherein the first resin layer further includes a polyolefin layer containing a polyolefin as a main component.

6. The laminate according to claim 5, wherein the polyolefin layer further contains a modified polyolefin in addition to the polyolefin.

7. The laminate according to claim 5 or 6, wherein the polyolefin layer contains a polyethylene with a density of 0.925 g/cm³ or more and a modified polyethylene.

8. The laminate according to claim 1 or 2, wherein the first resin layer is a polymethylpentene layer containing polymethylpentene as a main component.

9. The laminate according to any one of claims 1 to 8, wherein a proportion of the same type of resin materials with a highest content in the first resin layer is 70% by mass or more based on a mass of the first resin layer.

10. The laminate according to any one of claims 1 to 9, wherein the second resin layer includes, as one surface layer of the laminate, a heat-fusible resin layer containing a polyolefin as a main component.

11. The laminate according to any one of claims 1 to 10, wherein the second resin layer includes the polyethylene layer with a density of 0.909 g/cm³ or less and, as one surface layer of the laminate, a heat-fusible resin layer containing a polyethylene as a main component, and the polyethylene layer in the second resin layer is in contact with the first resin layer.

12. The laminate according to claim 11, wherein the second resin layer further includes an intermediate layer containing a linear low-density polyethylene as a main component between the polyethylene layer with a density of 0.909 g/cm³ or less and the heat-fusible resin layer.

13. The laminate according to claim 12, wherein the linear low-density polyethylene in the intermediate layer has a density of 0.925 g/cm³ or more or is an ethylene-1-octene copolymer.

14. The laminate according to any one of claims 1 to 13, wherein the laminate is a coextruded multilayer film.

15. The laminate according to any one of claims 1 to 13, wherein the second resin layer includes an extruded resin layer containing a polyethylene as a main component, and as one surface layer of the laminate a heat-fusible resin layer containing a polyethylene as a main component.

16. The laminate according to any one of claims 1 to 15, wherein a film formed of the first resin layer obtained by separating the first resin layer from the second resin layer has a higher Young's modulus than a film formed of the second resin layer after the separation.

17. The laminate according to any one of claims 1 to 16, wherein a film formed of the first resin layer obtained by separating the first resin layer from the second resin layer has a smaller loop stiffness value than a film formed of the second resin layer after the separation.

18. The laminate according to any one of claims 1 to 17, wherein the laminate has a polyolefin resin content of 70% by mass or more based on a mass of the laminate.

19. The laminate according to any one of claims 1 to 18, wherein a biomass content is 3% or more.

20. The laminate according to any one of claims 1 to 19, wherein the first resin layer has a biomass content of 10% or more.

21. A packaging bag comprising the laminate according to any one of claims 1 to 20.

22. The packaging bag according to claim 21, comprising a sealed portion formed by fusing the second resin layers in the laminate.

23. A method for producing a packaging bag, comprising the steps of:
forming, by a coextrusion inflation method, a tubular film including at least a first resin layer constituting a tube outer surface and a second resin layer containing a polyolefin as a main component and constituting a tube inner surface, and deforming the film into a flat shape, and
performing a bag-making process on the tubular film deformed into the flat shape or a film produced by cutting the tubular film and stacking the cut films without releasing contact between the second resin layers in face-to-face contact with each other to produce a packaging bag,
wherein the packaging bag includes a front sheet and a back sheet facing the front sheet, the front sheet and the back sheet each include at least the first resin layer and the second resin layer constituting an inner surface of the packaging bag, the first resin layer in the front sheet and the back sheet is provided so as to be separable from the second resin layer, and the packaging bag has a sealed portion formed by joining a portion of the second resin layer in the front sheet and a portion of the second resin layer in the back sheet.

24. A packaging bag, comprising a front sheet and a back sheet facing the front sheet,
wherein the front sheet and the back sheet each include at least a first resin layer and a second resin layer constituting an inner surface of the packaging bag, and the second resin layer contains a polyolefin as a main component,
the first resin layer in the front sheet and the back sheet is provided so as to be separable from the second resin layer,
the packaging bag has a sealed portion formed by joining a portion of the second resin layer in the front sheet and a portion of the second resin layer in the back sheet, and
(1) the packaging bag is produced by directly making a bag from a film produced by deforming a tubular film produced by a coextrusion inflation method and including at least the first resin layer constituting a tube outer surface and the second resin layer constituting a tube inner surface into a flat shape or from a film produced by cutting the tubular film and stacking the cut films, and/or (2) a number of particles with a particle size of 0.2 µm or more adhering to the inner surface of the packaging bag is 100 particles/cm² or less as measured with a particle counter.

25. A packaging bag comprising a laminate,
wherein the laminate includes, in a thickness direction,
a main body portion including a heat-fusible resin layer and
a separable portion provided so as to be separable from the main body portion,
the separable portion has a thickness of 10 µm or more,
the packaging bag includes
a front sheet formed of the laminate,
a back sheet formed of the laminate,
a sealed portion in which the heat-fusible resin layer of the front sheet and the heat-fusible resin layer of the back sheet are joined together, and
a storage portion for storing a content,
the packaging bag includes, in a plan view, a first side with a point A, a second side with a point B, and a corner portion including a vertex connecting the first side and the second side, and
the packaging bag has a half-cut line extending from the point A on a line connecting the point A on the first side and the point B on the second side, and the half-cut line is provided from the point A to a middle of the line.

26. The packaging bag according to claim 25, wherein the packaging bag has a first sealed portion extending along the first side and a second sealed portion extending along the second side, the first sealed portion and the second sealed portion are superposed with each other in a plan view at the corner portion of the packaging bag, and the half-cut line is provided on the sealed portion at the corner portion.

27. The packaging bag according to claim 26, further comprising a third sealed portion provided at a corner formed by the first sealed portion and the second sealed portion in a plan view.

28. The packaging bag according to claim 27, wherein the half-cut line is provided at least on the third sealed portion.

29. The packaging bag according to claim 27 or 28, wherein the third sealed portion has a triangular shape.

30. The packaging bag according to any one of claims 25 to 29, wherein a shortest distance D1 between the half-cut line and the second side is 2.0 mm or more.

31. The packaging bag according to any one of claims 27 to 29, wherein a side of the third sealed portion in contact with the first sealed portion and a side of the third sealed portion in contact with the second sealed portion each independently have a length of 2 mm or more and 40 mm or less.
